(19) Europäisches Patentamt
European Patent Office
Office européen des brevets

(11) EP 3 926 376 A1

(12) EUROPEAN PATENT APPLICATION

(43) Date of publication:
22.12.2021 Bulletin 2021/51

(51) Int Cl.:
G02B 6/42 (2006.01)     G02B 6/10 (2006.01)

(21) Application number: 21182047.7

(22) Date of filing: 02.03.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 03.03.2011   US 201161448964 P
04.05.2011   US 201161482531 P
25.10.2011   US 201113281287

(62) Document number(s) of the earlier application(s) in
accordance with Art. 76 EPC:
12752493.2 / 2 681 757

(71) Applicant: California Institute of Technology
Pasadena, CA 91125 (US)

(72) Inventors:
• ZHENG, Guoan
Pasadena, 91106 (US)
• YANG, Samuel
San Dimas, 91173 (US)
• LEE, Seung Ah
Pasadena, 91106 (US)
• PANG, Shuo
Pasadena, 91106 (US)
• YANG, Changhuei
Alhambra, 91801 (US)

(74) Representative: Murgitroyd & Company
Murgitroyd House
165-169 Scotland Street
Glasgow G5 8PL (GB)

Remarks:
This application was filed on 28.06.2021 as a
divisional application to the application mentioned
under INID code 62.

(54) E-PETRI DISHES, DEVICES, AND SYSTEMS

(57) An e-Petri dish comprising a transparent layer having a specimen surface and a light detector configured to sample a sequence of sub-pixel shifted projection images of a specimen located on the specimen surface. The sub-pixel shifted projection images associated with light from a plurality of illumination angles provided by an illumination source.

FIG. 11

EP 3 926 376 A1

**Description**

CROSS-REFERENCES TO RELATED APPLICATIONS

This non-provisional application is a continuation-in part application of U.S. Patent Application No. 13/281,287 entitled "Scanning Projective Lensless Microscope System," filed on October 25, 2011, which is a non-provisional application of, and claims priority to, U.S. Provisional Patent Application No. 61/406,916 entitled "Scanning Projective Microscopy System for 2D and 3D Imaging," filed on October 26, 2010, and U.S. Provisional Patent Application No. 61/482,531 entitled "ePetri: An On-Chip Cell Imaging Platform based on Sub-Pixel Perspective Sweeping Microscopy" filed on May 4, 2011. This non-provisional application is also a non-provisional application of, and claims priority to, U.S. Provisional Patent Application No. 61/482,531 entitled "ePetri: An On-Chip Cell Imaging Platform based on Sub-Pixel Perspective Sweeping Microscopy" filed on May 4, 2011 and U.S. Provisional Patent Application No. 61/448,964 entitled "Electronic Petridish with Bright Field and Fluorescence Imaging Capabilities for Cell Culture Monitoring" filed on March 3, 2011. All of those applications are hereby incorporated by reference in their entirety for all purposes.

This non-provisional application is related to the following co-pending and commonly-assigned patent applications, which are hereby incorporated by reference in their entirety for all purposes:

- U.S. Patent Application No. 13/069,651 entitled "Super Resolution Optofluidic Microscopes for 2D and 3D Imaging" filed on March 23, 2011.

The following non-provisional application is being filed on the same day and is hereby incorporated by reference in its entirety for all purposes: U.S. Patent Application No. 13/411,103 entitled "Tall Pixel," filed on March 2, 2012.

BACKGROUND OF THE INVENTION

Embodiments of the present invention generally relate to high resolution, wide field-of-view microscopes and other imaging devices. More specifically, certain embodiments relate to e-Petri dishes (electronic petridishes), e-Petri devices, and e-Petri systems for high resolution, wide field-of-view imaging.

The miniaturization of biomedical imaging tools has the potential to change vastly methods of medical diagnoses and scientific research. More specifically, compact, low-cost microscopes could significantly extend affordable healthcare diagnostics and provide a means for examining and automatically characterizing a large number of cells, as discussed in Psaltis, D., et al., "Developing optofluidic technology through the fusion of microfluidics and optics," Nature, Vol. 442, pp. 381-386 (2006), which is hereby incorporated by reference in its entirety for all purposes. For example, miniaturized imaging systems may provide a useful alternative to large microscopes in biology labs, allowing for parallel imaging of large number of samples. Some examples of compact microscopes can be found in Cui, X., et al., "Lensless high-resolution on-chip optofluidic microscopes for Caenorhabditis elegans and cell imaging," Proceedings of the National Academy of Sciences, 105(31), p. 10670 (2008), Seo, S., et al., "Lensfree holographic imaging for on-chip cytometry and diagnostics," Lab on a Chip, 2009. 9(6), pp. 777-787, Breslauer, D., et al., "Mobile phone based clinical microscopy for global health applications,"(2009), Zheng, G., et al., "Sub-pixel resolving optofluidic microscope for on-chip cell imaging," Lab on a Chip, 2010. 10(22), pp. 3125-3129, which are hereby incorporated by reference in their entirety for all purposes. Conventional optical microscopes have bulky optics, and have proven to be expensive and difficult to miniaturize.

Rapid advances and commercialization efforts in complementary metal oxide semiconductor (CMOS) imaging sensor technology has led to broad availability of cheap, high-pixel-density imaging sensor chips. In the past few years, these imaging sensor chips enabled the development of new microscopy implementations that are significantly more compact and less expensive than conventional microscopy designs with bulky optics. The optofluidic microscope and the digital in-line holographic microscope are two examples of these new developments. Some examples of optofluidic microscope technologies can be found in Heng, X., et al., "Optofluidic microscopy-method for implementing a high resolution optical microscope on a chip," Lab Chip, Vol. 6, pp. 1274-1276, Cui, Xiquan, et al., "Lensless high-resolution on-chip optofluidic microscopes for Caenorhabditis elegans and cell imaging," Proceedings of the National Academy of Science, Vol. 105, p. 10670 (2008), and Zheng, G., Lee, SA., Yang, S., Yang, C., "Sub-pixel resolving optofluidic microscope for on-chip cell imaging. Lab Chip," Lab Chip, Vol. 10, pp. 3125-3129 (2010) *("Zheng"),* which are hereby incorporated by reference in their entirety for all purposes. Some examples of digital in-line holographic microscopy can be found in Repetto, L., Piano, E., Pontiggia, C., "Lensless digital holographic microscope with light-emitting diode illumination," Opt. Lett., Vol. 29, pp. 1132-1134 (2004), *("Repetto"),* Mudanyali, O., et al., "Compact, light-weight and cost-effective microscope based on lensless incoherent holography for telemedicine applications," Lab on a Chip, Vol. 10, pp. 1417-1428 (2010) *("Mudanyali"),* Xu, W., Jericho, M., Meinertzhagen, I., Kreuzer, H., "Digital in-line holography for biological applications," Proc Natl Acad Sci USA, Vol. 98, pp. 11301-11305 (2001) ("*Xu*"), Garcia-Sucerquia, J., et al., "Digital in-line holographic microscopy," Appl. Opt., Vol. 45, pp. 836-850 (2006) ("*Garcia-Sucerquia*"), Malek M., Allano, D., Coëtmellec, S., Lebrun, D., "Digital in-line holography: Influence of the shadow density on particle field extraction," Opt. Express, Vol. 12, pp. 2270-2279 (2004) ("*Malek*"), Isikman, S.O., et al., "Lens-free optical tomographic microscope with a large imaging volume on a chip," Proc Natl Acad Sci USA, Vol. 108, pp. 7296-7301 (2011), which are hereby incorporated by reference in their entirety for all purposes.

Both optofluidic and in-line holographic microscopy technologies are designed to operate without lenses and, therefore, circumvent their optical limitations, such as aberrations and chromaticity. Both technologies are suitable for imaging dispersible samples, such as blood, fluid cell cultures, and other suspensions of cells or organisms. However, neither can work well with confluent cell cultures or any sample in which cells are contiguously connected over a sizable length scale.

In the case of an optofluidic microscope device, imaging requires fluidic (e.g., microfluidic) flow of specimens across a scanning area. Adherent, confluent, or contiguously arranged specimens are usually incompatible with imaging in a fluidic mode. In addition, the field of view may be limited by the geometry of the fluid channel.

In digital in-line holographic microscopy, the interference intensity distribution of a target under controlled light illumination is measured and then an image reconstruction algorithm is applied to render microscopy images of the target. Two examples of algorithms can be found in Liu, G., Scott, P., "Phase retrieval and twin-image elimination for in-line Fresnel holograms," J Opt Soc Am A, Vol. 4, pp. 159-165 (1987) ("*Liu*"), Fienup, JR., "Reconstruction of an object from the modulus of its Fourier transform," Opt Lett, Vol. 3, pp. 27-29 (1978) ("*Fienup*"), Koren, G., Polack, F., Joyeux, D., "Iterative algorithms for twin-image elimination in in-line holography using finite-support constraints, J Opt Soc Am A, Vol. 10, pp. 423-433 (1993), which are hereby incorporated by reference in their entirety for all purposes. The image quality depends critically on the extent of the target, the scattering property and the signal-to-noise ratio (SNR) of the measurement processes, which are described in *Mudanyali,* and *Garcia-Sucerquia, Malek, Fienup,* and also in Lai, S., King, B., Neifeld, MA, "Wave front reconstruction by means of phase-shifting digital in-line holography," Opt Commun., Vol. 173, pp. 155-160 (2000) ("*Lai*"), and Rodenburg, J., Hurst, A., Cullis, A., "Transmission microscopy without lenses for objects of unlimited size," Ultramicroscopy, Vol. 107, pp. 227-231 (2007) ("*Rodenburg*"), which are hereby incorporated by reference in their entirety for all purposes. The method works well for well-isolated targets, such as diluted blood smear slides. However, such approaches appear to have not been applied to targets that occupy more than 0.1 mm2 in total contiguous area coverage with submicron resolution, as found in *Repetto, Madanyali, Xu, Garcia-Sucerquia,* and also in Biener, G., et al., "Combined reflection and transmission microscope for telemedicine applications in field settings," Lab Chip, Vol. 11, pp. 2738-2743 (2011), which is hereby incorporated by reference in its entirety for all purposes.

The reason for this limitation is well-known: the loss of phase information during the intensity recording process. In order to recover the phase information, object support has to be used in the iterative phase recovery algorithm, which involves the light field propagation back and forth between the imaging domain (where the intensity data are applied) and object domain (where a priori object constrains are applied), as discussed in *Liu*. When the test object is real or nonnegative, it is easy to apply the powerful nonnegativity support constraint to extract the phase information from the recorded diffraction intensity, as discussed in *Liu*. However, for digital in-line holography, light field in the object domain is complex valued and, therefore, the phase recovery is possible only if the support of the object is sufficiently isolated (i.e., sparsity constrains) or the edges are sharply defined (true boundary), as discussed in *Rodenburg* and *Fienup* and also in Denis, L., Lorenz, D., Thiébaut, E., Fournier, C., Trede, D., "Inline hologram reconstruction with sparsity constraints," Opt Lett, Vol. 34, pp. 3475-3477 (2009), Zhang, F., Pedrini, G., Osten, W., "Phase retrieval of arbitrary complex-valued fields through aperture-plane modulation," Phys Rev A, Vol. 75, p. 043805 (2007), which are hereby incorporated by reference in their entirety for all purposes. Furthermore, the interference nature of the technique implies that coherence-based noise sources, such as speckles and cross-interference, would be present and would need to be addressed, as discussed in *Garcia-Sucerquia* and *Malek,* and also in Xu, L., Miao, J., Asundi, A., "Properties of digital holography based on in-line configuration," Opt Eng, Vol. 39, pp. 3214-3219 (2000), which is hereby incorporated by reference in its entirety for all purposes. Methods for mitigating problems in digital in-line holographic microscopy have been reported in *Lai, Rodenburg* and Micó, V., Garcia, J., Zalevsky, Z., Javidi, B., "Phase-Shifting Gabor Holographic Microscopy," J Disp Technol, Vol. 6, pp. 484-489 (2010), which is hereby incorporated by reference in its entirety for all purposes. The generated images based on these mitigating methods have artifacts that may arise from interference, and are identifiably different and of lower quality than images acquired with conventional microscopes due to coherence based noise sources.

Embodiments of the invention are directed to systems that are improvements over conventional optofluidic and in-line holographic systems that use bulky optics.

BRIEF SUMMARY OF THE INVENTION

Embodiments of the present invention relate to e-Petri dishes, e-Petri devices, and e-Petri systems for high resolution, wide field-of-view imaging. The e-Petri dish includes a specimen surface and well for receiving and containing a specimen being imaged. The e-Petri dish also includes a light detector such as a CMOS imaging sensor chip with a sensing surface. The e-Petri dish also includes a transparent layer between the sensing surface and the specimen surface. The transparent layer may be part of the light detector. The e-Petri device includes the e-Petri dish and a structure for receiving the e-Petri dish. The e-Petri device also includes an illumination source (e.g., smartphone) for providing illumination from different illumination angles at different times to a specimen located on the specimen surface. The illumination from the different illumination angles generates projections of the specimen on the sensing surface. The light detector captures a sequence of sub-pixel shifted projection images of the specimen at the sensing surface. The e-Petri device also includes a processor as part of the light detector or separate from the light detector. The processor can reconstruct a higher resolution (HR) image from the sequence of sub-pixel shifted, lower resolution (LR) projection images captured by the light detector.

One embodiment is directed to an e-Petri dish comprising a transparent layer having a specimen surface and a light detector configured to sample a sequence of sub-pixel shifted projection images of a specimen located on the specimen surface. The sub-pixel shifted projection images are associated with light from a plurality of illumination angles provided by an illumination source.

Another embodiment is directed to an e-Petri device comprising a transparent layer having a specimen surface, an illumination source configured to provide light from a plurality of illumination angles to a specimen located on the specimen surface, and a light detector configured to sample a sequence of sub-pixel shifted projection images of the specimen. The sequence of sub-pixel shifted projection images corresponds to the plurality of illumination angles.

Another embodiment is directed to an e-Petri system comprising one or more e-Petri devices and a processor. Each e-Petri devices comprises a transparent layer having a specimen surface, an illumination source configured to provide light from a plurality of illumination angles to a specimen located on the specimen surface, and a light detector configured to sample a sequence of sub-pixel shifted projection images of the specimen. The sequence of sub-pixel shifted projection images corresponds to the plurality of illumination angles. The processor is configured to generate a sub-pixel resolution image of the specimen based on the sequence of sub-pixel shifted projection images from at least one of the one or more e-Petri devices.

Another embodiment is directed to a method of automatedly generating a subpixel resolution image of a specimen using an e-Petri system at intervals during an experiment. The method comprises introducing the specimen on a specimen surface of an e-Petri dish. During each interval, the method provides light from a plurality of illumination angles to the specimen. During each interval, the method also uses a light detector to capture a sequence of sub-pixel shifted projection images corresponding to the plurality of illumination angles. During each interval, the method also constructs a sub-pixel resolution image of the specimen based on the sequence of sub-pixel shifted projection images and a motion vector.

These and other embodiments of the invention are described in further detail below.

BRIEF DESCRIPTION OF THE DRAWINGS

FIG. 1 is a schematic diagram of components of an SPLM system, according to embodiments of the invention.

FIG. 2 is a drawing of a perspective view of components and partial components of an SPLM device or an e-Petri device, according to embodiments of the invention.

FIGS. 3(a), 3(b), and 3(c) are drawings of perspective views of components and partial components of an SPLM device or an e-Petri device during an illumination cycle of an imaging run, according to embodiments of the invention.

FIG. 4(a) and FIG. 4(b) are diagrams illustrating a scanning pattern on an illuminating display, according to embodiments of the invention.

FIG. 5(a) is an LR projection image captured by a light detector of an SPLM system or an e-Petri system at a single sampling time, according to embodiments of the invention.

FIG. 5(b) is an HR image reconstructed by the SPLM system or an e-Petri system, according to embodiments of the invention.

FIG. 6(a) is an LR projection image of a portion of a HeLa cell specimen captured by a light detector of an SPLM system or an e-Petri system at a single sampling time, according to embodiments of the invention.

**FIG. 6(b)** is an HR image reconstructed by the SPLM system or an e-Petri system, according to embodiments of the invention.

**FIG. 7(a)** is a large field of view color HR image of a confluent HeLa cell specimen constructed by an SPLM system or an e-Petri system, according to embodiments of the invention.

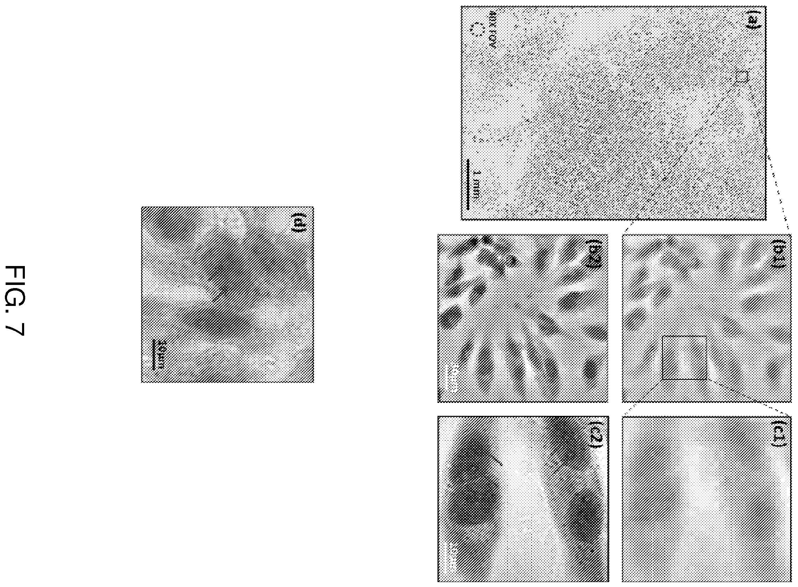

**FIG. 7(b1)** is an LR projection image from a small region of **FIG. 7(a),** captured by the light detector of an SPLM system or an e-Petri system, according to embodiments of the invention.

**FIG. 7(c1)** is an LR projection image from a small region of **FIG. 7(b1),** captured by the light detector of an SPLM system or an e-Petri system, according to embodiments of the invention.

**FIG. 7(b2)** is a reconstructed HR image from the same small region of **FIG.** 7(a) constructed by an SPLM system or an e-Petri system, according to embodiments of the invention.

**FIG. 7(c2)** is a reconstructed HR image from a small region of **FIG. 7(b2)** constructed by an SPLM system or an e-Petri system, according to embodiments of the invention.

**FIG. 7(d)** is a conventional microscopy image of similar cells using a microscope with 40X, NA = 0.66 objective lens.

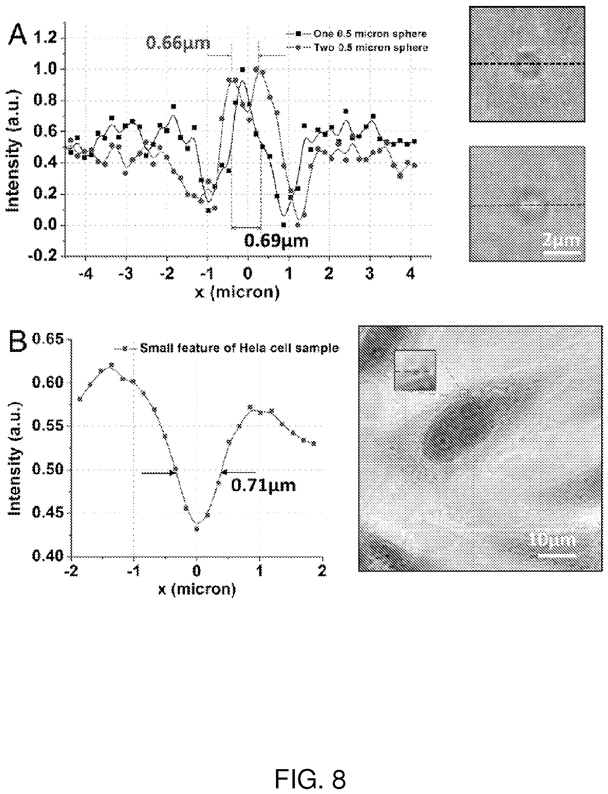

**FIG. 8(a)** is an HR image of a specimen having 500 nm microspheres (Polysciences) as constructed by an SPLM system or an e-Petri system, according to embodiments of the invention.

**FIG. 8(b)** is an HR image of a magnified small feature of the stained HeLa cell specimen of **FIG. 7** as constructed by an SPLM system or an e-Petri system, according to embodiments of the invention.

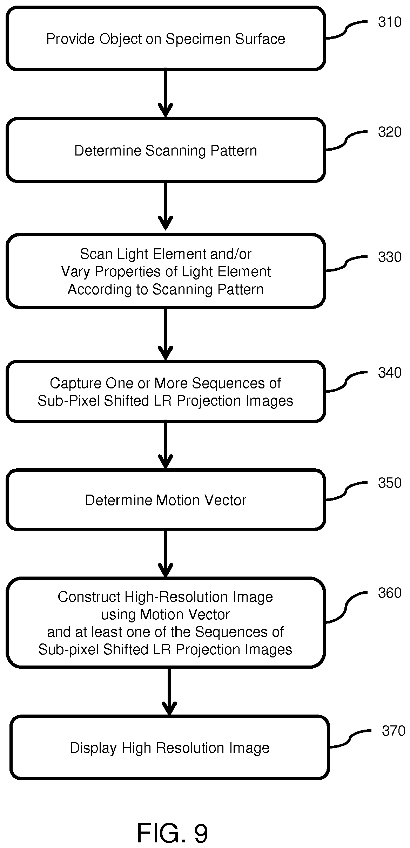

**FIG. 9** is a flow chart of an exemplary operation of an SPLM device or an e-Petri device, according to embodiments of the invention.

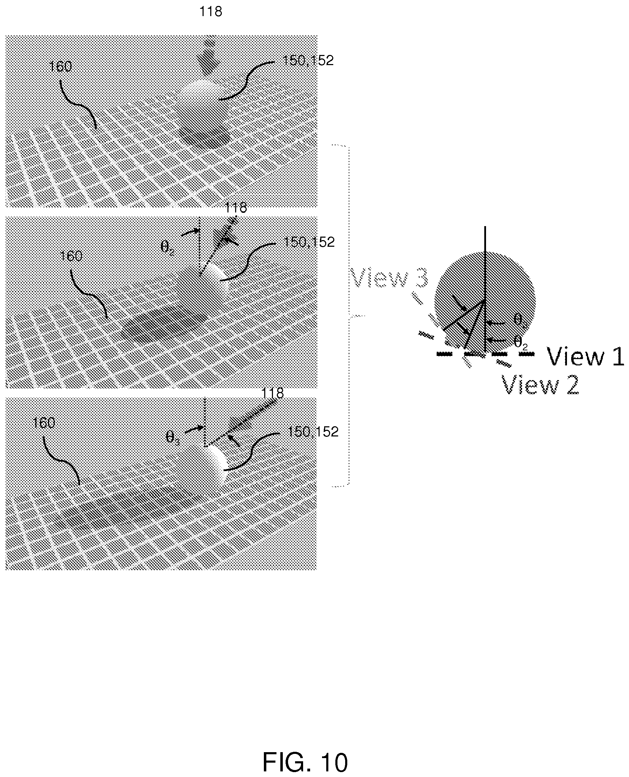

**FIG. 10** is a schematic drawing of three projections on a light detector from three different illumination angles, $\theta_1$, $\theta_2$, and $\theta_3$, according to an embodiment of the invention.

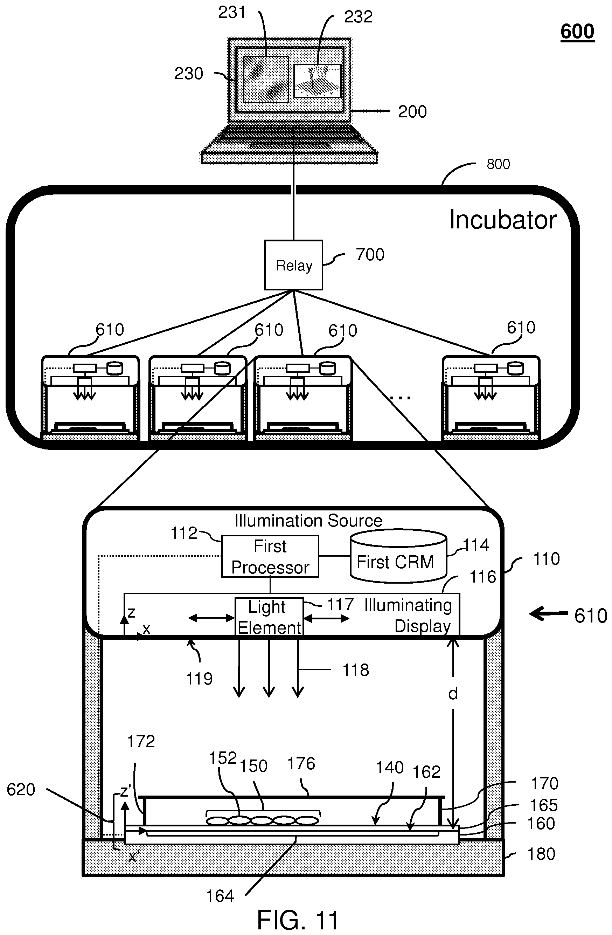

**FIG. 11** is a schematic diagram of an e-Petri system having n e-Petri devices and an expanded view of one of the e-Petri devices, according to embodiments of the invention.

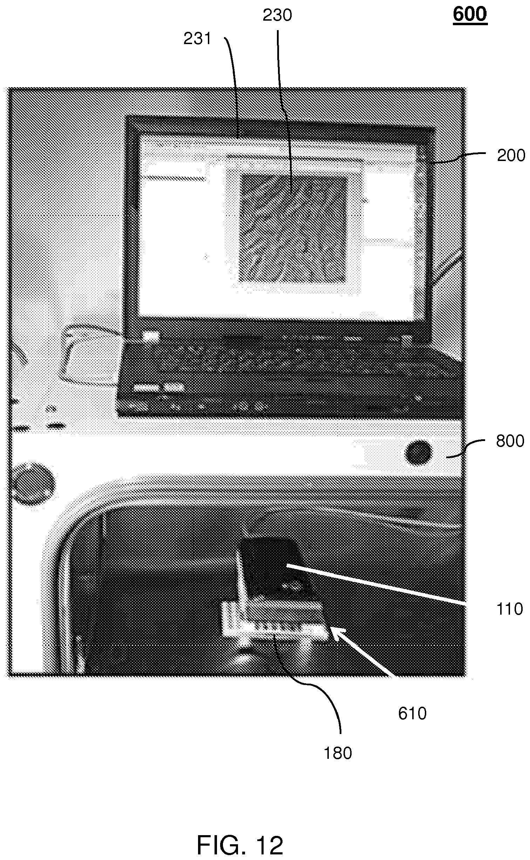

**FIG. 12** is a photographic image of an e-Petri system having a single e-Petri device, according to embodiments of the invention.

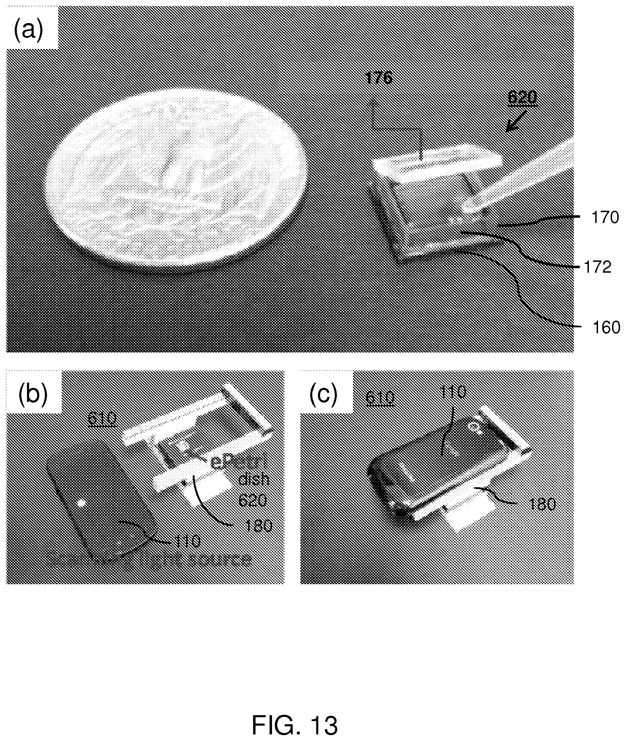

**FIG. 13(a)** is a photographic image of an e-Petri dish according to an embodiment of the invention, and a quarter for size comparison.

**FIG. 13(b)** is a photographic image of a partially disassembled e-Petri device having the e-Petri dish of **FIG. 13(a),** according to an embodiment of the invention.

**FIG. 13(c)** is a photographic of the assembled e-Petri device of **FIG. 13(b),** according to an embodiment of the invention.

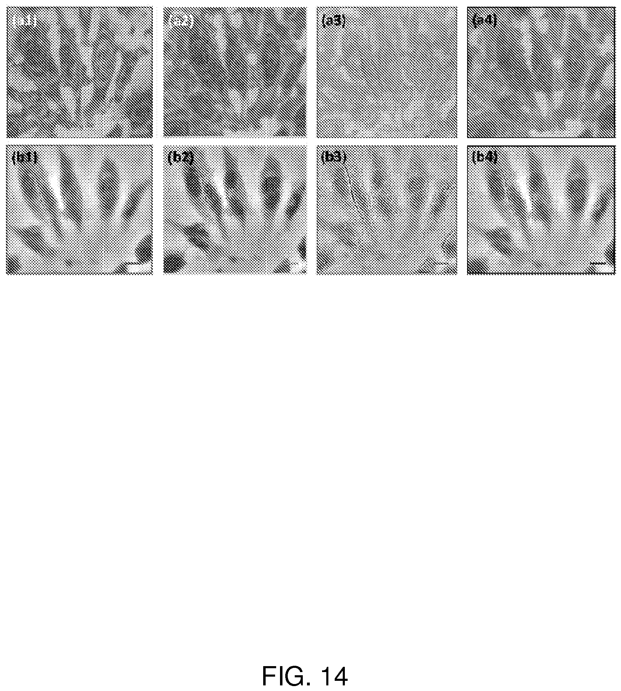

**FIG.14 (a1), FIG. 14(a2),** and **FIG. 14(a3)** are conventional microscopy images with red, green and blue LED illuminations (20X objective, 0.5 N.A.).

**FIG.14 (a4)** is the color image constructed based on the red, green, and blue images in **FIG.14 (a1), FIG. 14(a2),** and **FIG. 14(a3).**

**FIG.14 (b1), FIG. 14(b2),** and **FIG. 14(b3)** are reconstructed sub-pixel resolution images of a portion of HeLa cell sample as acquired by an e-Petri system under red, green, and blue light source scanning respectively, according to an embodiment of the invention.

**FIG.14 (b4)** is the reconstructed sub-pixel resolution color image based on the red, green, and blue images in **FIG.14** **(b1), FIG. 14(b2),** and **FIG. 14(b3),** according to an embodiment of the invention.

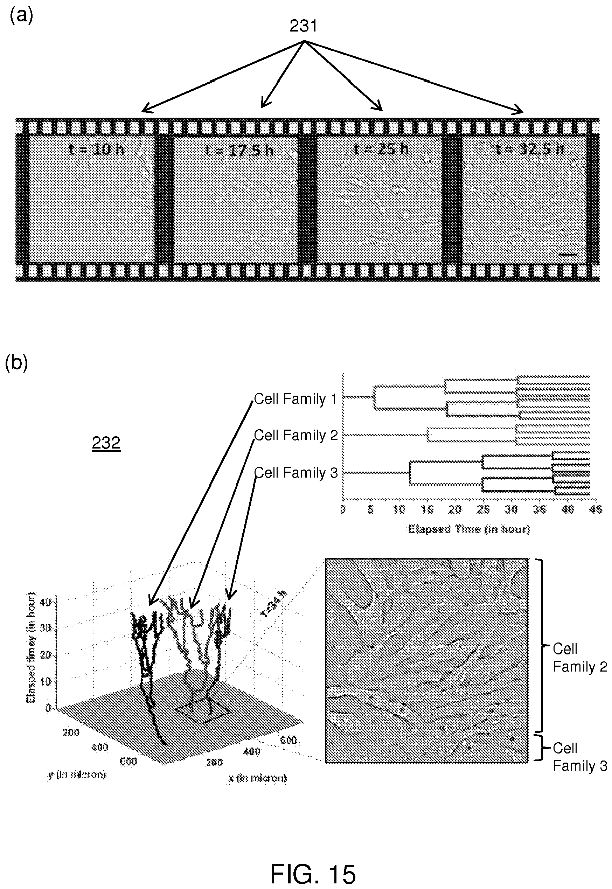

**FIG. 15(a)** are time-lapse reconstructed images of a portion of the HeLa cell sample from a specific sub-location, as acquired by an e-Petri system at starting at times, $t$=10hr, $t$=17.5hr, $t$=25hr and $t$=32.5hr during the time period of the study, according to an embodiment of the invention.

**FIG. 15(b)** are graphs of the tracking trajectories of three cell families annotated by a biologist and the lineage trees for these cell families that were processed by the second processor of the host computer of an e-Petri system, according to an embodiment of the invention.

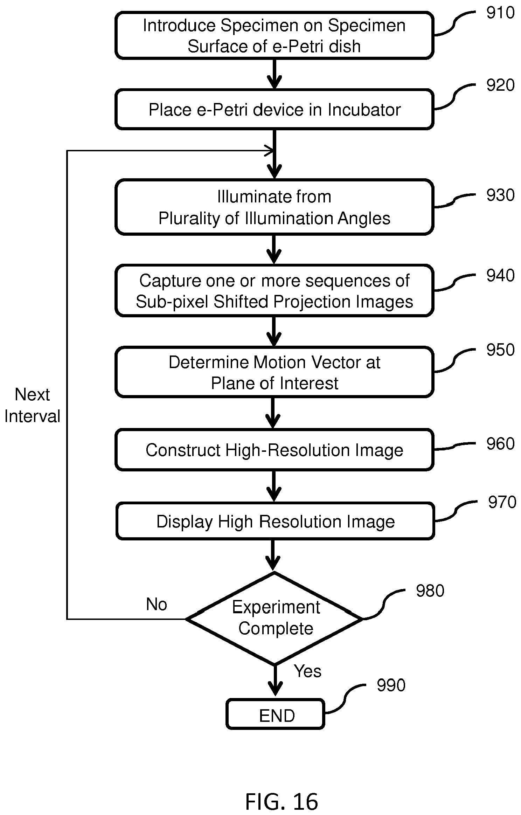

**FIG. 16** is a flow chart of an exemplary method of automatedly reconstructing and displaying the sub-pixel resolution images and/or other data at intervals during an experiment by an e-Petri system, according to embodiments of the invention.

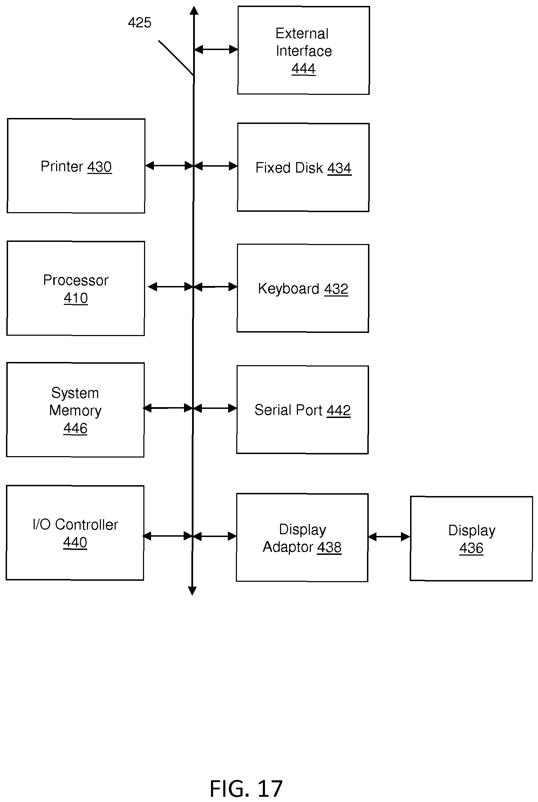

**FIG. 17** is a block diagram of subsystems that may be present in the SPLM system or an e-Petri system, according to embodiments of the invention.

DETAILED DESCRIPTION OF THE INVENTION

The need for a high-resolution, wide-field-of-view, cost-effective microscopy solution for autonomously imaging growing and confluent specimens (e.g., cell cultures), especially in longitudinal studies, is a strong one, as discussed in Schroeder, T., "Long-term single-cell imaging of mammalian stem cells," Nature Methods 8, pp. S30-S35 (2011), which is hereby incorporated by reference in its entirety for all purposes. Some examples of experiments that would benefit from such a solution include: 1) the determination of daughter fates before the division of neural progenitor cells, as discussed in Cohen, A. R., Gomes, F. L. A. F., Roysam, B. & Cayouette, M., "Computational prediction of neural progenitor cell fates," (2010); 2) the existence of haemogenic endothelium, as discussed in Eilken, H. M., Nishikawa, S. I. & Schroeder, T.,"Continuous single-cell imaging of blood generation from haemogenic endothelium," Nature 457, pp. 896-900 (2009), 3) neural and hematopoietic stem and progenitor divisional patterns and lineage choice, as discussed in Costa, M. R. et al.," Continuous live imaging of adult neural stem cell division and lineage progression in vitro," Development 138, 1057 (2011) and in Dykstra, B. et al., (National Acad Sciences); 4) the in-vitro tissue culture studies using the neutral red dye, as discussed in Repetto, G., del Peso, A. & Zurita, J. L., "Neutral red uptake assay for the estimation of cell viability/cytotoxicity," Nature Protocols 3, 1125-1131 (2008); 5) detection of toxic compound, as discussed in Borenfreund, E. & Puerner, J. A.,"Toxicity determined in vitro by morphological alterations and neutral red absorption," Toxicology Letters 24, pp.119-124 (1985); and 6) drug screening, as discussed in Cavanaugh, P. F. et al.,"A semi-automated neutral red based chemosensitivity assay for drug screening," Investigational new drugs 8, pp.347-354 (1990). These cited references are hereby incorporated by reference in their entirety for all purposes. The labor intensive nature of the experiments and the challenge of efficiently imaging large assays have plagued the experiment formats in these examples and others. Embodiments of the invention may address these and other challenges.

Embodiments of the invention include e-Petri dish and SPLM devices and systems that provide a chip-scale, lensless microscopy methodology that can automadedly image growing and confluent specimens (e.g. cell cultures) over a wide field-of-view with sub-pixel (e.g., subcellular) resolution. In one embodiment, for example, an e-Petri device can image a specimen with an area of 6mm x 4mm at 660 nm resolution. These e-Petri and SPLM devices and systems can be automated to periodically or otherwise repeatedly image specimens over time. These devices and systems can also be used image color stained specimens. Since e-Petri and SPLM devices may be compact, multiple devices can be placed in an incubator to image and track specimen changes such as cell culture growth directly within the incubator.

With these capabilities and others, this self-imaging microscopy methodology may significantly improve petri-based experiments (e.g., cell cultures) and other real-time imaging procedures in medicine and scientific disciplines. For example, by using this compact, low-cost microscopy imaging methodolgy, petri-dish based experiments may be transformed from the traditionally labor-intensive process to an automated and streamlined process. Further, this methodology may cut down on lab equipment usage and contamination risks. This possible technological shift from an inert petri-dish to a self-imaging petri-dish may be timely as well, because, the cost of high performance CMOS imaging sensors (which are widely used in cellphone cameras and webcams) has recently reached a price point where they can be used as recyclable or disposable components. With these capabilities, the e-Petri and SPLM devices and systems provide a smart petri-dish platform that may be well suited for long-term (cell culture) imaging and tracking applications. For example, the e-Petri and SPLM devices and systems may be used to explore time-resolved information in studying systems biology, cell growth, and in-vitro drug screening, where the counting and tracking individual cells in an in-situ and parallel manner is difficult with conventional methods such as bulky microscopes or plate readers.

These embodiments of the e-Petri and SPLM devices and systems and others will be described below with reference to the accompanying drawings. Embodiments include an e-Petri system, which includes one or more e-Petri devices having an e-Petri dish with a specimen surface and well for receiving and containing a specimen being imaged. The e-Petri system may also include an incubator, external processor, and/or other components according to embodiments of the invention. The e-Petri dish also includes a light detector (e.g., CMOS imaging sensor chip) having a sensing surface and a transparent layer between the sensing surface and the specimen surface. The e-Petri device includes an e-Petri dish along with an illumination source (e.g., smartphone) for providing illumination from different illumination angles at different times to a specimen located on the specimen surface of the e-Petri dish. The illumination from the different illumination angles generates projections of the specimen on the sensing surface. The light detector captures a sequence of sub-pixel shifted projection images at the sensing surface of the specimen. The e-Petri system also includes a processor, which may or may not be incorporated with any component of the system. The processor can reconstruct a higher resolution image from the sequence of sub-pixel shifted projection images captured by the light detector. Other embodiments include an SPLM device having a specimen surface for receiving a specimen being imaged, an illumination source, a light detector having a sensing surface, a transparent layer between the sensing surface and the specimen surface, and a processor.

The e-Petri and SPLM devices and systems use the same general imaging method. First, a specimen is located on the specimen surface of the device. During an illumination cycle, an illumination source provides light from different illumination angles to the specimen. For example, if an LCD is used, the light element may be in the form of different sets of light pixels that illuminate at different times to change the position of the light element. The positions of the different sets of light emitting component can be in a pattern designed to generate sub-pixel shifted projections of the specimen at the sensing surface of the light detector. The light detector can capture a sequence of these sub-pixel shifted projection images (frames) at the sensing surface. A processor can calculate the motion vector of the sub-pixel shifted projections using a suitable estimation algorithm. The processor can then use a super resolution algorithm to construct a sub-pixel resolution or other HR image of the specimen from the sequence of sub-pixel shifted projection images and the calculated motion vector. Under different imaging schemes, the e-Petri and SPLM devices/systems can generate HR monochromatic 2D images, HR monochromatic 3D images, HR color 2D images, and/or HR color 3D images. In a digital focusing scheme, these devices/systems can focus a HR image of the specimen at a plane through the specimen using a motion vector calculated at that plane to construct an HR image.

This imaging method leverages the recent broad and cheap availability of high performance image sensor chips to provide a low-cost and automated microscopy solution. Unlike the two major classes of lensless microscopy methods, optofluidic microscopy and digital in-line holography microscopy, this imaging method is fully capable of working with cell cultures or any samples in which cells may be contiguously connected.

Embodiments of the invention provide one or more technical advantages. In embodiments, the illumination source is located at a larger distance from the sensing surface as compared with the distance between the specimen and the sensing surface. Thus, small translations of the light element correspond to larger translations of the projections on the sensing surface. With this geometry, the illumination source can easily and accurately control and maintain sub-pixel shifts of the projections. These devices can then generate an accurate sub-pixel resolution image based on the accurately controlled sub-pixel shifted projections. In some embodiments, the devices can generate images with a resolution compatible to conventional 20x-40x objective microscopes. This can provide an advantage over other systems, such as prior microscanning systems, that used actuators and controller to control sub-pixel movements of the object or a platform holding the object.

Other advantages of embodiments are that this method may provide an autonomous, cost effective, high resolution microscopic solution for high resolution imaging of confluent specimens and other specimens in which objects in the specimen may be contiguously connected over a sizable length. One advantage is that the systems and devices may be made compact (e.g., on the chip-scale) and at lower cost than convention microscopy. Since these systems and devices may be compact and low cost, multiple devices can easily be used in parallel to image many specimens. For example, several e-Petri devices may be placed in a single incubator and monitored using the display on single laptop computer. With this compact platform, lab testing may become more streamlined and require less lab equipment allocation. Another advantage is that the systems and devices can automatedly image and produce other data, which may reduce the human labor involved in lab experiments. Some benefits of automated imaging can be found in Levin-Reisman, I., et al., "Automated imaging with ScanLag reveals previously undetectable bacterial growth phenotypes," Nat Meth, 7(9), pp. 737-739 (2010), which is hereby incorporated by reference in its entirety for all purposes. Due to the automated nature of the imaging used by the devices of embodiments, contamination risks may be reduced. Also, experimental procedures may be significantly streamlined and may be more accurate.

Components of the SPLM systems and devices are discussed in detail in Section I, which also describes some components of e-Petri systems and devices. The imaging method used by the SPLM and e-Petri systems and devices is discussed in Section II. Components of the e-Petri systems and devices are discussed in detail in Section III. Some components of e-Petri systems and devices are also described in detail in Section I.

**I. Scanning Projective Lensless Microscope (SPLM) System**

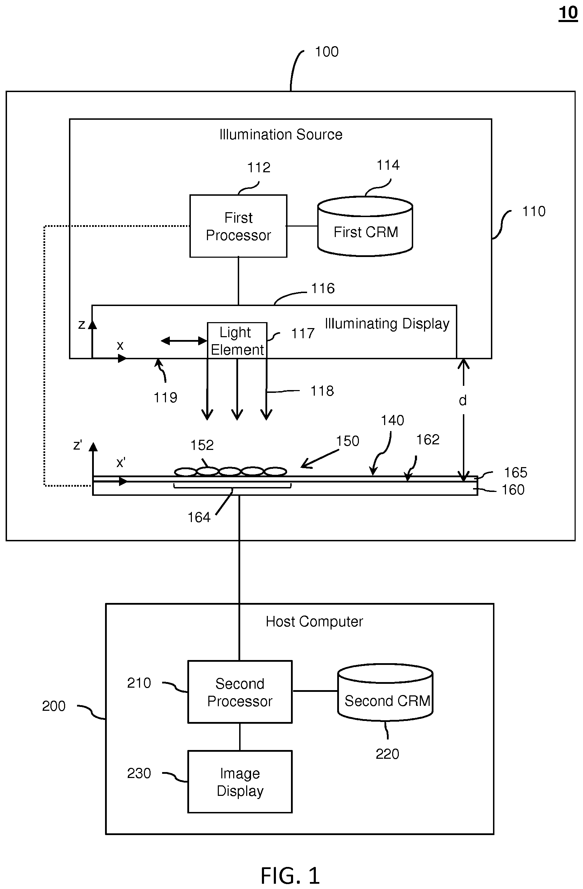

**FIG. 1** is a schematic diagram of components and partial components of an SPLM system **10,** according to embodiments of the invention. The SPLM system **10** includes an SPLM device **100** and a host computer **200.**

The SPLM device **100** includes a specimen surface **140** for receiving a specimen (e.g., confluent sample). The SPLM system **10** can image at least a portion of the specimen **150.** In the illustrated example, a specimen **150** with five objects **152** (e.g., cells) is located on the specimen surface **140.** Although five objects **152** are shown, the specimen **150** may have any suitable number (e.g., 1, 2, 10, 100, 1000, etc.) or portion(s) of objects **152.**

The SPLM device **100** also includes a scanning illumination source **110** having a first processor **112,** a first computer readable medium (CRM) **114,** and an illuminating display **116** (e.g., an LCD, a light emitting diode (LED) display, etc.). The first processor **112** is in electronic communication with the illuminating display **116** and with the first CRM **114.** The illuminating display **116** includes a light element **117** (e.g., one or more pixels of an LCD or LED display)) capable of generating illumination **118** (e.g., incoherent light). The illuminating display **116** also includes a display surface **119.** The light element **117** is located at the display surface **119** in the illustrated example. In other embodiments, a transparent layer may be located between the display surface **119** and the light element **117.** Also, a transparent layer may be located outside the display surface **119** in some embodiments. The scanning illumination source **110** also includes an x-axis, a y-axis (not shown), and a z-axis. The x-axis and y-axis lie in a plane at the display surface **119.** The z-axis is orthogonal to this plane.

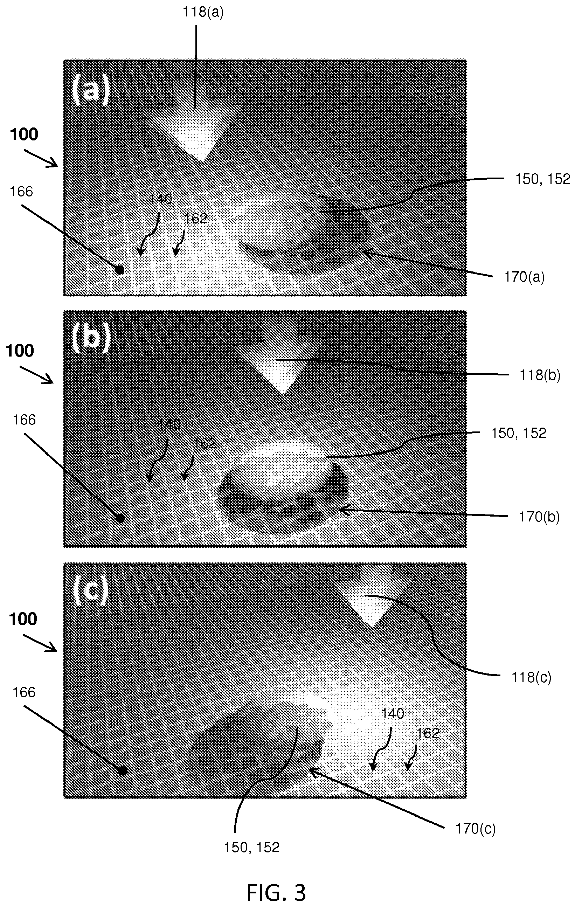

The scanning illumination source **110** can scan (sweep) or otherwise translate the light element **117** to different scanning locations across the display surface **119** in order to provide illumination **118** to the specimen **150** from different illumination angles. The shifting light element **117** (source) of the illumination **118** generates shifting projections **170** (as shown in **FIG. 3)** of a specimen **150** on the sensing surface **162.** In **FIG. 1,** the light element **117** is shown at a scanning position at a time, t during the scanning cycle of an imaging run. Each scanning cycle of an SPLM device **100** can refer to a time interval during which the scanning illumination source **110** scans or otherwise translates the light element **117** to the scanning locations in that particular scanning cycle. An imaging run of an SPLM device **100** can refer a time interval during which one or more operations of the SPLM system **10** generates an HR image based on light data collected during one or more scanning cycles. In embodiments, the light element **117** may shift during a scanning cycle to n x m scanning locations in a two-dimensional (n x m) array of scanning locations: $(X_{i=1}$ to n, $y_{j=1}$ to m) on the display surface **119.**

The SPLM device **100** also includes a light detector **160** for capturing projection images. The light detector **160** includes a sensing surface **162** having a sensing area **164.** The sensing surface **162** is located at a distance, d, from the display surface **119.** The light detector **160** also includes a transparent layer **165** (e.g., thin transparent passivation layer) located between the specimen surface **140** and the sensing surface **162.** During a scanning cycle, the illumination **118** from the light element **117** generates projections **170** (shown in **FIG. 3**) of the specimen **150** on the sensing surface **162.** The light detector **160** can sample (capture) one or more sequences of sub-pixel shifted LR projection images of the specimen **150** during a scanning cycle. Each sub-pixel shifted LR projection image can refer to an LR projection image that has shifted a sub-pixel distance from a neighboring LR projection image in the sequence. Neighboring LR projection images in a sequence can refer to two LR projection images that are proximal in distance. In some cases, neighboring LR projection images may also be projection images that have been sequentially captured in time during a scanning cycle.

As shown by a dotted line, the light detector **160** may optionally be in electronic communication with the first processor **112** for synchronization of sampling by the light detector **160** with scanning by the scanning illumination source **110.** The light detector **160** also includes an x'-axis, a y'-axis (not shown), a z'-axis. The x'-axis and y'-axis lie in a plane at the sensing surface **162** of the light detector **160.** The z'-axis is orthogonal to this plane.

The SPLM system **10** also includes a host computer **200** having a second processor **210,** a second CRM **220** in electronic communication with the second processor **210,** and an image display **230** in electronic communication with the second processor **210.** The second processor **210** can receive data associated with one or more sequences of sub-pixel shifted LR projection images from the light detector **150.** The second processor **210** can also determine a motion vector of the projections **170** at the sensing surface **162** based on the data. The second processor **210** can then use a suitable super resolution algorithm (SR algorithm) to generate one or more HR (e.g., sub-pixel resolution) images of the specimen **150** based on the motion vector and data of one or more sequences of sub-pixel shifted LR projection images. The second processor **210** is in electronic communication with the second processor **210** to display the HR images and/or other images.

In an exemplary imaging run of the SPLM system **10** of **FIG. 1,** the scanning illumination source **110** scans or otherwise translates the light element **117** to a two-dimensional (n x m) array of n x m scanning positions having the coordinates $(x_{i=1 \text{ to } n}, y_{j=1} \text{ to } m)$ on the display surface **119.** The scanning illumination source **110** scans (sweeps) or otherwise translates the light element **117** to scanning positions according to a scanning pattern. Illumination **118** from the light element **117** at the different scanning locations generates shifted projections **170** of the specimen **150** on the sensing surface **162** of the light detector **160.** During scanning, the light detector **160** captures one or more sequences of sub-pixel shifted LR projection images at the sensing area **164**. The second processor **210** receives data for at least one of the sequences from the light detector **160**. The second processor **210** can determine a motion vector of the sub-pixel shifted projections **170** at the sensing surface **162** from the data. The second processor **210** can also construct one or more HR images of the specimen **150** using a suitable super-resolution algorithm with the data from at least one of the sequences of sub-pixel shifted LR projection images of the specimen **150** and/or the determined motion vector.

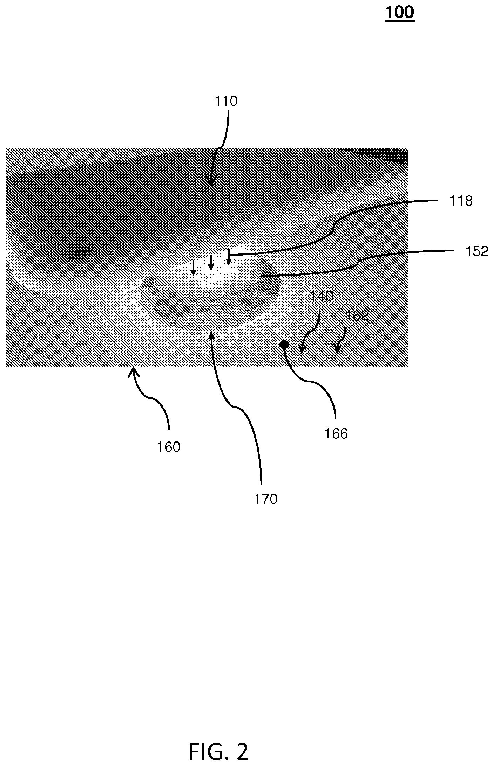

**FIG. 2** is a drawing of a perspective view of components and partial components of an SPLM device **100** or an e-Petri device, according to embodiments of the invention. The SPLM device **100** or an e-Petri device includes a scanning illumination source **110** in the form of a mobile communication device (e.g., cell phone, tablet, etc.) and a light detector **160** in the form of a two-dimensional array of light detecting elements **166** (e.g., CMOS imaging sensor). The light detector **160** has a sensing surface **162** and a thin transparent layer **165**. A specimen **150** comprising a single object **152** (e.g., cell) is located on the specimen surface **140** (not shown). The thin transparent layer **165** lies between the sensing surface **162** and the specimen surface **140**. In this example, scanning illumination device **110** includes an illuminating display **116** (not shown) in the form of an LCD. The LCD includes a two-dimensional array of light emitting components (e.g., pixels). The scanned light element **117** is in the form of subsequent sets of light emitting components on the LCD **116** providing illumination **118** according to a scanning pattern. Each set may include one or more light emitting components. The subsequent sets of light emitting components provide illumination **118** at the two-dimensional (n x m) array of n x m scanning locations at $(X_{i=1 \text{ to } n}, y_{j=1 \text{ to } m})$ on the display surface **119**. In **FIG. 2,** the light element **117** is shown at a single scanning location in the scanning cycle. The illumination **118** from the light element **117** generates a single projection **170** of the object **152** on the sensing surface **162** of the light detector **160**.

**FIGS. 3(a), 3(b),** and **3(c)** are drawings of perspective views of components and partial components of an SPLM device **100** or an e-Petri device during a scanning cycle of an imaging run, according to embodiments of the invention. The SPLM device **100** or an e-Petri device includes a scanning illumination source **110** providing illumination **118** and a light detector **160** in the form of a two-dimensional array of light detecting elements **166**. The light detector **160** has a sensing surface **162** and a thin transparent layer **162**. A specimen **150** comprising a single object **152** (e.g., cell) is located on the specimen surface **140**. The thin transparent layer **165** lies between the sensing surface **162** and the specimen surface **140**. The SPLM device **10** or an e-Petri device also includes an x-axis, a y-axis, and a z-axis. The x-axis and y-axis lie in the plane at the sensing surface **162** of the light detector **160**. The z-axis is orthogonal to this plane. The light element (not shown) **117** provides illumination **118** and generates light spots on the light detector **160**.

In **FIGS. 3(a), 3(b),** and **3(c),** the light element **117** (not shown) is located at three scanning positions along the x'-axis at times: $t = t_a, t_b,$ and $t_c$ (a>b>c), respectively. Illumination **118** is shown from three different scanning position to generate three shifted projections **170(a), 170(b),** and **170(c)** on the sensing surface **162,** respectively. With certain shifts of the light element **117,** the object's projection (shadow) can be shifted at sub-pixel (i.e. smaller than pixel size) increments across the light detecting elements **166** (e.g. sensor pixels) of the light detector array. At times: $t = t_1, t_2,$ and $t_3$, the light detector **160** captures a sequence of three LR projection images corresponding to the three projections **170(a), 170(b),** and **170(c),** respectively. Any suitable number of sub-pixel shifted projections may have been captured at scanning times between times, $t_a$ and $t_b$ or between times, $t_b$ and $t_c$. A motion vector of the projections **170(a), 170(b),** and **170(c)** at the sensing surface **162** can be determined based on the data from a sequence of sub-pixel shifted LR projection images. An HR image of the object **152** can be constructed using a suitable SR algorithm and based on the data from a sequence of sub-pixel shifted LR projection images captured by the light detector **160**.

Any suitable specimen **150** may be imaged by the SPLM system **10** or the SPLM device **100**. In most cases, the specimen **150** is stationary during a scanning cycle. An example of a suitable specimen **150** is a confluent sample (e.g., confluent cell cultures) having one or more objects **152** (e.g., cells). Another example of a suitable specimen **150** is a sample in which the objects **152** are contiguously connected. The specimen **150** being imaged may include any suitable type(s) of object(s) **150** and may include any suitable number (e.g., 1, 10, 100, 1000, etc.) of objects **150** or portion(s) of an object **150**. Suitable types of objects **150** can be biological or inorganic entities. Examples of biological entities include whole cells, cell components, microorganisms such as bacteria or viruses, cell components such as proteins, etc. Inorganic entities may also be imaged by embodiments of the invention.

As used herein, a scanning illumination source **110** can refer to any suitable device or combination of devices capable of scanning or otherwise translating a light element **117** to n scanning positions to generate sub-pixel shifted projections **170** of a specimen **150** being imaged at a sensing surface **162** of a light detector **160**. Any number, *n,* of scanning positions can be used (*n* = 1, 2, 3, 4, 5, 10, 20, 100 etc.). By moving the light element **117,** the scanning illumination source **110** changes the illumination angles of the illumination **118** provided to the specimen **150**. In embodiments, the scanning illumination source **110** moves the light element 117 to scanning locations that generate a small range of illumination angles (e.g., +/- 2 degrees) in X/Y around the normal to the sensing surface or other plane of interest.

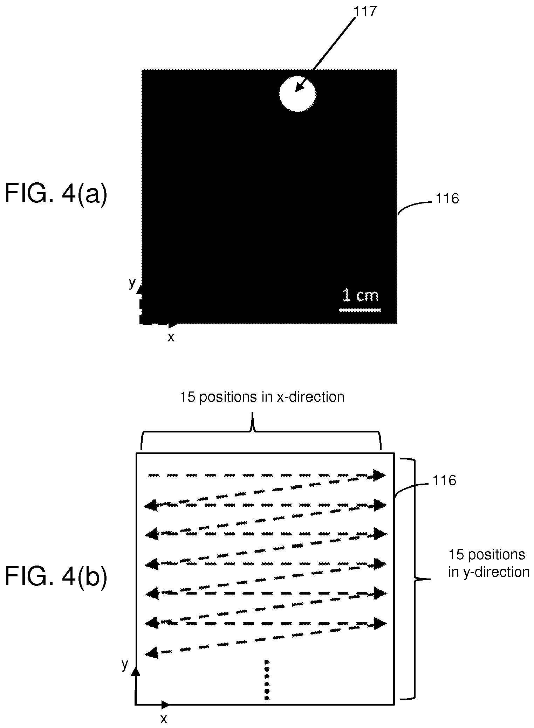

An example of a suitable scanning illumination device **110** is a mobile communication device (e.g., cell phone, tablet, etc.). Suitable scanning illumination sources **110** commercially available. Illustrated examples of a suitable scanning illumination device **110** in the form of a smartphone are shown in **FIGS. 2** and **4.** Another example of a suitable scanning illumination device **110** may be a tomographic phase microscope that uses a spatial light modulator to scan illumination.

In embodiments, the scanning illumination source **110** may include an illuminating display **116** for scanning the light element **117** to generate sub-pixel shifted projections **170** at the sensing surface **162**. An illuminating display **116** can refer to any suitable display capable of translating a light element **117** to scanning locations across at least a portion of a display surface **119**. Suitable illuminating displays **116** are commercially available. Some examples of suitable illuminating displays **116** include monochromatic, color, or gray-scale LCDs, LED displays (e.g., display panels), television screens, LCD matrixes, etc. In these embodiments, the illuminating display **116** may include a two-dimensional array of light emitting components (e.g., pixels). The array of light emitting components may have any suitable dimension (e.g., 1000 x 1000, 1000 x 4000, 3000 x 5000, etc.). The display surface **119** can refer to a surface of the illuminating display **116** that provides illumination **118**. For example, the scanning illumination source **110** may be in the form of a smartphone with an illuminating display **116** in the form of an LCD screen, as shown in **FIGS. 2** and **4**. In other embodiments, the scanning illumination source **110** may include another device or combination of devices capable of scanning the light element **117** to generate sub-pixel shifted projections **170** at the sensing surface **162**.

The scanning illumination source **110** may be held at a fixed position relative to the light detector **160** and the transparent layer **165** during scanning in some embodiments. In these embodiments, the SPLM **100** may include a suitable structure (e.g., platform, frame, etc.) or structures to hold the scanning illumination source **110** and light detector **160** in a fixed position. In some cases, such as the illustrated example of **FIG. 1,** the scanning illumination source **110** may be held such that the display surface **119** is kept approximately parallel to the sensing surface **162** of the light detector **160** and at a distance, d, from the sensing surface **162** during scanning. In these cases, the illuminating display **116** may provide illumination **118** at angles normal to the display surface **119**. In other cases, the scanning illumination source **110** may be held so that the display surface **119** may be tilted at an angle from normal. At this angle, projections **170** from more extreme illumination angles to be captured, leading to a more complete 3D reconstruction in some cases. In one embodiment, the scanning illumination source **110** may include actuator(s) and controller(s) or other mechanism to reposition the illuminating display **116** (e.g., LCD array) at an angle from normal.

A light element **117** can refer to a suitable device capable of providing illumination **118**. The properties of the illumination **118** generated by the light element **117** can have any suitable values. Some properties of the illumination **118** include intensity, wavelength, frequency, polarization, phase, spin angular momentum and other light properties associated with the illumination **118** generated by the light element **117.** In embodiments, the illumination **118** is incoherent light. The component or components of the light element **117** can change over time. For example, in the case of an LCD, different pixels may illuminate at different times to change the position of the light element **117.**

In embodiments with an illuminating display **116** in the form of a two-dimensional array of light emitting components (e.g., pixels), a light element **117** at a particular scanning time, t may be a set of a suitable number (e.g., 1, 5, 10, 100, etc.) of illuminated light emitting components (e.g., LCD lit/pixel) in the two-dimensional array (e.g., LCD array). Each light emitting component may have a scanning location denoted as $(x_i, y_j)$ where i = 1...N; and j = 1...N. The light element **117** may be the illuminated pixels in the array at a scanning time in the scanning cycle. The scanning location of a light element **117** can refer to the coordinates of the center of the set of illuminated light emitting components in this case. In these embodiments, sequentially illuminated sets of light emitting components(s) on an illuminating display **116** can generate light elements **117** at different scanning locations during a scanning cycle.

The properties (e.g., size, properties of the illumination **118,** shape, etc.) of the light element **117** may have any suitable value. In embodiments, one or more properties of the light element **117** may vary at different scanning locations in a scanning cycle. In other embodiments, the properties of the light element **117** may be constant during the scanning cycle. Some examples of suitable shapes of a light element **117** are a rectangle, circle, spot, bar, etc. In embodiments with an illuminating display **116** in the form of a two-dimensional array of light emitting components, the properties of the light element **117** can be varied by varying the number of light emitting components in the set of light emitting components (e.g., pixels) forming the light element **117**. For example, the intensity of the illumination **118** generated by the light element **117** can be varied by changing its number of light emitting components (e.g., pixels). In embodiments, one or more properties of the illumination **118** generated by the light element **117** may change at different scanning locations.

In embodiments, the intensity of the illumination **118** generated by the light element **117** may be controlled by varying the size of the light element **117.** In one embodiment, the size of the light element **117** may vary at different scanning locations to generate light at approximately the same intensity at a single point at the plane of the sensing surface **162**. In this embodiment, the size, $S$ of the light element **117** at a scanning location can be proportional to the distance, $L$, from the scanning location to a suitable location such as: a) the center of the array of scanning locations, or b) the center of an illuminating display **116** such as the center of an LCD on a smartphone. For example, the size, $S$ of the light element **117** at a scanning location may be defined as: $S = S_{center} \times (1 + L)$, where $S_{center}$ is the size of the light element **117** at the center of the array of scanning locations. In this way, the light intensity received at a location at the sensing surface **162** normal to the center of the scanning locations on the display surface **119** can be kept about constant in some cases. As another example, the size S of the light element **117** at a scanning location in a scanning cycle may be defined as: $S = S_A \times (1+A)$, where $S_A$ is the size of the light element **117** at a location A of an illuminating display **116,** A is the distance from the scanning location to the location A.

In one embodiment, the light element **117** can provide illumination **118** of n different wavelengths $\lambda_1, ..., \lambda_n$ at different scanning times during a scanning cycle. The illumination **118** may be sequentially cycled through a series of different wavelengths as the light element **117** moves through scanning locations in a scanning cycle in some examples. In one example, the light element **117** can provide RGB illumination of three wavelengths $\lambda_1, \lambda_2,$ and $\lambda_3$ corresponding to red, green, blue colors, respectively. The light element **117** may provide illumination **118** of the three wavelengths $\lambda_1,$ $\lambda_2,$ and $\lambda_3$ sequentially during scanning times of a scanning cycle. In one case, at a scanning time $t_1$ illumination **118** may have a wavelength of $\lambda_1,$ at $t_2$ illumination **118** may have an wavelength of $\lambda_2,$ at $t_3$ illumination **118** may have a wavelength of $\lambda_3,$ at $t_4$ illumination **118** may have a wavelength of $\lambda_1,$ at $t_5$ illumination **118** may have a wavelength of $\lambda_2,$ etc.

A scanning location can refer to the center of the light element **117**. Any suitable number (e.g., 1, 100, 1000, etc.) of scanning locations may be used in a scanning cycle. As a group, the scanning locations in a scanning cycle may cover any suitable area. In embodiments with a display surface **119,** the scanning locations may cover the entire display surface **119** or may cover a portion of the display surface **119.**

To shift projections **170** of the specimen **152** at the sensing surface **162,** the scanning illumination source **110** can translate the light element **117** to different scanning locations generating different illumination angles. To generate a sequence of sub-pixel shifted projections **170** of the specimen **152** at the sensing surface **162** in some embodiments, the scanning illumination source **110** may move the light element **117** to a plurality of scanning locations designed to generate sub-pixel shifted projections **170**. In this case, neighboring scanning locations in the plurality of scanning locations correspond to a sub-pixel shift of neighboring projections images **170** in the sequence of projection images. Neighboring scanning locations can refer to two scanning locations that are proximal in distance. In some cases, neighboring scanning locations may also be locations that are sequential in time having sequential scanning times during a scanning cycle.

The scanning locations may form any suitable arrangement (e.g., array, circle, square, triangle, etc.). In embodiments, the scanning locations may be in the form of an array (e.g., one-dimensional array, two-dimensional array, or combination of one-dimensional and two-dimensional arrays) of scanning locations. In these embodiments, the array of scanning locations may have any suitable dimension (e.g. 1 x 100, 1 x 10, 100 x 100, 3000 x 20, 400 x 300, etc.). For example, the scanning locations may be arranged in a two-dimensional (n x m) array of n x m scanning locations at ($X_{i=1}$ to n, $y_{j=1 \text{ to } m}$).

In embodiments with an illuminating display **116** (e.g., LCD display) in the form of a two-dimensional array of light emitting components (e.g. pixels), the scanning locations of the light element **117** can refer to subsequently illuminated light emitting components in the two-dimensional array. In these embodiments, the scanning locations of the light element **117** may be located at the display surface **119**. For example, the scanning locations may be in the form of a two-dimensional (n x m) array of n x m scanning locations at ($X_{i=1 \text{ to } n},$ $y_{j=1 \text{ to } m}$) on the display surface **119.**

In embodiments, the scanning illumination source **110** the light element **117** during a scanning cycle according to a scanning pattern. A scanning pattern can refer to a description of the scanning locations (i.e. locations of the light element **117**) at different times during a scanning cycle and properties (e.g., size, shape, etc.) of the light element **117** at each scanning location in the scanning cycle. For example, a scanning pattern may include a two-dimensional array of scanning locations and a description that the light element **117** moves through each row sequentially at a constant rate. In another example, the scanning pattern may include a two-dimensional array of scanning locations and a description that the element moves through each column sequentially at a constant rate. As another example, the scanning pattern may include a two-dimensional array of scanning locations and a description that the element moves through the array randomly. The scanning pattern may also include the amount of sub-pixel shift desired between subsequent LR projection images. The scanning pattern may also include the total number of LR projection images and/or HR images desired. The scanning pattern may be stored as code on the first CRM **114** or the second CRM **220.** In embodiments with a scanning illumination source **110** in the form of a smartphone such as in **FIG. 4,** the scanning pattern may be an application (App) stored in the memory of the smartphone.

In embodiments such as the illustrated example of **FIG. 1,** the SPLM device **100** also includes a transparent layer **165** located between the specimen surface **140** and the sensing surface **162.** The transparent layer **165** can separate the specimen **150** from the light sensitive region of the light detector **160.** The transparent layer **165** may be made of any suitable material such as Polydimethylsiloxane (PDMS). The transparent layer **165** may have any suitable thickness (e.g., thickness in the range of several hundred nanometers to microns). In some cases, the transparent layer **165** may be a layer placed on the light detector **160.** For example, the transparent layer **165** may be a passivation layer coated or deposited on top of an imaging sensor chip. In other cases, the transparent layer **165** may be separate from the light detector **160.** In other embodiments, the SPLM device **100** does not have a transparent layer **165** and the sensing surface **162** is coincident with the specimen surface **140.** The transparent layer may also be comprised of multiple layers. For example, the transparent layer may be comprised of a passivation layer proximal the light detector **160** and a protective coating.

The distance between neighboring projections **170** is proportional to the thickness of the transparent layer **165** and the tilt/shift extent of the light element **117**. The tilt/shift extent of the light element **117** can refer to the distance or illumination angle change between neighboring scanning locations. In some embodiments, the distance between neighboring scanning locations in a plurality of the scanning locations of a scanning cycle can be designed to generate sub-pixel shifted projections **170**. In these cases, the distance between the neighboring scanning locations can be determined based on the thickness of the transparent layer **165** and the required incremental sub-pixel shifts between neighboring projections **170**.

In embodiments, the distance between neighboring scanning locations in a plurality of scanning locations may be determined to generate sub-pixels shifts between neighboring projections **170** in a sequence of projection images. In these embodiments, the determined distance between neighboring scanning locations in the plurality of scanning locations directly corresponds to a sub-pixel shift of a projection **170** at the sensing surface **162**. In these embodiments, the plurality of scanning locations directly corresponds to a sequence of sub-pixel shifted projection images.

In embodiments, the distance between neighboring scanning locations may be a suitable value. In some cases, the distance between neighboring scanning locations in a given scanning cycle may be constant. In other cases, it may vary.

A scanning rate can refer to the rate of shifting between sequential scanning locations in a scanning cycle per unit in time. A sampling rate can refer to a rate of projection images (frames) captured by the light detector **160** per unit in time such as frames per second. The sampling/scanning rate may be constant in some embodiments and may vary in other embodiments. In embodiments, the scanning rate and sampling rate are synchronized.

FIG. 4(a) and FIG. 4(b) are diagrams illustrating a scanning pattern on an illuminating display **116,** according to embodiments of the invention. In this example, the scanning illumination source **110** is in the form of a smartphone and the illuminating display **116** is in the form of an LCD screen of the smartphone. The LCD screen includes a two-dimensional array of pixels of a 640 x 640 pixel size. During scanning, the smartphone may be located at a suitable distance, d above the light detector **160** (e.g., image sensor chip). The display surface **119** of the illuminating display **116** and the sensing surface **162** of the light detector **160** may be kept approximately parallel. The smartphone may be located so that the center of the display surface **119** of the illuminating display **116** is above the sensing area **164** of the sensing surface **162** of the light detector **160**. The illuminating display **116** includes an x-axis and a y-axis. The x-axis and y-axis lie in the plane at the display surface **119** of the illuminating display **116.**

FIG. 4(a) shows a light element **117** comprising a set of about 640 pixels in the form of a bright circular spot of about 1 cm in diameter on the illuminating display **116**. The light element **117** is shown at a scanning location at a scanning time during a scanning cycle. The light element **117** may be located at the display surface **119** of the illuminating display **116.**

In FIG. 4(b), the diagram of the scanning pattern includes a 15 x 15 array of scanning locations (steps) of the light element **117** during the scanning cycle. The scanning locations are shown at locations along the x-axis and y-axis in the plane of the display surface **119** of the illuminating display **116.** In the illustrated example, the scanning pattern includes 15 scanning locations in the x-direction and 15 scanning locations in the y-direction. In this example, the light detector **160** may capture 225 LR projection images based on the 225 scanning locations in the scanning patter. The array of scanning positions may be centrally located within the illuminating display **116.** The arrows in FIG. 4(b) designate the order of the scanning locations during the scanning cycle. In this case, the light element **117** moves sequentially through each row of the two-dimensional array of scanning locations in the scanning pattern. If the light element **117** remains a constant size as it moves away from the center of the display surface **119,** the intensity readout from the light detector **160** (e.g., image sensor chip) will decrease because of the large incident angle. To maintain a more constant intensity readout, the size of the light element **117** (e.g., bright spot size) can be linearly increased as it moves away from the center of the illuminating display **116** (e.g., smartphone screen) in one embodiment.

Returning to FIG. 1, the scanning illumination source **110** includes a first processor **112** in electronic communication with the illuminating display **116** and a first CRM **114** in communication with the first processor **112**. The first processor **112** (e.g., microprocessor) can execute code stored on the first CRM **114** (e.g., memory) to perform some of the functions of the scanning illumination source **110**. For example, the first processor **112** may execute code with a scanning pattern stored on the first CRM **114**. The CRM **114** may include, for example, code with a scanning pattern, other code for scanning a light element **117,** and other codes for other functions of the scanning illumination source **110**. The first CRM **114** may also include code for performing any of the signal processing or other software-related functions that may be created by those of ordinary skill in the art. The code may be in any suitable programming language including C, C++, Pascal, etc.

In embodiments, the light detector **160** may be in electronic communication with the first processor **112** of the scanning illumination source **110** to synchronize sampling of the light detector **160** with the light element **117** being located at a scanning position. In these embodiments, the sampling rate of the light detector **160** may be synchronized with the scanning rate of the scanning illumination source **110** to capture at least one projection image **170** at each scanning location. In one embodiment, an electronic start sampling signal may be sent to the light detector **160** from scanning illumination source **110** to capture an LR projection image when the light element **117** is at a scanning location.

The SPLM device **100** also includes a light detector **160** (e.g., CMOS imaging sensor). As used herein, a light detector **160** can refer to any suitable device or combination of devices capable of capturing projection images **170** and generating one or more signals with data associated with the projection images **160** captured and other data associated with imaging. The signals with data may be in the form of an electrical current from the photoelectric effect.

The light detector **160** includes a sensing surface **162**. As used herein, a sensing surface **162** can refer to the active sensing layer of the light detector **160**. The sensing surface **162** includes a sensing area **164**. The sensing area **164** refers to a suitable area of the sensing surface **162** that actively captures projections **170** during a scanning cycle. In some cases, the entire area of a sensing surface **162** is the sensing area **164**. In embodiments, the specimen **150** being imaged may be located in an area of the specimen surface **140** proximal the sensing area **162**. The light detector **160** also includes a local x' axis and y' axis at a plane of the sensing surface **162**.

In embodiments, the light detector **160** includes discrete light detecting elements **166** (e.g., pixels) in the form of a two-dimensional array of light detecting elements **166,** as shown in **FIGS. 2** and **3.** The light detecting elements **166** may be located on or within a surface layer of the light detector **160** at the sensing surface **162**. Although the two-dimensional array of light detecting elements **166** is oriented so that the x'-axis is parallel to the x-axis of the illuminating display **116** as shown in **FIGS. 2** and **3,** the two-dimensional array may be oriented at any suitable angle in other embodiments.

Any suitable light detector **160** can be used. Some examples of suitable light detectors **160** having two-dimensional arrays of light detecting elements **166** include a charge coupled device (CCD) array, a CMOS imaging sensor array, an avalanche photo-diode (APD) array, a photo-diode (PD) array, and a photomultiplier tubes (PMT) array. These light detectors **160** and others are commercially available. Also, the light detector **160** can be a monochromatic detector or a color detector (e.g., RGB detector).

The light detecting elements **166** may be of any suitable size (e.g., 1-10 microns) and any suitable shape (e.g., circular, rectangular, square, etc.). For example, a CMOS or CCD light detecting element **166** may be 1-10 microns and an APD or PMT light detecting element **166** may be as large as 1-4 mm.

Due to the scattering angle of light **118** passing through a specimen **150** being imaged, projection image quality can be degraded if the specimen **150** is located away from the sensing surface **162** of the light detector **160**. In embodiments, the light detector **160** does not have a color filter and microlens layer in order to decrease the acceptance angle of each light detecting element and the distance between the object **152** and the sensing surface **120** (i.e. the active sensing layer). If the light detector **160** (e.g., a CMOS imaging sensor chip) was prefabricated with a color filter and a microlens layer, these components may be removed to decrease the acceptance angle of each pixel and the distance between the object **152** and the surface layer.

In embodiments, the transparent layer **165** may be placed, during fabrication, on the light detector **160**. Semiconductor and/or micro/nanofabrication procedures may be used to place the transparent layer **165** on the light detector **160**. In some cases, the transparent layer **165** may be placed on the light detector **160** after the color filter and microlens layer have been removed. In one case, the color filter and microlens layer may be removed by treating the pre-fabricated imaging sensor under oxygen plasma for a period of time (e.g., 10 minutes at 80W). The transparent layer **165** may be placed onto the imaging sensor after the removal of the color filter and microlens layer or may be placed on a light detector with the layer. In one case, the transparent layer **165** may be prepared by mixing 1:10 with base and curing agent, then spin coated on a 3 in. silicon wafer followed by baking at 80 degrees C.

Light data can refer to any suitable information related to the one or more projections **170** captured by the light detecting elements **166** of the light detector **160**. For example, light data may include information about the properties of the projection light received such as the intensity(ies) of the light, the wavelength(s) of the light, the frequency or frequencies of the light, the polarization(s) of the light, the phase(s) of the light, the spin angular momentum(s) of the light, and/or other light properties associated with the light received by the light detecting element **166**. Light data may also include the location of the receiving light detecting element(s) **166,** the time that the light was received (sampling time or scanning time), or other information related to the projection **170** received. In embodiments, each light detecting element **166** can generate a signal with light data based on light associated with the projection **170** and received by the light detecting element **166.**

An LR projection image (frame) can refer to a snapshot image sampled (captured) by the light detector **160** at a sampling time occurring during a scanning cycle. In embodiments, the light detector **160** captures an LR projection image at each scanning time. Each LR projection image sampled by the light detector **160** can be used to display a 2D, LR projection image. In embodiments with a color light detector **160,** the LR projection image may be a color image. In embodiments with a monochromatic light detector **160,** the LR projection image may be a black and white image.

Each sequence of sub-pixel shifted LR projection images can refer to $n$ LR projection images sampled at n sampling times where neighboring projection images in time are separated by less than a pixel size (i.e. sub-pixel shift). During a scanning cycle, $n$ LR projection images ($I_1,...,I_n$) may be captured at $n$ sequential sampling times ($t_1,...t_n$). Any

suitable number, *n* (e.g., 1, 3, 5, 10, 100, etc.) of LR projection images may be captured during a scanning cycle. Also, any suitable number (e.g., 1, 3, 5, 10, 100, etc.) of sequences of sub-pixel shifted LR projection images may be captured by the light detector **160** during a scanning cycle. If multiple sequences are captured, the sequences can include different groups of LR projection images or the sequences can overlap sharing one or more LR projection images. In one example, 9 LR projection images ($I_1$, $I_2$, $I_3$, $I_4$, $I_5$, $I_6$, $I_7$, $I_8$, $I_9$) may be captured at 9 sequential sampling times ($I_1$, $t_2$, $t_3$, $t_4$, $t_5$, $t_6$, $t_7$, $t_8$, $t_9$). In an overlapping case of the above example, sequences could be: 1) $I_1$, $I_2$, $I_6$, and $I_8$, and, 2) $I_6$, $I_7$, $I_8$, and $I_9$. In a non-overlapping case, sequences could be: 1) $I_1$, $I_2$, $I_3$, and $I_4$, and 2) $I_5$, $I_6$, $I_7$, and $I_8$. In others examples, a sequence of sub-pixel shifted LR projection images may be based on non-sequential sampling times. For example, 9 LR projection images ($I_1$, $I_2$, $I_3$, $I_4$, $I_5$, $I_6$, $I_7$, $I_8$, $I_9$) may be captured at 9 sequential sampling times ($t_1$, $t_2$, $t_3$, $t_4$, $t_5$, $t_6$, $t_7$, $t_8$, $t_9$) and the sequence of projection images may be ($I_6$, $I_2$, $I_9$, $I_1$).

In embodiments, the light detector **160** may capture an LR projection image at each scanning time during a scanning cycle. For example, a light detector **160** may capture an LR projection image associated with each scanning location in the scanning pattern shown in **FIG. 4(b).** In this example, the light detector **160** may capture a projection image at each scanning time as the light element **117** moves through each row sequentially of the two-dimensional array of scanning locations in the scanning pattern. If scanning locations in each row are associated with sub-pixel shifted projections **170,** the light detector **160** may capture 15 sequences of sub-pixel shifted projection images during the scanning cycle. In this case, each sequence is associated with a row of scanning locations in the scanning pattern.

A motion vector can refer to the translational motion of projection images in a sequence of LR projection images, collectively termed the motion vector of the sequence of LR projection images. The motion vector is based on the amount of shifting of the projection images at a plane. A motion vector of a sequence of sub-pixel shifted LR projection images can be calculated from the associated projection images captured by the light detector **160**. The motion vector may be calculated at any plane of interest. For example, the motion vector can be determined at the plane at the sensing surface **162**. In this example, the motion vector is determined in terms of the local x'-axis and y'-axis at the sensing surface **162** of the light detector **160**. As another example, the motion vector can be calculated at other planes through an object **152** being examined. The planes through the object **152** may be parallel to the plane of the sensing surface **162** in some cases.

In embodiments, an HR image of a specimen **150** can be constructed using a suitable super resolution (SR) algorithm based on data associated with a sequence of sub-pixel shifted LR projection images and a motion vector of the sub-pixel shifted LR projections in the sequence. An example of image resolution obtainable by embodiments of the SPLM system **10** may be about 0.66 micron.

An SR algorithm can refer to an image processing technique that constructs a HR image (e.g., sub-pixel resolution image) from a sequence of sub-pixel shifted LR projection images. Any suitable SR algorithm can be used by embodiments of the SPLM system **10**. An example of a suitable SR algorithm is a shift-and-add pixel SR algorithm. Some examples of suitable SR algorithms can be found in Lange, D., Storment, C. W., Conley, C. A., and Kovacs, G. T. A., "A microfluidic shadow imaging system for the study of the nematode Caenorhabditis elegans in space," Sensors and Actuators B Chemical, Vol. 107, pp. 904-914 (2005) (*"Lange"*), Wei, L., Knoll, T., and Thielecke, H., "On-chip integrated lensless microscopy module for optical monitoring of adherent growing mammalian cells," Engineering in Medicine and Biology Society (EMBC), 2010 Annual International Conference of the IEEE, pp. 1012-1015 (2010) (*"Wei"*), Milanfar, P., "Super-Resolution Imaging", CRC Press, (2010) (*"Milanfar"*), and Hardie, R., Barnard, K., and Armstrong, E., "Joint MAP registration and high-resolution image estimation using a sequence of undersampled images," IEEE Transactions on Image Processing 6, pp. 1621-1633 (1997) (*"Hardie"*), which are hereby incorporated by reference in their entirety for all purposes. An example of a suitable super algorithm is the general pixel super resolution model and solution described in Section II.

The SPLM system **10** of **FIG. 1** also includes a host computer **200** communicatively coupled to the light detector **160**. The host computer **200** comprises a second processor **210** (e.g., microprocessor), a second CRM **220,** and an image display **230**. The image display **230** and the second CRM **220** are communicatively coupled to the second processor **210**. Alternatively, the host computer **200** can be a separate device from the SPLM system **10**. The host computer **200** can be any suitable computing device (e.g., smartphone, laptop, tablet, etc.)

The second processor **230** executes code stored on the second CRM **220** to perform some of the functions of SPLM **10** such as, for example: interpreting data from one or more sequences of sub-pixel shifted LR projection images captured and communicated in one or more signals from the light detector **160,** determining a motion vector of a sequence of sub-pixel shifted projections, constructing a 2D HR image from data associated with a sequence of sub-pixel shifted LR projection images, constructing a 3D HR image from data associated with a sequence of sub-pixel shifted LR projection images, displaying one or more HR images on the image display **230,** etc.

The second processor **210** can receive one or more signals with light data and other data from the light detector **160**. For example, the processor **210** can receive one or more signals with light data associated with one or more sequences of sub-pixel shifted LR projection images sampled at a corresponding sequence of n scanning times ($t_1$, $t_2$, $t_3$, ...$t_n$). The second processor **210** can also determine a motion vector based on the sequence of sub-pixel shifted LR projection images. The second processor **210** can also construct HR images and associated image data based the determined motion vector and data associated with at least one sequence of sub-pixel shifted LR projection images. In some cases, the constructed HR image of the object **150** is a black and white 2D/3D image. In other cases, the constructed HR image of the object **150** is a color 2D/3D image.

In one embodiment, a HR color image can be generated by using different wavelengths of illumination **118** at different sampling times to generate a multiple sequences of sub-pixel shifted LR projection images at a light detector **160.** Each sequence is associated with a different wavelength. The second processor **210** can generate HR color image and associated image data based on the different sequences associated with different wavelengths. For example, three wavelengths of light (e.g., wavelengths associated with red, green, blue (RGB) colors) can be sequentially generated by a light element **117** to generate three sequences of sub-pixel shifted projection images associated with three wavelengths of light. The processor **210** can combine the image data from the sequences associated with the different wavelengths to generate multi-wavelength or color image data (e.g., RGB color image data). The multi-wavelength or color HR image data can be used to generate a multi-wavelength or color HR image on the image display **230.**

The second CRM (e.g., memory) **220** can store code for performing some functions of the SPLM system **10.** The code is executable by the second processor **210.** For example, the second CRM **220** of embodiments may include: a) code with a SR algorithm, b) code with a tomography algorithm, c) code for interpreting light data received in one or more signals from the light detector **160,** d) code for generating a 3D HR image, e) code for constructing a color sub-pixel image, f) code for displaying SR two-dimensional and/or three-dimensional images, g) and/or any other suitable code for performing functions of the SPLM system **10.** The second CRM **220** may also include code for performing any of the signal processing or other software-related functions that may be created by those of ordinary skill in the art. The code may be in any suitable programming language including C, C++, Pascal, etc.

The SPLM system **10** also includes an image display **230** communicatively to the processor **210** to receive data and provide output such as HR images to a user of the SPLM system **10.** Any suitable display may be used. For example, the image display **230** may be a color display or a black and white display. In addition, the image display **230** may be a two-dimensional display or a three-dimensional display. In one embodiment, the image display **230** may be capable of displaying multiple views of an object **150.**

Modifications, additions, or omissions may be made to SPLM system **10** or the SPLM device **100** without departing from the scope of the disclosure. In addition, the components of SPLM **10** or SPLM device **100** may be integrated or separated according to particular needs. For example, the second processor **210** may be integrated into the light detector **160** so that the light detector **160** performs one or more of the functions of the second processor **160** in some embodiments. As another example, the second processor **160,** second CRM **220,** and image display **230** may be components of a computer separate from the SPLM system **10** and in communication with the SPLM system **10.** As another example, the second processor **160,** second CRM **220,** and/or image display **230** may be integrated into parts of the SPLM device **100.** For example, the image display **230** may be part of the illumination display **116,** the first processor **112** and second processor **210** may be integrated into a single processor, and/or the first CRM **114** and second CRM **220** may be integrated into a single CRM.

### II. Imaging Method used by SPLM and e-Petri

#### A. Principle and Resolution

Nyquist criterion considerations dictate that the raw projection (shadow) image resolution from an image sensor (e.g., CMOS image sensor) may be no better than two times the pixel size. The SPLM and e-Petri systems of embodiments of embodiments use a high sampling rate in the time domain to offset the sub-Nyquist rate sampling in the spatial domain of the projection images, combining work done in super resolution imaging with advanced sensor (e.g., CMOS) technology to produce a low cost, HR microscopy device with significant resolution enhancement.

The SPLM and e-Petri systems of embodiments include a thin transparent layer **165** between the light detector **160** and the object **152** being imaged. The transparent layer **165** separates the objects **152** (e.g., cells) from the actual light sensitive region of the light detector **160** (e.g., sensor chip). During scanning, the scanning illumination source **110** shifts/scans or otherwise moves a light element **117** to different positions to provide illumination **118** (e.g., incoherent light) from different illumination angles above the specimen **150.** The light detector **160** acquires one or more sequences of LR projection images. With the movement of the illumination **118,** the projection image shifts across the light detecting elements **166** (e.g., sensor pixels), as shown in **FIG. 3.** The amount of shadow shift is proportional to the thickness of the transparent layer **165** and the tilt/shift extent of the light element **117.** As long as the shift between each raw projection image in each sequence of LR projection images is smaller than the physical size of the light detecting element (e.g., pixel size), the information from multiple sub-pixel-shifted LR shadow images can be used to create a single HR (sub-pixel resolution) image with a suitable super-resolution algorithm.

In previous super resolution microscanning systems, a specimen was mounted to a stage and the stage was scanned in sub-pixel increments. In this prior approach, the position of the stage needed to be accurately controlled in precise sub-pixel steps. Typically, controllers and actuators were used to control the required precise position of the stage. High precision meant high cost of setup and alignment was required by these systems.

In a previous super resolution optofluidic system, optofluidics are incorporated to generate HR images from LR projection images in a high throughput manner. In this system, an optofluidic sample-delivery scheme is employed to capture a sequence of images of the sample translating across a CMOS imaging sensor (pixel) array. The system uses super-resolution processing techniques to achieve HR images from the sequences of LR projection images as described in U.S. Patent Application No. 13/069,651, which is hereby incorporated by reference in its entirety for all purposes, and described in *Zheng*. This method relies upon capturing a sequence of LR projection images of objects (e.g., cells) as they flow through a fluid channel, across a light detector (e.g., CMOS imaging sensor array). However, imaging in this system requires fluidic (e.g., microfluidic) flow of specimens across a scanning area. Adherent, confluent, or contiguously arranged specimens are simply incompatible with imaging in a fluidic mode. For example, in order to make an object flow across the fluid channel, an object cannot attach to the surface of image pixel (i.e. there is distance between the object and the image pixel). Such a distance results in a blurry image of the object. In addition, the field of view can be limited by the geometry of the fluid channel.

The SPLM and e-Petri systems and devices use a scanning illumination source **110** to position a light element **117** over the specimen **150**. In this approach, there may be no need for precise alignment. The scanning illumination source **110** is located at a larger distance from the sensing surface **162** than the object **152**. Thus, shifts of the light element **117** correspond to smaller shifts of the projections **170** on the sensing surface **162**. The scanning illumination source **110** can control the sub-pixel shifts of the projections at the sensing surface **162** directly with more controllable larger shifts of the light element **117** at the scanning illumination source **110**. In this way, the scanning illumination source **110** can easily and accurately keep the projection shifts at sub-pixel values than previous systems such as microscanning systems, optofluidic systems, etc. Moreover, without the need of mechanical scanning or microfluidic flow, the speed of scanning can be much faster. The scanning illumination source **110** can scan light at speeds up to the range of kHz. This is two orders of magnitude higher than prior mechanical microscanning schemes. In addition, the cost of the devices can be much lower since it uses a scanning illumination source **110** such as a LED screen or LED matrix.

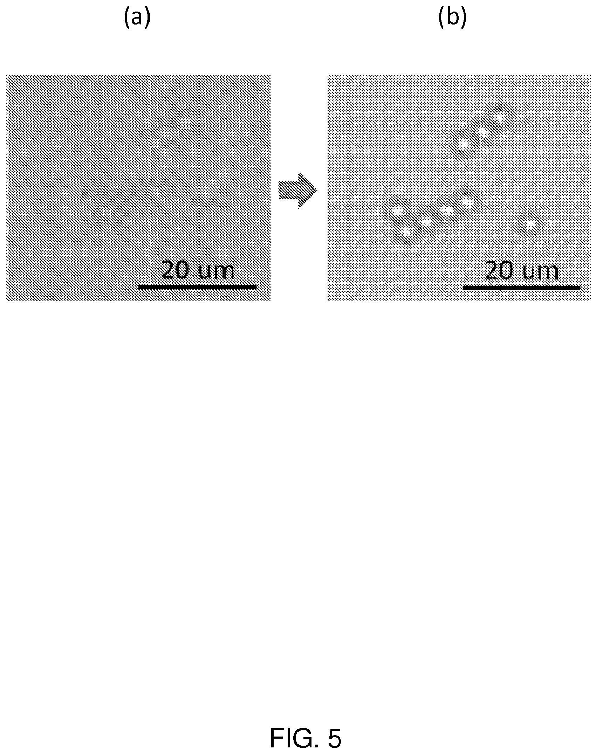

**FIG. 5(a)** is a projection image captured by a light detector **160** of an SPLM system **10** or an e-Petri system at a single sampling time, according to embodiments of the invention. In this example, the specimen **150** being imaged includes a group of $3\mu m$ microspheres. **FIG. 5(b)** is an HR image reconstructed by the SPLM system **10** or the e-Petri system, according to embodiments of the invention. The system reconstructed the HR image based on data from a sequence of sub-pixel shifted LR projection images including the LR projection image shown in **FIG. 5(a).**

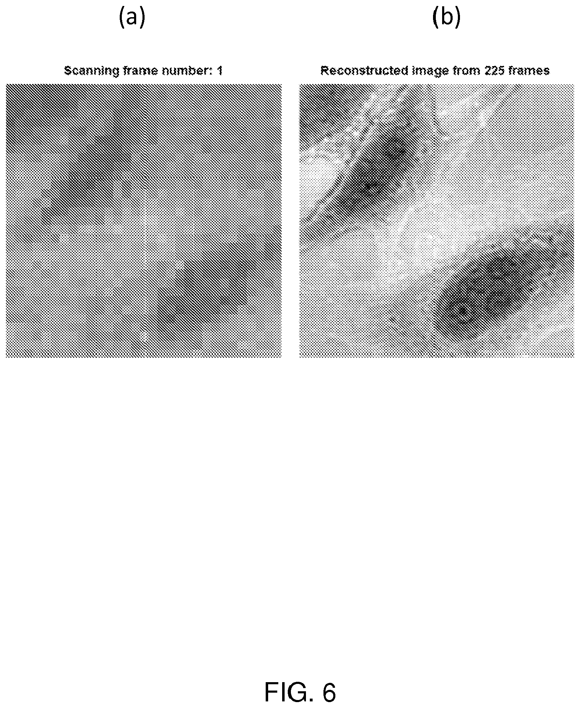

**FIG. 6(a)** is an LR projection image of a portion of a HeLa cell specimen captured by a light detector **160** of an SPLM system **10** at a single sampling time, according to embodiments of the invention. **FIG. 6(b)** is an HR image reconstructed by the SPLM system **10** or the e-Petri system, according to embodiments of the invention. The SPLM system **10** or the e-Petri system reconstructed the HR image based on data from a sequence of 225 sub-pixel shifted LR projection images including the LR projection image shown in **FIG. 6(a).**

**FIG. 7(a)** is a large field of view color HR image of a confluent HeLa cell specimen **150** constructed by an SPLM system **10** or an e-Petri system, according to embodiments of the invention. The specimen **150** was stained with Giemsa. During reconstruction, each pixel at the LR projection image level ($2.2\mu m$) was enhanced into a 13x13 pixel block in the reconstructed HR image. The color HR image contains about $8.45 \times 10^8$ pixels. The sensing area **164** (image area) was 6 mm x 4 mm. A 15 x 15 array of scanning locations for each color illumination **118** was used. **FIG. 7(b1)** is an LR projection image from a small region of **FIG. 7(a)** and **FIG. 7(c1)** is an LR projection image from a small region of **FIG. 7(b1),** captured by the light detector **160** of an SPLM system **10** or an e-Petri system, according to embodiments of the invention. **FIG. 7(b2)** is a reconstructed HR image from the same small region of **FIG. 7(a)** and **FIG. 7(c2)** is a reconstructed HR image from a small region of **FIG. 7(b2)** constructed by an SPLM system **10** or an e-Petri system, according to embodiments of the invention. **FIG. 7(d)** is a conventional microscopy image of similar cells using a microscope with 40X, NA = 0.66 objective lens. From the reconstructed HR images in **FIGS. 7(b2)** and **7(c2),** organelles within the HeLa cell can be discerned such as multiple nuclear granules (indicated by red arrows), and the nucleus. The reconstructed HR images also closely corresponded to conventional microscopy images acquired from similar cells.

**FIG. 8(a)** is an HR image of a specimen **150** having 500 nm microspheres (Polysciences) as constructed by an SPLM system **10** or an e-Petri system, according to embodiments of the invention. The imaging process used to construct the HR image was identical the one used to construct the HR images in **FIG. 7.** For a single 500 nm microsphere, the bright center of the microsphere was clearly resolved as shown in **FIG. 8(a),** with the full-width at half maximum (FWHM) of 690 nm. **FIG. 8(b)** is an HR image of a magnified small feature of the stained HeLa cell specimen **150** of **FIG. 7** as constructed by an SPLM system **10** or an e-Petri system, according to embodiments of the invention.

Since microscopy resolution may be defined in some cases based on a given microscope's ability to resolve two closely spaced feature points, the case of two closely spaced microspheres can be analyzed to establish a resolution of an SPLM system **10** or an e-Petri system of embodiments. **FIG. 8(a)** shows the reconstructed images of two closely packed 500 nm microspheres with center-to-center distance of 660 nm. The data trace in **FIG. 8(a)** shows a valley between the two peaks and, thus, establishes that the resolution may be 660 nm or better in some embodiments. To further verify this point, **FIG. 8(b)** shows the magnified small feature of the stained HeLa cell specimen of **FIG. 7** and the FWHM of this feature was estimated to be about 710 nm.

## B. Concept

In embodiments such as the example shown in **FIG. 1,** the specimen **150** is placed on a specimen surface **140** located slightly above the active sensing area **164** of the sensing surface **162**. The illuminating display **116** (e.g., a monochromatic or color LCD) of a scanning illumination device **110** (e.g., mobile communication device) is located at a distance, d, (e.g., about 5-10 mm) away from the sensing surface **162**. A light element **117** (e.g., one or more light emitting components (e.g., pixels)) of the illuminating display **117** provide illumination **118** (e.g., incoherent light). The illumination **118** generates a projection **170** (shadow) on the light detector **162**. The light detector **160** can capture an LR projection image. This LR projection image is the best achievable given the size limitations (e.g., pixel size limitations) of the light detecting elements **166** (as shown in **FIG. 2),** but "low resolution" in that features sizes of the specimen **150** may be much smaller than the size (e.g., pixel size) of the light detecting element **166**.

In embodiments, to improve the resolution, a sequence of sub-pixel shifted LR projection images is captured, for which light emitting components (e.g., pixels) on the illuminating display **116** (e.g., an LCD) provide illumination **118**. Each of these LR projection images is a sub-pixel shifted projection image of the specimen **150**. The sequence of sub-pixel shifted LR projection images can be based on the scanning locations of the light element **117** during a scanning cycle. For a known sub-pixel displacement, these sub-pixel shifted LR projection images can be used to create a HR (e.g., sub-pixel resolution) 2D image using pixel super-resolution techniques. This HR image can further be deconvolved with the point spread function of the pixel and optical system to recover a focused image of the specimen. SPLM system **10** e-Petri systems made possible precise scanning of the light element **117** in conjunction with pixel super-resolution image processing techniques.

Furthermore, this concept of imaging can be extended beyond two dimensions. Computed tomography using different incident angles of light to generate multiple projections can be used to create a three dimensional reconstruction of the object. An example of using tomography to generate a 3D image can be found in Miao, J. R. R. Qin, Tourovskaia, Anna, Meyer, Michael G., Neumann, Thomas, Nelson, Alan C., and Seibel, Eric J., "Dual-modal three-dimensional imaging of single cells with isometric high resolution using an optical projection tomography microscope," J. Biomed., Opt., Vol. 14, 064034 (Dec. 21, 2009), which is hereby incorporated by reference in its entirety for all purposes. In our scheme, the shifting light element **117** (e.g., sets of pixels) across the illuminating display **116** (e.g. LCD) can provide different angles of incident light necessary for 3D imaging.

## C. Operating Principles

In one operation, the specimen **150** is placed slightly (e.g., in the range of several hundred nanometers to microns) above the sensing surface **162** (e.g., outer surface) of the light detector **160** (e.g., CMOS imaging sensor array). Individuals or small sets of light emitting components **166** (e.g., pixels) on the illuminating display (e.g., an LCD) are illuminated in succession to illuminate the specimen **150** at distance (e.g. 5mm- 10mm) away, allowing the light detector **160** to record one or more sequences of sub-pixel-shifted LR projection images, which are "pixilated." One or more sequences of sub-pixel shifted LR projection images can be processed using super resolution techniques to combine many LR projection images to create a smaller sequence of HR images. An example of a super resolution technique can be found in Richard, L.M., Shultz, R., Stevenson, Robert L., "Subpixel motion estimation for superresolution image sequence enhancement," Journal of Visual Communication and Image Representation (1998), which is hereby incorporated by reference in its entirety for all purposes.

Super resolution or super resolution techniques refer to a general name for the many promising new techniques for imaging processing that can involve creating a single HR image from a sequence of lower resolution images. Some super resolution techniques can be found in Park, Sung Cheol, Park, and Min Kyu, Kang, Moon Gi, "Super-resolution image reconstruction: a technical overview," IEEE Signal Processing Magazine, pp. 21-36 (May 2003) ("*Park*")*,* which is hereby incorporated by reference in its entirety for all purposes. The general principle involves taking a sequence of LR projection images in which the target is sampled at below the Nyquist rate, but for which subsequent frames involve a slight sub-pixel translational shift. This principle can be found in Russell, K. J. B., Hardie, C., Bognar, John G., Armstrong, and Ernest E., Watson, Edward A., "High resolution image reconstruction from a sequence of rotated and translated frames and its application to an infrared imaging system," Optical Engineering (1997), which is hereby incorporated by reference in its entirety for all purposes. If this translational shift is known, then a system of matrix equations can be established from the lower resolution sequence to solve for sub-pixel values to create a single HR image. In general, the original HR image can theoretically be recovered even from a significantly decimated, blurred, translated, and rotated lower resolution image sequence; resolution is limited only by the diffraction limit and noise, as described in *Park*.

### D. Flowchart of Exemplary Method of Operation

**FIG. 9** is a flow chart of an exemplary operation of an SPLM device **100** or an e-Petri device, according to embodiments of the invention. The SPLM device **100** and e-Petri device include a scanning illumination source **110** for shifting or otherwise positioning a light element **117** to provide illumination from different illumination angles to an object **152** being imaged. Although imaging of an object **152** is described in this section, the method can be used to image a specimen **150** having any suitable number of objects **152**. The SPLM device **100** and the e-Petri device also include a specimen surface **140,** a light detector **160** having a sensing surface **162,** a thin transparent layer **165** between the sensing surface **162** and the specimen surface **140,** and a processor (first processor **112** and/or second processor **210).** The scanning illumination source **110** is located at a distance, d, from the sensing surface **162.** This exemplary operation includes an imaging run having a single scanning (illumination) cycle. Other embodiments may have an imaging run with multiple scanning (illumination) cycles.

In **step 310,** the object **152** is placed onto the specimen surface **140** of the SPLM **100** or the e-Petri device. The object **152** may be located proximal a sensing area **164** of the sensing surface **162** at the active layer of the light detector **160.**

In **step 320,** the processor determines a scanning pattern. An example of a scanning pattern is shown in **FIGS. 4(a)** and **4(b).** The scanning pattern may include scanning locations at different times during a scanning cycle and properties (e.g., wavelength(s) of light used, the size and shape of the light element, the intensity(ies) of the light element, etc.) of the light element **117** at different scanning locations, the amount of sub-pixel shift desired between subsequent LR projection images, the total number of LR projection images desired in the scan and/or in the sequence of LR projection images, the total number of HR images desired in an imaging run, and other suitable information related to the operation of the SPLM system **10** or e-Petri system. The processor may retrieve a predetermined scanning pattern from the CRM (first CRM **114** or second CRM **220)** or the processor may determine a scanning pattern based on input from a user of the SPLM system **10** or the e-Petri system. For example, the user may provide information such as properties of the light element, the amount of sub-pixel shift desired between subsequent LR projection images, the total number of HR images desired, and other suitable input.

The scanning locations in the scanning pattern can be determined to generate a sequence of sub-pixel shifted projections at the sensing surface **162.** The shift of a projection **170** is proportional to the thickness of the transparent layer **165** and the tilt/shift extent (i.e. distance or illumination angle change between neighboring scanning locations). The amount of translation of the light element **170** between neighboring scanning positions that will result in sub-pixel shifting of the projections **170** can be determined based on the thickness of the transparent layer **165** and the required sub-pixel shift value. The scanning locations in the scanning pattern can be based on the amount of translation of the light element **170** between neighboring scanning positions.

In **step 330,** the scanning illumination source **110** scans or otherwise positions the light element **117** and modifies the properties of the light element **117** according to the scanning pattern. In one embodiment, the scanning illumination source **110** (e.g., smartphone) has an illuminating display **116** in the form of an LCD. In this example, the scanning pattern may include a two-dimensional array of scanning positions and the scanning times associated with the scanning positions. During scanning the light element **117** may be a set of light emitting components (e.g. pixels) in the LCD which are sequentially illuminated to shift the light element **117** through each row/column of the two-dimensional array of scanning locations. The properties of the light element **117** may vary at different locations. For example, the size (number of light emitting components) of the light element **117** may vary to maintain approximately the same intensity level at a location at the sensing surface **162.**

In one embodiment, the light element **117** can provide illumination **118** of $n$ different wavelengths $\lambda_1, ..., \lambda_n$ at different times during a scanning cycle to obtain a sequence of projection images for each wavelength. Any suitable number of wavelengths may be used (e.g., n =1, 2, 3, 4, 5,..., 20). In one embodiment, the light element **117** may provide illumination **118** of three wavelengths $\lambda_1$, $\lambda_2$, and $\lambda_3$ corresponding to red, green, blue colors at different sampling times. In some cases, the illumination **118** from one scanning location to a neighboring scanning location may have different wavelengths. In other cases, the illumination **118** may have a first wavelength during a first series of scanning positions, and then provide illumination **118** of a second wavelength during a second series of scanning positions, and so forth until n sequences of projection images corresponding to n different wavelengths have been captured.

In **step 340,** the light detector **160** captures one or more sequences of sub-pixel shifted LR projection images of the object **152** as the light element **117** translates to different scanning positions. The light detector **160** captures an LR projection image for each scanning location. Any suitable number of images (e.g., 3, 5, 10, 50, 100, etc.) may be in each sequence. In one example, the scanning locations may be in the form of a two-dimensional array of scanning positions, where each row/column of scanning positions can generate a row of sub-pixel shifted projections **170.** In this example, a sequence of sub-pixel LR projection images may be captured as the light element **117** shifts across each row/column in the two-dimensional array of scanning positions.

In **step 350,** the processor uses a suitable method to determine the motion vector of the projections **170** at the sensing surface **162**. In some cases, the processor may also determine motion vectors of the projections **170** at other parallel planes through the object **152**. Any suitable method of determining a motion vector can be used. In one example, the motion vector of the projections at the sensing surface **162** may be determined based on the distance between neighboring scanning positions and the thickness of the transparent layer **165**. In another example, the motion vector of the projections at planes parallel to the sensing surface **162** may be determined based on the distance between neighboring scanning positions and the thickness of the transparent layer **165** and the distance between the plane and the sensing surface **162.**

In **step 360,** the processor uses an appropriate SR algorithm to construct a HR image of the object **152** from data from a sequence of sub-pixel shifted LR projection images and corresponding motion vector(s). For example, the processor can construct a 2D image of the object **152** at a plane through the object **152** by using a motion vector at that plane. In one example, the processor can generate a 3D HR image by stacking the 2D HR images constructed based on motion vectors at different planes. If the light detector **160** is a monochromatic light detector, the HR image will be a monochromatic HR image (black and white HR image). If the light detector 160 is a color light detector (e.g., a color CMOS imaging sensor), the image resulting from this reconstruction is a color image.

In one embodiment, a shift-and-add SR algorithm may be used to construct an HR image with data from a sequence of sub-pixel shifted LR projection images. In this embodiment, an HR image grid is formed with an enhancement factor of n, where each n-by-n pixel area of the HR image grid corresponds to a 1-by-1 pixel area of the LR frame grid. Then, the HR image grid is filled with the corresponding pixel values from the sequence of sub-pixel shifted LR projection images. The mapping of the pixels within the n-by-n grid is determined from the known, estimated sub-pixel shift of each image from the motion vector determined. In other words, each LR projection image is shifted by the relative sub-pixel shift of the object **152** from its original position and then added together to form a HR image. Finally, deblurring using the wiener deconvolution method may be used to remove blurring and noise in the final HR image.

In one embodiment, the light element **117** can provide illumination **118** of n different wavelengths $\lambda_1$, ..., $\lambda_n$ at different times during a scanning cycle to obtain a sequence of projection images for each wavelength. In this embodiment, the processor can use an appropriate SR algorithm to reconstruct an HR image for each wavelength or color based on each sequence of sub-pixel shifted LR projection images and the motion vector. The SPLM device **100** or e-Petri device can combine the HR images of different wavelengths or colors to obtain a computed color HR image. For example, an SPLM device **100** or e-Petri device using RGB illumination from can be used to construct a computed color (RGB) HR image.

In **step 370,** the processor can display one or more HR images to a suitable image display **230** (e.g., two-dimensional display (color or monochromatic), three-dimensional display (color or monochromatic)). Any suitable image generated by the SPLM device **10** or e-Petri device can be displayed. Some examples of suitable images include: LR projection images, 2D black and white HR images, 2D color HR images, 3D black and white HR images, and/or 3D color HR images.

## E. A Super Resolution Model and Solution

Embodiments of the SPLM system **10** and the e-Petri system use a SR algorithm to reconstruct an HR image. One example of a SR algorithm is the general pixel super resolution model and solution described in this Section. This general pixel super resolution model and solution has a simple, fast and non-iterative method that preserves the estimation optimality in the Maximum-Likelihood sense. Some details of this super-resolution model and solution can be found in Hardie, Elad, M., and Hel-Or, Y., "A fast super-resolution reconstruction algorithm for pure translational motion and common space-invariant blur," IEEE Transactions on Image Processing, Vol. 10, pp. 1187-1193 (2001) ("*Elad*"), Farsiu, Sina, et al., Fast and robust multiframe super resolution," IEEE Trans Image Process, vol. 13, pp. 1327-1344 (2004), and Farsiu S, et al., "Multiframe demosaicing and super-resolution of color images," IEEE Trans Image Process, vol. 15, pp. 141-159 (2006), which are hereby incorporated by reference in their entirety for all purposes.

In an scanning cycle, a sequence of *N* captured LR projection images, $Y_k$ ($k = 1, 2 ... N$) can be used to reconstruct an improved HR image, X. The images may be represented by lexicographically ordered column vectors. The LR projection image can be modeled by the following equation:

$$Y_k = DHF_k X + V_k \ (k = 1, 2 \cdots N) \qquad \textbf{(Eqn. 1)}$$

The matrix $F_k$ stands for the sub-pixel shift operation for the image X. The matrix *H* is the pixel transfer function of the light detector **160** (e.g., CMOS image sensor). The matrix D stands for the decimation operation, representing the reduction of the number of observed pixels in the measured images. $V_k$ represents Gaussian additive measurement noise with zeros mean and auto-correlation matrix: $W_k = E\{V_k V_k^T\}$

The Maximum-Likelihood estimation of X can be described as the following expression:

$$\hat{X} = ArgMin\left\{\sum_{k=1}^{N}(Y_k - DHF_k X)^T W_k^{-1}(Y_k - DHF_k X)\right\} \qquad \textbf{(Eqn. 2)}$$

And the closed-from solution for $\hat{X}$ is shown to be:

$$\hat{X} = H^{-1} R^{-1} P \qquad \textbf{(Eqn. 3)}$$

where,

$$R = \sum_{k=1}^{N} F_k^T D^T DF_k, P = \sum_{k=1}^{N} F_k^T D^T Y_k$$

$R$ can be a diagonal matrix and the computation complexity of this approach may be: $O(n * \log(n))$.

## F. Different Schemes for the SPLM and e-Petri Systems and Devices

### Scheme 1 -2D Monochromatic Imaging

In a first scheme, SPLM systems **10** or e-Petri systems of embodiments may be designed to generate 2D monochromatic HR images of a specimen **150** using a suitable SR algorithm based on a sequence of LR projection images and a motion vector. For this case, there is only the known translational shift and space invariant point spread function of the system, $H$, which is also known. Hence, more effective and computationally efficient super resolution techniques can be applied, such as the following as proposed in *Elad*. For an original HR image, $X$, of a specimen **150** that is the desired output of the SPLM system **10** or the e-Petri system, a lower resolution image sequence of the sample:

$$Y_k = DHF_k X + V_k \qquad (k = 1, 2 \cdots N) \qquad \textbf{(Eqn. 4)}$$

is obtained, where $F_k$ is the translational shift, $H$ is the point spread function of the optical system, $D_k$ is the downsampling of the original LR projection image and $V_k$ is white noise with auto-correlation: $W_k = E\{V_k V_k^T\}$. Hence, by minimizing the least square error, the computed HR image $\hat{X}$ is obtained from a sequence *of N LR* projection images as follows:

$$\hat{X} = Arg_X Min\left\{\sum_{k=1}^{N}(Y_k - D_k HF_k X)^T W_k^{-1}(Y_k - D_k HF_k X)\right\} \qquad \textbf{(Eqn. 5)}$$

This optimization can be done computationally with iterative methods described in *Elad*. The end result of this optimization can be an in-focus HR image or sequence of HR images of the specimen generated from the original LR projection images captured by the light detector **160**. (e.g., CMOS image sensor).

In embodiments, an SPLM system **10** or an e-Petri system may include an illuminating display **116** in the form of a pixel array (e.g., rectangular pixel array). For example, the illuminating display **116** may be a rectangular pixel array of an LCD. In these embodiments, the sub-pixel shifts between subsequent LR projection images of a sequence may be related by a characteristic sub-pixel spacing, $\alpha$, related to the illumination scanning sequence, the detector array pixel sizes, and the distances between the specimen **150** and source/detector. The distance between the specimen **150** and the illumination source **110** may be the distance, d, between the top of the transparent layer **140** and the display surface **119.** The distance between the specimen **150** and the light detector **160** may be the thickness of the transparent layer **165.**

For an SPLM system **10** or e-Petri system having an illumination display **116** with a display surface **119** parallel to the sensing surface **162** of the light detector **160** and the specimen surface **140,** the projection of a point on the plane of the specimen surface **140** onto the detection plane (i.e. plane of the sensing surface **162**) will be shifted in increments related to $sin\ \theta$. The angle, $\theta$ is the angle of a line from the light element **117** (e.g., the center of a set of illuminated pixels on an LCD) to the point of the specimen **150,** with respect to the specimen surface plane normal vector. For small angles, the sub-pixel shifts can be approximated as equal and the solution for the motion vector of the LR sequence can be found by a simple one-dimensional optimization of, $\alpha$. In cases where the illumination (LCD) plane and detector planes are parallel, the sub-pixel shifts should be 'exactly' equal.

### Scheme 2 -2D Color Imaging

In a second scheme, an SPLM system **10** or e-Petri system of embodiments may be designed to generate 2D color HR images of a specimen **150** using a suitable SR algorithm based on a sequence of LR color projection images captured by a color light detector **160.** In this scheme, the SPLM system **10** or the e-Petri system includes a color light detector **112** (e.g., a color CMOS sensor) that can capture a sequence of sub-pixel shifted color LR projection images. The processor **210** can generate one or more SR color images using a suitable color super resolution technique with the sequence of sub-pixel shifted color LR projection images. The simplest technique involves using a monochromatic super resolution technique on each of the color components independently. In another example, a more complicated super resolution technique can be used that involves transforming to a different color space, such as the one found in Farsiu, Sina, et al., "Advances and challenges in super-resolution," Wiley Periodicals (2004), which is hereby incorporated by reference in its entirely for all purposes.

### Scheme 3 -2D Computed Color Imaging

In a third scheme, an SPLM system **10** or e-Petri system of embodiments may be designed to generate 2D color HR images of a specimen **150** using a suitable SR algorithm based on multiple sequences of LR frames, each sequence associated with a different wavelength or color of illumination **118.** The SPLM system **10** or e-Petri system can construct a 2D color HR image based on each sequence associated with a different wavelength/color. The SPLM system **10** can combine the 2D color HR images associated with the different wavelengths to create a 2D multi-color HR image of the specimen **150.** The SPLM system **10** or e-Petri system of these embodiments includes a scanning illumination source **100** with a color illumination display **116** (e.g., color LCD) or another device that can generate color illumination **118.** Any suitable wavelengths and number of wavelengths may be used. In one example, wavelengths of light may be chosen that cover the widest viewable color range. In some cases, separate scans using different wavelengths/colors can be used to capture separate RGB sequences of projection images. In other cases, the light element **117** may sequentially alternate between the different wavelengths/colors in a single scan.

In one embodiment, the SPLM system **10** or e-Petri system may include a scanning illumination source **100** having a RGB illumination display **116** (e.g., a RGB LCD). In this embodiment, separate red, green, and blue (RBB) scans can be used to capture separate RGB sequences of LR projection images (i.e. red sequence, green sequence, and blue sequence). The SPLM system **10** or e-Petri system of this embodiment can generate an HR RGB image based each sequence. The SPLM system **10** or e-Petri system can combine the 2D color HR images based on each sequence to generate a RGB image.

### Scheme 4 -3D Imaging with 3D display

In a fourth scheme, an SPLM system **10** or e-Petri system of embodiments may be designed for 3D imaging on a 3D display **230.** In this scheme, the SPLM system **10** or e-Petri system can generate n 2D HR images at n different incidence angles to generate different views of the object **152** based on the different locations of the light element **117.**

In this scheme, the scanning illumination source **110** scans the light element **117** to locations that generate illumination **118** from illumination angles in a range around each of the n different incidence angles of interest. For example, if a view of the object **152** from 30 is desired, the scanning illumination source **110** may scan the light element **117** to generate illumination **118** from illumination angles in the range of 30 +/- 2 degrees in X/Y. As another example, if a view of the object **152** from -30 degrees is desired, the scanning illumination source **110** may scan the light element **117** to generate illumination **118** from illumination angles in the range of -30 +/- 2 degrees in X/Y. The "angular" scan range for a single HR image may be constant and small (4 degrees in this example) relative to the large angle displacements used to get different views for 3D imaging. Each of the HR images is still obtained from reconstructing from an LR projection image sequence, captured by scanning the illumination, but at a much larger angle away.

The 2D HR images from different incidence angles can be combined and displayed on a 3D display **230** (e.g., 3D monitor), or as a rotating gif or video file. This can be achieved by using different regions of the illumination LCD to generate high resolution projection images of a sample, but from different angles.

In imaging schemes where a view at a plane parallel to the sensing surface may be desired, the scanning illumination source **110** may scan the light element **117** to locations that generate illumination **118** from illumination angles in a range around normal to the sensing surface. For example, the scanning illumination source **110** may scan the light element **117** to generate illumination **118** from illumination angles in the range of +/- 2 degrees in X/Y.

**Scheme 5 -3D Focusing**

In a fifth scheme, an SPLM system **10** or e-Petri system of embodiments may be designed to "focus" 2D HR images at different planes of interest through the specimen **150**. The SPLM system **10** or e-Petri system can also stack the "focused" 2D HR images at different planes to generate a 3D HR image. For a three-dimensional specimen, the SPLM system **10** or e-Petri system can construct HR images from sequences of sub-pixel shifted LR projection images based on different motion vectors associated with different sub-pixel shifts in order to achieve "focusing" at different planes within the three-dimensional sample.

Under this scheme, the SPLM system **10** or e-Petri system can construct each focused 2D image at a plane based on a captured sequence of sub-pixel shifted LR projection images and the determined motion vector at the plane. For example, the SPLM system **10** or e-Petri system may create a 2D HD image of a slice of a specimen **150** at a plane. In this example, the SPLM system **10** or e-Petri system determines the motion vector of the LR projection images at that plane. The SPLM system **10** or e-Petri system constructs the focused 2D HD image based on the determined motion vector at the plane of interest and a sequence of sub-pixel shifted LR projection images captured by the light detector **160**. The SPLM system **10** or e-Petri system can also refocus at multiple planes by constructing HR images using multiple motion vectors and the same sequence of sub-pixel shifted LR projection images.

Since the quality of the focus of the reconstructed image depends on the correct estimation of the sub-pixel shifts of the LR projection images, and these sub-pixel shifts depend on the distance of the specimen **150** between the light detector **160** and the illumination planes, using different sub-pixel shifts (i.e. motion vectors) in the reconstruction step can allow for refocusing to specific specimen planes above the light detector **160**. This effectively allows for a single, extensive scan sequence of LR projection images to not only provide three dimensional data with projection images from different angles (previous scheme), but also focusing to specific three dimensional planes.

In one embodiment, the scanning illumination device **110** sweep the light element **117** to generate illumination **118** between a wide range of illumination angles in order to generate an extensive scan sequence of LR projection images. **FIG. 10** is a schematic drawing of three projections on a light detector **160** from three wide ranging incidence angles, $\theta_1$, $\theta_2$, and $\theta_3$, according to an embodiment of the invention. Changing the illumination angle of the light **118** from the light element **117** can generates a sequence of three projections associated with different views View 1, View 2, and View 3 of the object **152**. In **FIG. 10,** $\theta_1$ = 0 degrees, and is in the direction of a negative z-axis. The light detector **160** can capture a sequence of LR projection images associated with the shifting projections. The light detector **160** can also capture multiple sequences of sub-pixels LR projection images associated with the illumination sweeping between the wide ranging incidence angles. This extensive scan sequence of LR projection images may be used to generate 3D data with projection images from the different views (previous scheme), but also to provide focusing to specific 3D planes.

**III. E-Petri**

Conceptually, the method of microscopy imaging used by the e-Petri system is simple to understand. Geometrically, a specimen (e.g., cells being cultured) is placed directly on the surface of a light detector (e.g. a CMOS image sensor) or on the surface of a transparent layer lying over the light detector. If an idealized image sensor with a high density grid of infinitesimally small pixels were used and the specimen were located directly on the image sensor surface, the idealized image sensor would be able to collect a shadow (projection) image of the specimen with excellent acuity. Unfortunately, currently available sensor chips have relatively large pixels (e.g., 2.2 microns). This implies that the direct shadow images of microscopic objects collected by conventional sensor chips are intrinsically coarse. Specifically, the raw shadow image resolution would be no better than two times the pixel size (as dictated by Nyquist criterion considerations). To address this, the following approach is taken to improve resolution or, more specifically, to generate a denser grid of smaller 'virtual' pixels.

First, it is noted that there may be a transparent layer (e.g., thin passivation layer) that separates the specimen from the actual light sensitive region of the sensor chip. With this recognition in mind, incoherent illumination is sequentially tilted/shifted above the specimen and a sequence of raw images may be acquired. With the incremental tilt/shift of the illumination, the target specimen's shadow will incrementally shift across the sensor pixels as shown in **FIG. 3**. The amount of shadow shift is proportional to the transparent layer thickness and the tilt/shift of the illumination source. As long as the shadow shift between each raw image frame is smaller than the physical pixel size, the information from sequence of sub-pixel-shifted shadow images can be combined to create a single HR image with a suitable pixel super-resolution algorithm. Some examples of super resolution imaging and super resolution algorithms can be found in Milanfar, P., "Super-Resolution Imaging," CRC Press, (2010), Hardie, R., Barnard, K. & Armstrong, E., "Joint MAP registration and high-resolution image estimation using asequence of undersampled images," IEEE Transactions on Image Processing 6, pp.1621-1633 (1997), Elad, M. & Hel-Or, Y., "A fast super-resolution reconstruction algorithm for pure translational motion and common space-invariant blur," IEEE Transactions on Image Processing 10, pp.1187-1193 (2001), Farsiu, S., Robinson, M., Elad, M. & Milanfar, P., "Fast and robust multiframe super resolution," IEEE Transactions on Image Processing," 13, pp.1327-1344 (2004) ("*Elad*"), Farsiu, S., Robinson, D., Elad, M. & Milanfar, P.,"Advances and challenges in super resolution," International Journal of Imaging Systems and Technology 14, 47-57 (2004), and Farsiu, S., Elad, M. & Milanfar, P., "Multiframe demosaicing and super-resolution of color images," IEEE Transactions on Image Processing 15, pp. 141-159 (2006), which are hereby incorporated by reference in their entirety for all purposes. An example of super resolution model and solution that uses a suitable super resolution algorithm is described in Section IIE.

### A. E-Petri System

**FIG. 11** is a schematic diagram of an e-Petri system **600** having *n* e-Petri devices **610** and an expanded view of one of the e-Petri devices **610,** according to embodiments of the invention, *n* can be any suitable number such as 1, 2, 3, 4, 10, 20, etc. Each e-Petri device **610** of the e-Petri system **600** includes a scanning illumination source **110,** an e-Petri dish **620,** and support **180** for holding the scanning illumination source **110** in a fixed position relative to the light detector **160.** The e-Petri system **600** also has a relay **700** (e.g., multiplexer), an incubator **800** for maintaining a predefined environment, and a host computer **200.** The relay **700** is in electronic communication with the n e-Petri devices **610** to receive data. The host computer **200** is in electronic communication with the relay **700** to receive the data relayed and controlled (e.g., multiplexed) by the relay **700** from the n e-Petri devices **610.** The *n* e-Petri devices **610** are located within a chamber formed by the walls of the incubator **800.** The host computer **200** includes a second processor **210** (shown in FIG. 1), a second CRM **220** (shown in FIG. 1), and an image display **230.** The image display **230** and the second CRM **220** in electronic communication with the second processor **210.** In some cases, there may not be a second processor **210** or second CRM **220** and the functions of those components may be performed by one or more of the first processors **112** or first CRMs **114.**

In **FIG. 11,** the e-Petri devices **610** include a scanning illumination source **110** capable of providing illumination **118** to a specimen **150** from a plurality of illumination angles. The scanning illumination source **110** includes a first processor **112,** a first computer readable medium (CRM) **114,** and an illuminating display **116** (e.g., an LCD, a light emitting diode (LED) display, etc.). In some cases, the first processor **112** and first CRM **114** may be separated from the scanning illumination source **110.** The first processor **112** is in electronic communication with the illuminating display **116** and with the first CRM **114.** The illuminating display **116** includes a light element **117** (e.g., a set of one or more illuminated pixels in an LCD/LED) providing illumination **118** (e.g., incoherent light). The illuminating display **116** also includes a display surface **119.** The display surface **119** is located at a distance, *d,* from the sensing surface **162.** The light element **117** is located at the display surface **119** in the illustrated example. In other embodiments, a transparent layer may be located between the display surface **119** and the light element **117** or may be located outside the display surface **119.** The scanning illumination source **110** also includes an x-axis, a y-axis (not shown), and a z-axis. The x-axis and y-axis lie in a plane at the display surface **119.** The z-axis is orthogonal to this plane. As shown by a dotted line, the light detector **160** may optionally be in electronic communication with the first processor **112** of the scanning illumination source **110** to synchronize operations.

In **FIG. 11,** the e-Petri device **610** also includes an e-Petri dish **620.** The e-Petri dish **620** includes a light detector **160** having a sensing surface **162** and a transparent layer **165** lying over the light detector **160** (e.g., commercially available CMOS image sensor having 2.2 micron pixels). In other cases, the transparent layer **165** may be part of the light detector **160.** The sensing surface **162** includes a sensing area **164** (e.g., 6 mm x 4mm area). The transparent layer **165** includes a specimen surface **140** for receiving a specimen **150** (e.g., cell culture) and other materials (e.g., culture medium). The light detector **160** also has an x'-axis, a y'-axis (not shown), a z'-axis. The x'-axis and y'-axis lie in a plane at the sensing surface **162** of the light detector **160.** The z'-axis is orthogonal to this plane. The e-Petri dish **620** also includes an optional well **170** having a peripheral wall **172** and an optional cover **176.**

In **FIG. 11,** a specimen **150** with five objects **152** (e.g., cells) is located on the specimen surface **140** within the wall **172** of the well **170.** Although five objects **152** are shown, the specimen **150** of other embodiments may have any suitable number (e.g., 1, 2, 10, 100, 1000, etc.) of objects **152** or portions (e.g., cell components) of objects **152.**

The e-Petri system **600** in **FIG. 11** may function as a multimodal on-chip imaging system with a multiplicity of functions, uses, and benefits. This system can be made in a low-cost and compact manner and can incorporate the ability to grow cells or other objects **152** on components of the system itself. For example, the e-Petri dish **620** can include a simple chamber design with a medium affixed to the light detector **160** where objects **152** (e.g. cells) can be cultured and stored. Multiple e-Petri devices **610** can be placed in a single incubator **800,** to allow various functions to be performed, and different types of data to be generated, simultaneously. For example, different e-Petri devices **610** can use light elements **117** with different characteristics (e.g. wavelength, intensity), or filters to allow a user to image objects **152** in both bright-field and fluorescence simultaneously. Multiple arrays of chambers or a fluidic network can also be designed to provide control of chemical and mechanical environment (not shown). Thus, this imaging system may be able to replace imaging systems with conventional Petri dishes and well-plates in biology labs.

**FIG. 12** is a photographic image of an e-Petri system **600** having a single e-Petri device **610,** according to embodiments of the invention. The e-Petri system **600** includes the e-Petri device **610,** an incubator **800,** and a host computer **200** in communication with the e-Petri device **610**. The e-Petri device **610** includes a illumination source **110** in the form of a smartphone, an e-Petri dish **620** and a support **180** holding the illumination source **110** and the e-Petri dish **620**. The e-Petri device **610** is located within the incubator **800** to control the environment. The host computer **200** includes a second processor **210** (shown in FIG. 1), a second CRM **220** (shown in **FIG. 1),** and an image display **230**. The host computer **200** is in electronic communication with the e-Petri device **610** to receive image data to display an image **231** of a specimen **150** (not shown) on the display **230**.

During an exemplary operation of an e-Petri system **600** of **FIGS. 11** and **12,** the illumination source **110** provides illumination **118** from different illumination angles at different illumination times to generate sub-pixel shifted light projections **170** (as shown in **FIG. 3)** of the specimen **150** at the sensing surface **162** of the light detector **160**. The light detector **160** samples (captures) one or more sequences of sub-pixel shifted projection images of the specimen **150** at the different illumination times. The second processor **210** of the host computer **200** may receive data associated with the one or more sequences of sub-pixel shifted projection images. The data is relayed through the relay **700** from the light detector **150**. The second processor **210** may determine motion vector of the projections **170** from one or more sequences of sub-pixel shifted projection images. The second processor **210** can use a suitable super resolution algorithm to generate one or more HR images of the specimen **150** based on the motion vector and data of one or more sequences of sub-pixel shifted projection images. The one or more HR images **230** and other related images **232** can be displayed on the display **230**.

An imaging run of an e-Petri system **600** can refer to a time interval during which operations of the e-Petri system **600** generate a sub-pixel resolution image of a specimen **150** or a portion of a specimen **150** located at one or more of the e-Petri devices **610**. An illumination cycle of an e-Petri device **610** can refer to the time interval during which the scanning illumination source **110** provides illumination **118** from a plurality of illumination angles corresponding to a plurality of illumination times. Any suitable number (e.g., 1, 10, 100, 1000, etc.) of illumination times and corresponding illumination angles can be used. The plurality of illumination angles may be designed to generate a sequence of sub-pixel shifted projections **170** (as shown in FIG. 3) of the specimen **150** on the sensing surface **162** of the light detector **160**. The light detector **160** may sample a light projection **170** at sampling times corresponding to the illumination times. In **FIG. 11,** the light element **117** is shown at a single illumination time during an illumination cycle corresponding to a sampling time. In embodiments, an e-Petri system **600** can be designed to be automated to image (automatedly image) the specimen **150** periodically or otherwise repeatedly over a long term. In these cases, the e-Petri system **600** performs multiple imaging runs over a longer term. For example, the e-Petri system **600** may be designed to perform periodic imaging of a cell culture on an hourly basis over two-weeks.

**FIG. 13(a)** is a photographic image of an e-Petri dish **620** according to an embodiment of the invention, and a quarter for size comparison. The e-Petri dish **620** includes a light detector **160**, a transparent layer **165,** and a well **170**. The light detector **160** is in the form of a commercially available CMOS image sensor chip with a 6mm x 4mm imaging area filled with 2.2 micron pixels. The microlens layer and color filter on the image sensor chip were removed to provide direct access to the image sensor pixels (light detecting elements **166**). The microlens layer and color filter were removed by treating the sensor chip under oxygen plasma for 10 min (80 W). The transparent layer **165** in the form of a thin PDMS layer was prepared by mixing 1:10 with base and curing agent, then spin coated onto the sensing surface **162** followed by baking at 80 °C for 1 hour. The well **170** is a plastic square well comprising a peripheral wall **172** glued at the inner edges to the transparent layer **165** of the light detector **160** with poly-dimethylsiloxane (PDMS). The e-Petri dish **620** also includes a cover **176** hinged to an outer edge of the peripheral wall **172**. In **FIG. 13(a)** a pipette is shown introducing a specimen **150** into the well **170**.

**FIG. 13(b)** is a photographic image of a partially disassembled e-Petri device **610** having the e-Petri dish **620** of **FIG. 13(a),** according to an embodiment of the invention. As shown, the e-Petri device **610** includes a scanning illumination source **110** in the form of a smartphone with an illuminating display **116** in the form of a LED screen. The e-Petri device **610** also includes the e-Petri dish **620** of **FIG. 13(a)**. The e-Petri device **610** also includes a support **180** for holding the scanning illumination source **110** in a fixed position at a distance 2.0 cm away from the light detector **160**. In the illustrated example, the support **180** is made of building blocks that house the image sensor socket board and the smartphone. The parallel alignment between the display surface **119** and the sensing surface **162** may not be a critical consideration. In **FIG. 13(b)**, e-Petri device **610** is shown partially disassembled with the illumination source **110** separate from the other components of the e-Petri device **610**.

**FIG. 13(c)** is a photographic of the assembled e-Petri device **610** of **FIG. 13(b)**, according to an embodiment of the invention. In **FIG. 13(c)**, the illumination source **110** is located in the support **180**. In an imaging run using the e-Petri device **610** of the illustrate example, the illumination source **110** provided illumination **118** from perspective illumination angles ranging from -60 degree to +60 degrees with respect to the sensing surface **162** of the light detector **160**. The entire e-Petri device **610** can be placed in an incubator **800** for automatic long term cell imaging and tracking.

The e-Petri device **610** of embodiments is an on-chip imaging device where a specimen **150** such as cells and a culture medium can be stored and imaged. This device may be suitable to replace conventional microscopy devices having petridishes and well-plates in biology labs. The e-Petri device **610** of embodiments may include any suitable combination of structures and devices for storing and imaging the specimen **150**. In **FIGS. 11, 13(a),** and **13(b)**, the e-Petri device **610** includes an illumination source **110**, an e-Petri dish **620**, and a support **180**.

The e-Petri dish **620** of these embodiments is an on-chip design where the specimen **150** can be stored and in some cases imaged. This on-chip design may be suitable to replace conventional petridishes and well-plates in biology labs. The e-Petri dish **620** of embodiments may include any suitable combination of structures and devices for holding the specimen **150**, maintaining the environment of the specimen **150**, and/or imaging the specimen **150**. For example, an e-Petri dish **620** may include a chamber design (e.g., well **170**), which can be placed on an imaging sensor chip where cells and the culture medium can be stored. The chamber design can include an array of chambers. As another example, an e-Petri dish **620** may also include a fluidic network with one or more fluid channels. The fluidic network can also be designed to provide control of chemical and mechanical environment in the e-Petri dish **620**. As another example, an e-Petri dish **620** may also include one or more dielectric cages for holding the specimen **150** or object(s) **152** in the specimen **150** in an area such as the sensing area **164**. As another example, an e-Petri dish **620** may also include a support **180** for holding the e-Petri dish **620**. In **FIGS. 11, 13(a),** and **13(b)**, the e-Petri dish **620** is comprised of a light detector **160** having a sensing surface **162**, a transparent layer **165** having a specimen surface **140**, and a well **170**, and a cover **176**.

The transparent layer **165** of the e-Petri dish **620** of embodiments may be any suitable material layer capable of separating the specimen **150** from the light sensitive region of the light detector **160**. The transparent layer **165** may be a part of the light detector **160** or may be a separate layer (e.g., coating) lying over the light detector **160**. The transparent layer **165** includes a specimen surface **140** for receiving the specimen **150**. The transparent layer **165** may be made of any suitable material such as Polydimethylsiloxane (PDMS). The transparent layer **165** may have any suitable thickness (e.g., thickness in the range of several hundred nanometers to microns). In one example, the transparent layer **165** is 0.9 $\mu$m thick. In an embodiment where the transparent layer **165** is a layer lying over the light detector **160**, the transparent layer **165** may be a passivation layer coated or deposited on top an imaging sensor chip. The transparent layer **165** may be comprised of multiple layers of different transparent materials in some cases. For example, the transparent layer **165** may be comprised of a thin passivation layer, a coating, and/or a culture medium.

The e-Petri dish **620** also includes a light detector **160** in the form of an imaging sensor chip capable of generating one or more signals with light data associated with the projection images **160** captured and other data associated with imaging. The light detector **160** can be a monochromatic detector or a color detector (e.g., RGB detector). Suitable imaging sensor chips are commercially available. In some cases, the light detector **160** includes a two-dimensional array of discrete light detecting elements **166** (shown in FIG. 2). Some examples of suitable light detectors **160** that have two-dimensional arrays of discrete light detecting elements **166** include a charge coupled device (CCD) array, a CMOS imaging sensor array, an avalanche photo-diode (APD) array, a photo-diode (PD) array, and a photomultiplier tubes (PMT) array. The arrays of light detecting elements can have any suitable orientation. Also, the light detecting elements **166** may be of any suitable size (e.g., 1-10 microns) and any suitable shape (e.g., circular, rectangular, square, etc.). For example, a CMOS or CCD light detecting element **166** may be 1-10 microns and an APD or PMT light detecting element **166** may be as large as 1-4 mm. The light detector **160** also includes a sensing surface **162** that has a sensing area **164**, which can refer to an area of the sensing surface **162** that actively captures image projections **170**. Although illustrated embodiments show the sensing area **164** covering a small portion of the sensing surface **162**, in other embodiments, the sensing area may cover a larger portion or the entire sensing surface **162**.

In some cases, the transparent layer **165** may be placed on the sensing surface **162** of an imaging sensor chip during fabrication of the chip using suitable fabrication procedures such as semiconductor and/or micro/nanofabrication procedures. In one case, the transparent layer **165** may be prepared by mixing 1:10 with base and curing agent, then spin coated on a 3 in. silicon wafer followed by baking at 80 degrees C. Due to the scattering angle of light **118** passing through the specimen **150**, projection image quality can be degraded if the specimen **150** is located away from the sensing surface **162**. For this reason, the transparent layer **160** may be a thin layer. Also, layers (e.g., color filter and a microlens layers) of the imaging sensor chip may be removed or omitted to decrease the acceptance angle of each light detecting element (pixel) and the distance between the specimen **152** and the sensing surface **162**. To remove the color filter and a microlens layers from a prefabricated imaging sensor chip, the chip may be treated under oxygen plasma for a period of time (e.g., 10 minutes at 80W).

In embodiments such as **FIGS. 11** and **13(a),** the e-Petri dish **620** also includes a well. The well **170** can refer to any suitable structure or structures capable of containing or holding a specimen **150** being imaged. The components of the well **170** such as the peripheral wall **172** may be made of any suitable material such as PDMS. In embodiments such as shown in **FIG. 11,** the well **170** includes a peripheral wall **172** directly coupled to the specimen surface **140**. The peripheral wall **172** forms a square enclosure for containing the specimen **150**. In other embodiments such as the embodiment shown in **FIG. 13(a),** the well **170** may be separate structure with a peripheral wall **172** and a transparent floor attached at a peripheral edge of the peripheral wall **172**. The transparent floor may be coupled, removably or otherwise, to the specimen surface **140** or to the sensing surface **162** of the light detector **160**. In other embodiments, the well **170** may include other structures such as an array of chambers. Each chamber capable of containing its own specimen **150**.

In embodiments such as **FIGS. 11** and **13(a),** the e-Petri dish **620** also includes a cover **176** that can be placed over the well **170**. The cover **176** may be any suitable structure that can provide suitable protection to the specimen **150**. The cover **176** may be made of any suitable material (e.g., PDMS) and may have any suitable thickness (e.g., 100 $\mu$m). For example, a cover **176** may be a thin sheet of PDMS that prevents evaporation of the culture media while allowing for $CO_2$ exchange between the well **170** and the exterior. The cover **176** may be removable in some cases.

In embodiments such as **FIGS. 11, 12, 13(b)** and **13(c),** the e-Petri device **610** may include a support **180**. A support **180** can refer to suitable structures, devices or combination thereof capable of holding the scanning illumination source **110** in a fixed position relative to the light detector **160** and at a distance, *d,* from the specimen surface **140**. The support **180** may be part of the e-Petri dish **620** in some cases. In **FIG. 11** and **FIG. 13(b),** the support includes a bottom portion with an opening for receiving and/or coupling to the e-Petri dish **620**. The support **180** of embodiments, such as shown in **FIG. 13(b),** also includes a portion for receiving the scanning illumination source **110**. In some cases, such as the illustrated example of **FIG. 11, FIG. 13(b),** and **13(c),** the scanning illumination source **110** may be held such that the display surface **119** is kept approximately parallel to the sensing surface **162** of the light detector **160** and at a distance, d, from the sensing surface **162** during scanning. In these cases, the illuminating display **116** may provide illumination **118** at angles normal to the display surface **119**. In other cases, the scanning illumination source **110** may be held so that the display surface **119** may be tilted at an angle from normal. At this angle, projections **170** from more extreme illumination angles to be captured, leading to a more complete 3D reconstruction in some cases. In one embodiment, the scanning illumination source **110** may include actuator(s) and controller(s) or other mechanism to reposition the illuminating display **116** (e.g., LCD array) at an angle from normal.

In embodiments, a specimen **150** located on the specimen surface **140** may be imaged by the e-Petri device **610** or the SMLM device **100**. The specimen **150** may include any suitable number (e.g., 1, 2, 10, 100, 1000, etc.) of objects **152** or portions (e.g., cell components) of objects **152**. The specimen **150** may also include other material such as a culture medium. In **FIG. 11,** a specimen **150** with five objects **152** (e.g., cells) is located on the specimen surface **140** within the wall **172** of the well **170**. Any suitable specimen **150** may be imaged by the e-Petri system **600** or e-Petri device **610**. For example, a suitable specimen **150** may be a confluent sample (e.g., cell culture) having one or more objects (e.g., cells). As another example, a suitable specimen **150** may be a sample in which the objects **152** are contiguously connected. The specimen **150** may include any suitable type of object **150**. Suitable types of objects **150** can be biological or inorganic entities. Examples of biological entities include whole cells, cell components, microorganisms such as bacteria or viruses, cell components such as proteins, etc. Inorganic entities may also be imaged by embodiments of the invention.

In embodiments such as **FIGS. 11, 12, 13(b)** and **13(c),** the e-Petri device **610** includes a scanning illumination source **110**. The scanning illumination source **110** may include any suitable device or combination of devices capable of providing illumination **118** from different illumination angles to a specimen **150** located on the specimen surface **140** to generate sub-pixel shifted projections **170** of the specimen **150** at the sensing surface **162**. Suitable scanning illumination sources **110** are commercially available. For example, a scanning illumination source may be a mobile communication device (e.g., smartphone, tablet, etc.) having an illuminating display **116**. Illustrated examples of a suitable scanning illumination device **110** in the form of a smartphone are shown in **FIGS. 2, 4, 12, 13(b),** and **13(d)**. Another example of a suitable scanning illumination device **110** may be a tomographic phase microscope that uses a spatial light modulator to scan illumination **118**. In illustrated embodiments, the scanning illumination source **110** is in the form of a mobile communication device.

In **FIG. 11,** the scanning illumination source **110** includes a first processor **112,** a first CRM **114,** and an illuminating display **116**. The illuminating display **116** includes a display surface **119** and a light element **117** providing illumination **118** at the display surface **119**.

The illuminating display **116** may be any suitable display capable of providing illumination **118**. Suitable illuminating displays **116** are commercially available. Some examples of suitable illuminating displays **116** include monochromatic, color, or gray-scale LCDs, LED displays (e.g., display panels), television screens, LCD matrixes, etc. The illuminating display **116** may be in the form of a two-dimensional array of light emitting components (e.g., light pixels) with a dimension M x N of any suitable value (e.g., 1000 x 1000, 1000 x 4000, 3000 x 5000, etc.). Each light emitting component in the two-dimensional array may have a location denoted as $(x_i, y_j)$ where i = 1... M; and j = 1... N. The illuminating display **116** includes a display surface **119.** The illuminating display **116** may be in any suitable position to provide illumination **118.** In **FIG. 11,** the illuminating display **116** is positioned so that the display surface **119** is parallel to the sensing surface **162** and is at a distance, d, from the sensing surface **162.**

A light element **117** can refer to any suitable device capable of providing illumination **118.** In **FIG. 11,** the light element **117** is shown located at the display surface **119.** In other embodiments, the light element **117** may be located below the display surface **119.** In embodiments, the light element **117** can be a set of one or more illuminated light emitting elements (e.g., LCD lit/pixel) of the illuminating display **116** at a given illumination time during an illumination cycle. The set may have any suitable number (e.g., 1, 5, 10, 100, etc.) of light emitting components. In these embodiments, the light element **117** may be different sets of light emitting elements illuminated at different times during the illumination cycle. The light element **117** may be any suitable size and shape (e.g., rectangle, circle, spot, bar, etc.). In **FIG. 4(a),** the light element **117** has the shape of a circular spot comprising a set of **640** illuminated pixels of about 1 cm in diameter on the illuminating display **116.** In addition to the position, the size and shape of the different sets of illuminated light emitting elements may vary over time. In other embodiments, the light element size and shape may be constant.

During an illumination cycle, the scanning illumination source **110** may provide the light element **117** at a plurality of positions at different times to provide illumination **118** to the specimen **150** from a plurality of illumination angles. For example, the light element **117** may be different sets of light emitting elements at a plurality of positions on an illumination display **116.** The scanning illumination source **110** may change the light element **117** to the plurality of different positions by illuminating different sets of light emitting elements at different times. In this example, the position of each light element **117** can refer to the coordinates of the center of the set of illuminated light emitting components. As another example, the light element **117** may be tilted at a plurality of different angles at different times. As another example, the light element **117** may be a single light source that is moved to the plurality of positions. As another example, the light element **117** may be different sets of light sources at the plurality of positions in the incubator **800** that are illuminated at different times. The plurality of positions may include any suitable number, *n,* of positions (*n* = 1, 2, 3, 4, 5, 10, 20, 100, 1000, etc.). The plurality of illumination angles may include suitable illumination angles that can generate sub-pixel shifted projections **170** of the specimen **150** at the sensing surface **162.** In one case, the light element **117** may be positioned to generate a small range of illumination angles (e.g., +/- 2 degrees) in X/Y around a normal to the sensing surface **162.**
In **FIGS. 11, 12, 13(b),** and **13(c),** different sets of one or more light emitting components (e.g., pixels) of the illuminating display **116** may be illuminated at different times to change the position of the light element **117** and/or properties of the illumination **118** from the light element **117.** In these illustrated examples, the scanning illumination source **110** is in the form of a smartphone having an illuminating display **116** in the form of a two-dimensional array of light emitting components. Different sets of light emitting components in the two-dimensional array may be illuminated at different times during the illumination cycle.
In embodiments, the scanning illumination source **110** may position the light element **117** in any suitable plurality of positions and the light element **117** may have any suitable properties during the illumination cycle. In some cases, the plurality of positions may as a group form a pattern (e.g., array, circle, square, triangle, etc.). In one embodiment, the light emitting components of an illuminating display **116** may be illuminated during an illuminating cycle according to a scanning pattern. A scanning pattern can refer to a description that includes the plurality of positions of the light element **117** at different illumination times during an illumination cycle and the properties (e.g., size, shape, etc.) of the light element **117** at each position. In one embodiment, a scanning pattern may be in the form of a two-dimensional array (n x m dimensions) of positions of the light element **117** at $(x_{i=1 \text{ to } n}, y_{j=1 \text{ to } m})$ of the illuminating display **116.** The array may have any suitable dimension (e.g. 1 x 100, 1 x 10, 100 x 100, 3000 x 20, 400 x 300, etc.). In one example, a scanning pattern may include a two-dimensional array of scanning locations and a description that the light element **117** moves through each row sequentially at a constant rate. In another example, the scanning pattern may include a two-dimensional array of scanning locations and a description that the element moves through each column sequentially at a constant rate. As another example, the scanning pattern may include a two-dimensional array of scanning locations and a description that the element moves through the array randomly. The scanning pattern may also include the amount of sub-pixel shift desired between subsequent projection images. The scanning pattern may also include the total number of projection images and/or HR images desired.
**FIG. 4(b)** illustrates an example of a scanning pattern of an illumination cycle according to an embodiment. The scanning pattern is in the form of a graph of a 15 x 15 two-dimensional array of 225 positions of the light element **117** on the display surface **119** during an illumination cycle. The 225 positions are shown in terms of x and y locations along the x-axis and y-axis in the plane of the display surface **119** of the illuminating display **116.** In the illustrated example, the scanning pattern includes 15 columns of positions in the x-direction and 15 rows of positions in the y-direction. At each position, the light detector **160** may capture a different projection image. The light detector **160** may capture as many as 225 different projection images based on the 225 different scanning positions in the scanning pattern. The projection images captured by the light detector **160** may comprise one or more sequences of sub-pixel shifted projection images. The arrows in the scanning pattern **FIG. 4(b)** designate the sequence in time of the positions during the illumination cycle. According to the illustrated arrows, the light element **117** moves sequentially through each row of the two-dimensional array in the scanning pattern.

The scanning pattern may be stored as code on the first CRM **114** or the second CRM **220** and executed by the first processor **112** or second processor **210**. For example, the scanning pattern may be a video program (e.g., app on a smartphone) of a suitable format stored on the first CRM **114** that when executed displays a video of the light element **117** moving to different positions on the illuminated display **116** over time. An example of such a video is illustrated in **FIG. 4(a)**. In this example, the light element **117** is in the form of a light spot moving across the illuminating display **116** over time according to positions defined in the scanning pattern in **FIG. 4(b)**. In **FIG. 4(a)**, the light element **117** is at one position in the scanning pattern shown in **FIG. 4(b)**. In this example, the illuminating display **116** is centered over the e-Petri dish **620**. The light element **117** can have constant or varied properties at different positions. In one case, the light element **117** may remain a constant size as it moves away from the center of the illuminating display **116**. In this case, the intensity readout from the light detector **160** associated with the specimen **150** will decrease away from the center because of the large incident angle. In the illustrated case shown in **FIGS. 4(a)** and **4(b)**, to maintain a more constant intensity readout, the size of the light element **117** (e.g., bright spot size) is linearly increased as it moves away from the center of the illuminating display **116** (e.g., smartphone screen).

In embodiments, the properties (e.g., size, properties of the illumination **118**, shape, etc.) of the light element **117** may vary at different positions during an illumination cycle. The properties of the light element **117** at different positions may be varied by changing the number of light emitting elements in the light element **117**, the shape of the light element **117**, and/or the properties of the light **118** from the light emitting elements in the light element **117**. The light properties (e.g., intensity, wavelength, frequency, polarization, phase, spin angular momentum and other light properties) of the illumination **118** from a light element **117** at an illumination time during an illumination cycle have any suitable values. The illumination **118** may be incoherent light in some cases.

The light intensity requirement of the imaging schemes used by the e-Petri device are relatively low in embodiments. In one embodiment, a suitable intensity of illumination **118** can be the provided by illumination from a conventional smartphone screen. As a point of reference, a halogen-lamp based conventional microscope typically delivers a light intensity of $20 W/m^2$ onto a specimen **150**. In other embodiments, a suitable intensity of illumination **118** can be the provided by a LED display panel, a television screen or a LED matrix. A suitable light intensity received by a light detecting element **166** may be 0.015 $W/m^2$.

In an embodiment, the intensity of the illumination **118** generated by the light element **117** in an illuminating display **116** may be controlled by varying the size of the light element **117**. In some cases, the size of the light element **117** at different positions during an illumination cycle may vary based on the distance between the position of the light element **117** and a point at the plane of the sensing surface **162** to generate light of approximately the same intensity at that point. In this case, the size, $S$ of the light element **117** at a position can be proportional to the distance, $L$, from the position to a suitable location of a point such as: a) the center of the array of scanning locations, or b) the center of an illuminating display **116** such as the center of an LCD on a smartphone. For example, the size, S of the light element **117** at a position in the illumination cycle may be defined as: $S = S_{center} \times (1 + L)$, where $S_{center}$ is the size of the light element **117** at the center of the array of positions. In this way, the light intensity received at the location at the sensing surface **162** normal to the center of the positions of the light elements **117** on the display surface **119** may be kept approximately constant. As another example, the size S of the light element **117** at any position of the light element **117** may be defined as: $S = S_A \times (1 + A)$, where $S_A$ is the size of the light element **117** at a location A of an illuminating display **116**, A is the distance from the position to the location A.

In an embodiment, the light element **117** can provide illumination **118** of n different wavelengths $\lambda_1, ..., \lambda_n$ at n different illumination times during an illumination cycle. The illumination **118** may be cycled through a series of different wavelengths as the light element **117** moves through different positions in an illumination cycle in some examples. In one example, the light element **117** can provide RGB illumination of three wavelengths $\lambda_1$, $\lambda_2$, and $\lambda_3$ corresponding to red, green, blue colors, respectively. The light element **117** may provide illumination **118** of the three wavelengths $\lambda_1$, $\lambda_2$, and $\lambda_3$ sequentially during illumination times of a illumination cycle. In one case, at a illumination time $t_1$ illumination **118** may have a wavelength of $\lambda_1$, at $t_2$ illumination **118** may have an wavelength of $\lambda_2$, at $t_3$ illumination **118** may have a wavelength of $\lambda_3$, at $t_4$ illumination **118** may have a wavelength of $\lambda_1$, at $t_5$ illumination **118** may have a wavelength of $\lambda_2$, etc. In this embodiment, the light detector

During an illumination cycle, illumination **118** from the plurality of illumination angles generates a plurality of light projections **170** on the sensing surface **162**. Each projection image (frame) can refer to a snapshot image sampled by the light detector **160** at a sampling time during an illumination cycle. In some cases, the light detector **160** may capture a projection image **170** at each illumination time. Each projection image sampled by the light detector **160** can be used to display a 2D projection image. In embodiments with a color light detector **160**, the 2D projection image may be a color image. In embodiments with a monochromatic light detector **160**, the projection image may be a black and white image.

A sequence of sub-pixel shifted projection images can refer to n projection images sampled at n sampling times where neighboring (in time or space) projection images are separated by less than a pixel size (i.e. sub-pixel shift). During an illumination cycle, $n$ projection images ($I_1$,...,$I_n$) may be captured at $n$ sequential sampling times ($t_1$...$t_n$). Any suitable number (e.g., 1, 3, 5, 10, 100, etc.), n, of projection images may be captured by the light detector **160** during a illumination cycle. Also, any suitable number (e.g., 1, 3, 5, 10, 100, etc.) of sequences of sub-pixel shifted projection images may be captured by the light detector **160** during a illumination cycle. If multiple sequences are captured, the sequences can include different groups of projection images or the sequences can overlap sharing one or more projection images. In one example, 9 projection images ($I_1$, $I_2$, $I_3$, $I_4$, $I_5$, $I_6$, $I_7$, $I_8$, $I_9$) may be captured at 9 sequential sampling times ($t_1$, $t_2$, $t_3$, $t_4$, $t_5$, $t_6$, $t_7$, $t_8$, $t_9$). In an overlapping case of the above example, sequences could be: 1) $I_1$, $I_2$, $I_6$, and $I_8$, and, 2) $I_6$, $I_7$, $I_8$, and $I_9$. In a non-overlapping case, sequences could be: 1) $I_1$, $I_2$, $I_3$, and $I_4$, and 2) $I_5$, $I_6$, $I_7$, and $I_8$. In others examples, a sequence of sub-pixel shifted projection images may be based on non-sequential sampling times. For example, 9 projection images ($I_1$, $I_2$, $I_3$, $I_4$, $I_5$, $I_6$, $I_7$, $I_8$, $I_9$) may be captured at 9 sequential sampling times ($t_1$, $t_2$, $t_3$, $t_4$, $t_5$, $t_6$, $t_7$, $t_8$, $t_9$) and the sequence of projection images may be ($I_6$, $I_2$, $I_9$, $I_1$).

In embodiments, the light detector **160** may capture a projection image at each position of the light element **117** in a scanning pattern. For example, a light detector **160** may capture 225 projection images associated with the 15 x 15 array of positions in the scanning pattern shown in **FIG. 4(b).** In this example, the light detector **160** may capture a projection image at each position as the light element **117** moves through each row sequentially of the two-dimensional array of positions in the scanning pattern. If the positions in each row are associated with 15 sub-pixel shifted projections **170,** the light detector **160** may capture 15 sequences of 15 sub-pixel shifted projection images during each illumination cycle. In this case, each of the 15 sequences captured is associated with a row of positions of the light element **117** in the scanning pattern.

In **FIG. 11,** the first processor **112** of the illumination source **110** is in electronic communication with the illuminating display **116,** the first CRM **114,** and the light detector **160.** The first processor **112** (e.g., microprocessor) can execute code stored on the first CRM **114** (e.g., memory) to perform some of the functions of the scanning illumination source **110.** For example, the first processor **112** may execute code with a scanning pattern stored on the first CRM **114.** The CRM **114** may include, for example, code with a scanning pattern, other code for scanning a light element **117,** and other codes for other functions of the scanning illumination source **110.** The first CRM **114** may also include code for performing any of the signal processing or other software-related functions that may be created by those of ordinary skill in the art. The code may be in any suitable programming language including C, C++, Pascal, etc.

Light data can refer to any suitable information related to the one or more projections **170** captured by the light detecting elements **166** of the light detector **160.** For example, light data may include information about the properties of the projection light received such as the intensity(ies) of the light, the wavelength(s) of the light, the frequency or frequencies of the light, the polarization(s) of the light, the phase(s) of the light, the spin angular momentum(s) of the light, and/or other light properties associated with the light received by the light detecting element **166.** Light data may also include the location of the receiving light detecting element(s) **166,** the time that the light was received (sampling time or scanning time), or other information related to the projection **170** received. In embodiments, each light detecting element **166** can generate a signal with light data based on light associated with the projection **170** and received by the light detecting element **166.**

A motion vector can refer to the translational motion of projection images in a sequence of projection images, collectively termed the motion vector of the sequence of projection images. The motion vector is based on the amount of shifting of the projection images at a plane. A motion vector of a sequence of sub-pixel shifted projection images can be calculated from the associated projection images captured by the light detector **160.** The motion vector may be calculated at any plane of interest. For example, the motion vector can be determined at the plane at the sensing surface **162.** In this example, the motion vector is determined in terms of the local x'-axis and y'-axis at the sensing surface **162** of the light detector **160.** As another example, the motion vector can be calculated at other planes through the specimen **150** being imaged. The planes through the specimen **150** may be parallel to the plane of the sensing surface **162** in some cases.

In embodiments of the e-Petri system **600,** a sub-pixel resolution image of a specimen **150** can be constructed using a suitable SR algorithm based on data associated with a sequence of sub-pixel shifted projection images and a motion vector of the sub-pixel shifted projections in the sequence. An example of image resolution obtainable by embodiments of the e-Petri system **600** may be about 0.66 micron. Any suitable SR algorithm can be used. An example of a suitable SR algorithm is a shift-and-add pixel SR algorithm. Other examples of SR algorithms are discussed in Section II.

A sub-pixel resolution image generated based on a motion vector will be focused at a plane of interest associated with the motion vector. That is, if a motion vector is estimated based on a plane of interest, the sub-pixel resolution image will be a two-dimensional image focused at the plane of the interest used to estimate the motion vector. For example, if a motion vector is estimated based on a plane of interest at the sensing surface **162,** the sub-pixel resolution image generated will be focused at the plane of the sensing surface **162.** If the motion vector is estimated based on a plane through the specimen **150** being imaged, the sub-pixel resolution image will be a cross-sectional image of the specimen **150** focused at the plane through the specimen **150.** In an embodiment, an e-Petri system **600** can generate a sub-pixel resolution image of a cross-section of the specimen **150** by modifying the value of the motion vector used to generate the sub-pixel resolution image to the plane at the cross-section. The e-Petri system **600** can vary the values of the motion vector to focus at various cross sections of the specimen **150**. In an embodiment, an e-Petri system **600** can generate a three-dimensional sub-pixel resolution image based on multiple two-dimensional cross-sectional sub-pixel resolution images generated using multiple motion vector values associated with multiple planes through the specimen **150**.

The e-Petri system **600** of **FIG. 11** also includes a host computer **200** communicatively coupled to the light detector **160**. The host computer **200** comprises a second processor **210** (e.g., microprocessor), a second CRM **220**, and an image display **230**. The image display **230** and the second CRM **220** are communicatively coupled to the second processor **210**. Alternatively, the host computer **200** can be a separate device from the e-Petri system **600**. The host computer **200** can be any suitable computing device (e.g., smartphone, laptop, tablet, etc.).

The second processor **230** executes code stored on the second CRM **220** to perform some of the functions of the e-Petri system **600** such as, for example: interpreting data from one or more sequences of sub-pixel shifted projection images captured and communicated in one or more signals from the light detector **160,** determining a motion vector of a sequence of sub-pixel shifted projections, constructing a 2D HR image from data associated with a sequence of sub-pixel shifted projection images, constructing a 3D HR image from data associated with a sequence of sub-pixel shifted projection images, displaying one or more HR images on the image display **230,** automatedly reconstruct images and display the reconstructed images on the display **230** for user monitoring, etc.

The second processor **210** can receive one or more signals with light data and other data from the light detector 160. For example, the processor **210** can receive one or more signals with light data associated with one or more sequences of sub-pixel shifted projection images sampled at a corresponding sequence of n illumination times ($t_1$, $t_2$, $t_3$, ... $t_n$). The second processor **210** can also determine a motion vector based on the sequence of sub-pixel shifted projection images. The second processor **210** can also construct HR images and associated image data based the determined motion vector and data associated with at least one sequence of sub-pixel shifted projection images. In some cases, the constructed HR image of the object **150** is a black and white 2D/3D image. In other cases, the constructed HR image of the object **150** is a color 2D/3D image.

In one embodiment, a HR color image can be generated by using different wavelengths of illumination **118** at different sampling times to generate a multiple sequences of sub-pixel shifted projection images at a light detector **160**. Each sequence is associated with a different wavelength. The second processor **210** can generate HR color image and associated image data based on the different sequences associated with different wavelengths. For example, three wavelengths of light (e.g., wavelengths associated with red, green, blue (RGB) colors) can be sequentially generated by a light element **117** to generate three sequences of sub-pixel shifted projection images associated with three wavelengths of light. The processor **210** can combine the image data from the sequences associated with the different wavelengths to generate multi-wavelength or color image data (e.g., RGB color image data). The multi-wavelength or color HR image data can be used to generate a multi-wavelength or color HR image on the image display **230.**

Second CRM (e.g., memory) **220** can store code for performing some functions of the e-Petri system **600**. The code is executable by the second processor **210**. For example, the second CRM **220** of embodiments may include: a) code with a SR algorithm, b) code with a tomography algorithm, c) code for interpreting light data received in one or more signals from the light detector **160,** d) code for generating a 3D HR image, e) code for constructing a color sub-pixel image, f) code for displaying SR two-dimensional and/or three-dimensional images, g) code for a customized program to automatedly reconstruct and display the reconstructed image onto the display **230** for user monitoring; and h) and/or any other suitable code for performing functions of the e-Petri system **600**. The second CRM **220** may also include code for performing any of the signal processing or other software-related functions that may be created by those of ordinary skill in the art. The code may be in any suitable programming language including C, C++, Pascal, etc.

The e-Petri system **600** also includes an image display **230** communicatively to the processor **210** to receive data and provide output such as HR images to a user of the e-Petri system **600**. Any suitable display may be used. For example, the image display **230** may be a color display or a black and white display. In addition, the image display **230** may be a two-dimensional display or a three-dimensional display. In one embodiment, the image display **230** may be capable of displaying multiple views of an object **150**.

The e-Petri system **600** of embodiments also includes an incubator **800**. An incubator can refer to any suitable device/structure or combination of devices and structures that can provide a pre-defined environment at the e-Petri dish **620** during a time interval of the experiment (e.g., long term study) being performed by the e-Petri system **600**. The pre-defined environment may define environmental variables such as temperature, humidity, etc. Suitable incubators are commercially available. In some cases such as the illustrated example in **FIGS. 11** and **12,** the incubator **800** may include a chamber defined by a wall. The chamber may be designed to hold one or more e-Petri-devices **610**.

The e-Petri system **600** of embodiments also includes a relay **700**. A relay **700** can refer to a suitable device that can relay data from the one or more e-Petri devices **610** to the host computer **200**. Suitable devices are commercially available. The relay **700** may include multiplexing functionality to combine signals from the one or more e-Petri devices **610** to a signal to the host computer **200**. The relay **700** may also include demultiplexing functionality to extract data from a signal from the host computer **200** to send in a signal to one or more e-Petri devices **610**. The relay **700** may transmit data wirelessly.

Modifications, additions, or omissions may be made to e-Petri system **600,** e-Petri device **610** or e-Petri dish **620** without departing from the scope of the disclosure. For example, an e-Petri system **600** of other embodiments may omit the incubator **800** and/or the relay **700**. As another example, an e-Petri device **610** of other embodiments may omit the support **180** or may have a single support **180** for multiple e-Petri devices **610**. As another example, an e-Petri system **600** may omit the host computer **200**. As another example, an ePetri system **610** may omit the well **170** and wall **172.**

In addition, components of the to e-Petri system **600,** e-Petri device **610** or ePetri dish **620** may be integrated or separated according to particular needs. For example, an e-Petri system **600** may have a single scanning illumination source **110** that provides illumination **118** to multiple e-Petri devices **610**. As another example, the relay **700** may be located outside the incubator **800**. As another example, the second processor **610** may be integrated into the light detector **160** so that the light detector **160** performs one or more of the functions of the second processor **160** in another e-Petri system **600**. As another example, the second processor **160,** second CRM **220,** and image display **230** may be components of a computer separate from an e-Petri system **600** and in communication with the e-Petri system **600**. As another example, the second processor **160,** second CRM **220,** and/or image display **230** may be integrated into parts of the e-Petri device **610**. For example, the image display **230** may be part of the illumination display **116,** the first processor **112** and second processor **210** may be integrated into a single processor, and/or the first CRM **114** and second CRM **220** may be integrated into a single CRM. As another example, more than one e-Petri dish **620** and/or the incubator **800** can be incorporated into the e-Petri device **610**.

## B. Wide Field-of-View Imaging Capabilities

The e-Petri device **610** of embodiments are capable of wide field-of-view imaging. By providing a wide field of view, the e-Petri device **610** of embodiments may be suitable to replace or improve upon conventional microscopes for cell culture analysis.

To demonstrate these capabilities, a specimen **150** having HeLa cells was cultured for 48 hours on a specimen surface **140** of an e-Petri-dish **620** of an e-Petri device **600** of an embodiment as shown in **FIG. 13(c).** To promote cell adhesion, the specimen surface **162** of the e-Petri dish **620** was treated with Poly-L-lysine (0.01%) for 15 min and washed 3 times with distilled water. The HeLa cells were first cultured in Dulbecco's modified eagle medium supplemented with 1-glutamine (4mM), penicillin (100 units/ml), streptomycin (100 $\mu$g/ml) and 10% (v/v) fetal calf serum in culture dishes and maintained in 5% CO2 humidified atmosphere at 37 °C. During the logarithmic growth period, the HeLa cells were harvested by trypsin (0.05% trypsin with EDTA*4Na), re-suspended in DMEM, and then seeded onto the ePetri dish **620.**

The specimen **150** was then stained with Giemsa, which is a black precipitate formed from the addition of aqueous solutions of methylene blue and eosin, dissolved in methanol. The following steps were used to stain the cell culture: 1) fix the air-dried sample in absolute methanol by dipping the ePetri dish **620** briefly (two dips) in a Coplin jar containing absolute methanol; 2) remove and let air dry; 3) stain with diluted Giemsa stain (1:20, vol/vol) for 20 min.; and 4)wash by briefly dipping the ePetri dish **620** in and out of a Coplin jar of distilled water (one or two dips).

The e-Petri device **600** in **FIG. 13(c)** has an illumination source **110** in the form of a smartphone with an illuminating display **116** in the form of an LED display. During an exemplary illumination cycle, a video with a light element **117** in the form of a light spot was displayed on the LED display at a plurality of positions according to the 15 x 15 array scanning pattern shown in **FIG. 4(b). FIG. 4(a)** is illustrated example of the light spot **117** at one position. The light element **117** provided illumination **118** of three wavelengths $\lambda_1$, $\lambda_2$, and $\lambda_3$ corresponding to red, green, blue colors at different positions during the video. The imaging run included a single illumination cycle. The sampling rate (i.e. image capture rate) of the light detector **160** was set to capture 10 frames per second with a pixel clock of the light detector **160** running at 70 Mhz. The entire data acquisition process of the imaging run took about 20 seconds.

**FIG. 7(a)** shows the reconstructed color projection image of the confluent HeLa cell sample. To illustrate the amount of detail in the constructed color image shown in **FIG. 7(a),** reconstructed images of selected regions of the HeLa sample are provided in **FIGS. 7(b2)** and **7(c2). FIGS. 7(b1)** and **7(c1)** are projection images of the selected regions of **FIGS. 7(b2)** and **7(c2).** The image enhancement factor used in the algorithm to generate the reconstructed image of **FIG. 7(a)** was set at 13. In other words, each pixel at the low-resolution projection image level (2.2$\mu$m) was enhanced into a 13x13 pixel block in the reconstructed image. The entire reconstructed image of **FIG. 7(a)** contains about 8.45 x 108 pixels. The e-Petri device **600** of **FIGS. 13(b)** and **13(c)** took about 22 second to capture each sequence of projection images for each color. The solution for the reconstructed image was non-iterative, deterministic and was optimized in the Maximum-Likelihood sense. With the use of a graphics processing unit (GPU), image processing time may be less than one second for the entire image reconstruction. Since the primary use of ePetri device **610** would be for tracking cell culture growth directly from within an incubator, the data transfer or the processing speed limitations should not reduce efficiency of the system.

From the reconstructed high resolution color images in **FIGS. 7(b2)** and **7(c2),** organelles within the HeLa cell sample can be discerned such as the multiple nuclear granules (indicated by red arrows), and the nucleus. **FIG. 7(d)** is a conventional microscopy image of similar cells using a microscope with 40X, NA = 0.66 objective lens for comparison.

In an experiment, a HeLa cell sample was cultured on a CMOS sensor chip and fixed and stained with Giemsa. **FIG.14 (a1), FIG. 14(a2),** and **FIG. 14(a3)** are conventional microscopy images with red, green and blue LED illuminations (20X objective, 0.5 N.A.). **FIG.14 (a4)** is the color image constructed based on the red, green, and blue images in **FIG.14 (a1), FIG. 14(a2),** and **FIG. 14(a3).** Since the sensor chip is not transparent, the conventional microscopy images were taken in reflection mode. The color in **FIG.14 (a4)** is due to the light interference between the sensor surface and sample. The grid pattern in **FIG.14 (a1)** to **FIG.14 (a4)** is the pixel array of the image sensor (2.2 $\mu$m pixel size). **FIG.14 (b1), FIG. 14(b2),** and **FIG. 14(b3)** are reconstructed sub-pixel resolution images of a portion of HeLa cell sample as acquired by an e-Petri system **600** under red, green, and blue light source scanning respectively, according to an embodiment of the invention. **FIG.14 (b4)** is the reconstructed sub-pixel resolution color image based on the red, green, and blue images in **FIG.14 (b1), FIG. 14(b2),** and **FIG. 14(b3),** according to an embodiment of the invention. The scale bar shown in each of the images in **FIG. 14** is 20 $\mu$m.

### C. Long-term cell Imaging and Tracking

The e-Petri system **600** of embodiments can be automated to image confluent cell samples with sub-cellular resolution over a large field-of-view at intervals of a study or other experiment. As such, it is well suited to long-term cell culture imaging and tracking applications.

To demonstrate these capabilities, an e-Petri-system **600** such as shown in **FIGS. 11** and **12** was used to perform a longitudinal cell imaging and study. A customized program stored on the second CRM **220** was used by the second processor **210** of the host computer **200** to automatedly reconstruct and display the reconstructed image onto the display **230** for user monitoring. The customized program included information such as the time period of the experiment, the time intervals for automatedly reconstructing and displaying the images, and other suitable information.

The e-Petri system **600** had an e-Petri device **610** such as shown in **FIGS. 12** and **13(c).** A specimen **150** having HeLa cells was seeded onto a specimen surface **140** of an e-Petri-dish **620** of an e-Petri device **600** of an embodiment as shown in **FIG. 13(c).** The ePetri device **610** was placed into an incubator **800** such as shown in **FIG. 12** during the longitudinal cell imaging and study. An Ethernet cable connected the e-Petri device **610** to the host computer **200** in the form of a personal computer located the incubator **800** for data transfer, as shown in **FIG. 12.** In this experiment, an automated reconstruction and displaying imaging run was performed at 15 minute intervals during the entire growth duration of 48 hours. Each imaging run included a single illumination cycle. During the 48 hour time period of the study, the number of HeLa cells grew from 40+ to hundreds.

**FIG. 15(a)** are time-lapse reconstructed images of a portion of the HeLa cell sample from a specific sub-location, as acquired by an e-Petri system **600** at starting at times, t=10hr, t=17.5hr, t=25hr and t=32.5hr during the time period of the study, according to an embodiment of the invention. Based on the time-lapse cell image data acquired by the e-Petri device **610,** the e-Petri system **600** can detect and track each individual cell's movements in space and time, and generate corresponding lineage trees (i.e. mother-daughter relationship and otherwise analyze the data. **FIG. 15(b)** are graphs **232** of the tracking trajectories of three cell families annotated by a biologist and the lineage trees for these cell families that were processed by the second processor **210** of the host computer **200** of an e-Petri system **600,** according to an embodiment of the invention.

### D. Resolution

**FIG. 8(a)** is a example of a HR image of a specimen **150** having 500 nm microspheres (Polysciences) that may be acquired by an e-Petri system **600,** according to an embodiment of the invention. The imaging process used to construct the image was identical the one used to reconstruct the images in **FIG. 7.** For a single 500 nm microsphere, the bright center of the microsphere was clearly resolved as shown in **FIG. 8(a),** with the full-width at half maximum (FWHM) of 690 nm. **FIG. 8(b)** is an example of a reconstructed image of a magnified small feature of the stained HeLa cell specimen **150** of **FIG. 7** as acquired by an e-Petri system **600,** according to an embodiment of the invention.

In some cases, microscopy resolution may be defined based on a given microscope's ability to resolve two closely spaced feature points. To establish resolution of an e-Petri system **600** of an embodiment based on this definition, two closely spaced microspheres were imaged by the e-Petri system **600.** **FIG. 8(a)** shows the reconstructed images of two closely packed 500 nm microspheres with center-to-center distance of 660 nm, as acquired by the e-Petri system **600.** The data trace in **FIG. 8(a)** shows a valley between the two peaks and, thus, establishes that the resolution may be 660 nm or better in some embodiments. To further verify this point, **FIG. 8(b)** shows the magnified small feature of the stained HeLa cell specimen of **FIG. 7** and the FWHM of this feature was estimated to be about 710 nm. In one embodiment, the estimated resolution may be reduced if the specimen **150** is placed at a substantial distance above the sensor surface **160,** such as described in Heng, X., et al, "Characterization of light collection through subwavelength aperture from a point source," Optics express 14, pp. 10410-10425 (2006); and Wang, Y. M., Zheng, G., and Yang, C., "Characterization of acceptance angles of small circular apertures," Optics Express 17, pp. 23903-23913 (2009), which are hereby incorporated by reference in their entirety for all purposes.

## E. Additional Advantages

Embodiments of the invention provide one or more technical advantages. A general advantage of embodiments may be a lensless, sub-pixel resolution, wide field-of-view imaging device capable of imaging confluent cell culture with high resolution and incoherent light sources. Images acquired by embodiments may be closely comparable with those obtained with a conventional microscope. In an embodiment, an image with a resolution of 660nm was acquired. The imaging method can be implemented on a smart ePetri dish, which is capable of performing high resolution and autonomous imaging of cells plated on or growing on a low-cost CMOS sensor chip. The e-Petri dish of embodiments may be a useful tool for in-vitro long-term cell observations or other long term studies. To demonstrate that an e-Petri device **610** of an embodiment can be easily assembled, the e-Petri device was constructed out of blocks, a smartphone, and an imaging sensor chip.

An advantage of an e-Petri dish **620,** e-Petri device **610,** and e-Petri system **600** may be low cost. The e-Petri dish **620** can use a CMOS imaging sensor chip as the base substrate for cell culture growth. Post-experiment, the sensor chip can either be disposed or washed-and-reused. Given the low cost of these sensor chips, they are unlikely to represent a major cost component in most cell culture experiments.

Another of an e-Petri dish **620** may be that is can be disposable or recyclable. In certain biohazardous experiments, the ability to treat the sensor chips as disposable units would significantly reduce any associated risks.

Another advantage of an e-Petri system **600** may be that the host computer **200** outside the incubator **800** can display direct readout from the data acquired from inside the incubator **800.** As shown in **FIG. 12,** the e-Petri device **610** of embodiments may be sufficiently compact to fit comfortably in a conventionally available incubator **800.** In fact, given the footprint of the e-Petri device **600** of embodiments, it may be possible to fit multiple ePetri devices **610** into the same incubator **800,** as shown in **FIG. 11.** Upon connecting the ePetri device **610** to an exterior processor **210** via an appropriate data cable, a user can start to collect images of the growing cell culture without removing the unit from the incubator **800.** This advantage saves labor and cut down on the perturbations the cell culture is subjected to. In one embodiment, an e-Petri system **600** may include a compact and portable incubator **800** and ePetri device **610** combination that is suitable for point-of-care diagnostic and/or other uses.

Another advantage of an e-Petri system **600** may be the ability to continuously monitor a specimen **150** from the incubator **800.** A user of an e-Petri system **600** may be able to monitor cell growth continuously. In bioscience research, this represents a good means for performing longitudinal studies. In medical applications, this can significantly cut down on the diagnostic time for medical procedures that requires culture growth based assessment. As an example, the ePetri dish **620** can replace the standard petri dish for tuberculosis, staph and other bacterial infection diagnosis. Whereas standard medical practice would start initiate a bacteria culture growth and then check the growth at relatively long time intervals (checking frequently would be too time consuming), a modified ePetri dish **620** may potentially be able to continuously and autonomously monitor for growth changes and notify the user to examine the sample when significant changes have been detected.

Another of an e-Petri dish **620** may be that it is a platform technology. Since the top surface of the light detector **160** in the form of a sensor chip may be unmodified in embodiments, a user is free to build upon it. It is very possible to simply use the ePetri as an imaging platform for a large number of sophisticated lab-on-a-chip designs, such as microorganisms detection based on the use of closed dielectrophoretic cages, microfluidics-based phenotyping imaging and screening of multicellular organisms, and high throughput malaria infected erythrocyte separation and imaging. An example of suitable closed dielectrophoretic cages can be found in Medoro, G. et al. "A lab-on-a-chip for cell detection and illumination," Optics letters 35, pp. 2188-2190 (2010), which is hereby incorporated by reference in its entirety for all purposes. An example of microfluidics-based phenotyping imaging and screening of multicellular organisms can be found in Crane, M., Chung, K., Stirman, J. & Lu, H., "Microfluidics-enabled phenotyping, imaging, and screening of multicellular organisms," Lab on a Chip 10, pp. 1509-1517 (2010), which is hereby incorporated by reference in its entirety for all purposes. An example of high throughput malaria infected erythrocyte separation and imaging can be found in Hou, H., et al., "Deformability based cell margination-A simple microfluidic design for malaria infected erythrocyte separation," Lab on a Chip 10, pp. 2605-2613 (2010), which is hereby incorporated by reference in its entirety for all purposes. It is also possible to modify the ePetri dish **620** to serve as a self-contained incubator and imaging unit. Also, to create a fluorescence imaging e-Petri dish **620,** the light detector **160** may be coated with an appropriate filter material.

**F. Flowchart**

The e-Petri system **600** of embodiments can be automated to reconstruct and display sub-pixel resolution images **231** of a specimen **150** on an e-Petri dish **620** and other data **232** at intervals during an experiment for user monitoring. For example, a cell specimen **150** may be placed on an e-Petri dish **620** having a culture medium. The e-Petri dish **620** may then be placed into the support **180** of an e-Petri device **610** and the e-Petri device **610** with the e-Petri dish **620** may be placed in an incubator **180** for the duration of the experiment. The host computer **200** can receive a signal with data associated with the sub-pixel shifted projection images captured by the e-Petri dish **620** and reconstruct images **231** and other data 232 on the host computer at intervals during the experiment for user monitoring without having to remove the e-Petri device **610** from the incubator **800.** The intervals may be at times $T = T_0, T_1 ... T_n$, where $n$ can be any suitable integer (1, 2, 10, 100, etc.). $T_0$ refers to the initial time at the beginning of the experiment.

In some cases, a code may be used to automatedly reconstruct and display the images **231** and other data **232** at intervals. The code may be, for example, a customized program stored on the second CRM **220.** The second processor **210** may use the code to automatedly reconstruct and display a sub-pixel resolution image on the display **230** for user monitoring. The customized program may include any suitable information regarding the imaging functions of the systems and the parameters. For example, the customized program may include the time intervals between illumination cycles, the time period of the experiment, the scanning pattern using during the illumination cycles, etc.

**FIG. 16** is a flow chart of an exemplary method of automatedly reconstructing and displaying the sub-pixel resolution images **231** and other data **232** at intervals during an experiment by an e-Petri system **600,** according to embodiments of the invention. In **step 910,** a specimen **150** is placed onto the specimen surface **140** of the e-Petri dish **620.** If the e-Petri dish includes a well **170** with a peripheral wall **172,** the specimen **150** is placed within the peripheral wall **172** of the well **170** on the specimen surface **140.** The e-Petri dish **620** may also have a culture medium or other material located on the specimen surface **140** of the e-Petri dish **620.** Once the specimen **150** is introduced, the e-Petri dish **620** is then placed in the e-Petri device **600.** For example, the e-Petri dish **620** may be placed in a receiving portion of the support **180** of the e-Petri device **610.**

In **step 920,** the e-Petri device **610** is located within an incubator **800** providing a pre-defined environment. The e-Petri device **610** can remain within the incubator **800** during the duration of the experiment, which may reduce contamination risks. Once in the incubator, the e-Petri system **600** can automatedly image the specimen **150** at time intervals $T = T_0, T_1 ... T_n$, where $n$ can be any suitable integer (1, 2, 10, 100, etc.). $T_0$ refers to the initial time at the beginning of the experiment. The time intervals can be on a periodic basis such as every 15 minutes. The experiment may have any suitable duration. The e-Petri system **600** may also generate other data **232** associated with the data gathered by the e-Petri dish **620.** For example, various graphs of the growth of different cell lineages may be generated and displayed at each interval. The e-Petri system **600** may use a code stored on the CRM **220** or other suitable memory. The code include processing instructions that are automated during the experiment. For example, the code may included instructions on reconstructing and displaying images **231** and other data **232** at intervals. The code may also include instructions regarding the illumination cycle at each interval and other instructions regarding functions of the e-Petri system **600.**

In **step 930,** the specimen **150** is illuminated from a plurality of illumination angles at different times during an interval of the experiment. The e-Petri device **610** includes a scanning illumination source **110** at a distance, d, from the sensing surface **162** that provides light **118** from the plurality of illumination angles to the specimen **150** on the specimen surface **142.** Light **180** from the plurality of illumination angles generates one or more sequences of sub-pixel shifted projection images on the sensing surface **162** of the light detector **160** of the e-Petri dish **620.**

In one embodiment, the illumination source **110** may have an illuminating display **116** with a light element **117** providing the illumination **118** from different angles at different times during an illumination cycle during the interval of the experiment. The light element **117** is positioned at different positions at different times to provide the illumination **118** from the different angles. For example, the light element **117** may be different sets of illuminated light emitting elements of the illuminating display **116** at different times during the experiment. The illumination **118** can vary at different positions. For example, the light element **117** can provide illumination **118** of n different wavelengths $\lambda_1, ..., \lambda_n$ at different times during each illumination cycle to obtain a sequence of projection images for each wavelength. Any suitable number of wavelengths may be used (e.g., $n =$ 1, 2, 3, 4, 5,..., 20). In one embodiment, the light element **117** may provide illumination **118** of three wavelengths $\lambda_1, \lambda_2,$ and $\lambda_3$ corresponding to red, green, blue colors at different sampling times. In some cases, the illumination **118** from one scanning location to a neighboring scanning location may have different wavelengths. In other cases, the illumination **118** may have a first wavelength during a first series of scanning positions, and then provide illumination **118** of a second wavelength during a second series of scanning positions, and so forth until n sequences of projection images corresponding to n different wavelengths have been captured. In some cases, the first processor **112** of the illumination source **110** may determine a scanning pattern having the different positions at the different times, properties (e.g., wavelength(s) of light used, the size and shape of the light element **117,** the intensity(ies) of the light element, etc.) of the light element **117** at different scanning positions, the amount of sub-pixel shift desired in a sequence, the duration of the experiment, the interval time(s), descriptions of other data that may be displayed during each interval, and other suitable information related to the operation of the e-Petri system **600.** The scanning pattern may be stored as code on the first CRM **114** or other suitable memory.

In **step 940,** the light detector **160** captures one or more sequences of sub-pixel shifted projection images of the specimen **150** during each illumination cycle of each interval during the experiment. The light detector **160** may capture a projection image at each illumination angle.

In **step 950,** the processor **230** uses a suitable method to determine the motion vector of the one or more sequences of sub-pixel shifted projection images captured during the interval of the experiment. The motion vector is determined based on a plane of interest such as the sensing surface **162** or plane through the specimen **150.** Any suitable method of determining a motion vector can be used.

In **step 960,** the processor **210** uses an appropriate SR algorithm to construct one or more sub-pixel images of the specimen from the one or more sequences of sub-pixel shifted projection images and the determined motion vector during the interval of the experiment. The one or more sub-pixel resolution images are located (focused) at the plane of interest used to determine the motion vector. Depending on the scheme, the sub-pixel resolution images can be 2D monochromatic images, 2D color images, 3D monochromatic or color images. The processor **210** may also generate other data images **232** (e.g., lineage trees) based on data gathered during the interval.

In **step 970,** the processor **210** can display the one or more sub-pixel resolution images **231** to a display **230** during the interval of the experiment. In addition, other data **232** can be displayed.

In **step 980,** the processor **210** determines whether the experiment is complete. In some cases, the processor **210** determines whether the experiment is complete by determining the current time is at the end of the duration of the experiment. In other cases, the user of the e-Petri system **600** may provide input that determines that the experiment is complete. For example, the user may enter a stop experiment command at the host computer **200.** If the experiment is not complete, the next interval of the experiment begins and the process goes to step **930.** If the experiment is complete, the process ends at step **990.**

## IV. Subsystems

**FIG. 17** is a block diagram of subsystems that may be present in the SPLM system **10** or in an e-Petri system **600,** according to embodiments of the invention. For example, the SPLM system **10** and the e-Petri system **600** include a processor **410.** The processor **410** may include first processor **112** and/or second processor **210.** The processor **410** may be a component of the light detector 160 in some cases. The processor **410** may be a component of the illumination source **100** in some cases.

The various components previously described in the Figures may operate using one or more of the subsystems to facilitate the functions described herein. Any of the components in the Figures may use any suitable number of subsystems to facilitate the functions described herein. Examples of such subsystems and/or components are shown in a **FIG. 17.** The subsystems shown in **FIG. 17** are interconnected via a system bus **425.** Additional subsystems such as a printer **430,** keyboard **432,** fixed disk **434** (or other memory comprising computer readable media), display **436,** which is coupled to display adapter **438,** and others are shown. The display **436** may include the illuminating display **116** and/or the image display **230.** Peripherals and input/output (I/O) devices, which couple to I/O controller **440,** can be connected to the computer system by any number of means known in the art, such as serial port **442.** For example, serial port **442** or external interface **444** can be used to connect the computer apparatus to a wide area network such as the Internet, a mouse input device, or a scanner. The interconnection via system bus allows the processor **410** to communicate with each subsystem and to control the execution of instructions from system memory **446** or the fixed disk **434,** as well as the exchange of information between subsystems. The system memory **446** and/or the fixed disk **434** may embody a first CRM **114** and/or a second CRM **220.** Any of these elements may be present in the previously described features.

In some embodiments, an output device such as the printer **430** or display **436** of the SPLM system **10** or the e-Petri system **600** can output various forms of data. For example, the SPLM system **10** or the e-Petri system **600** can output 2D/3D HR color/monochromatic images, data associated with these images, or other data associated with analyses performed by the SPLM system **10** or the e-Petri system **600.**

It should be understood that the present invention as described above can be implemented in the form of control logic using computer software in a modular or integrated manner. Based on the disclosure and teachings provided herein, a person of ordinary skill in the art will know and appreciate other ways and/or methods to implement the present invention using hardware and a combination of hardware and software.

Any of the software components or functions described in this application, may be implemented as software code to be executed by a processor using any suitable computer language such as, for example, Java, C++ or Perl using, for example, conventional or object-oriented techniques. The software code may be stored as a series of instructions, or commands on a CRM, such as a random access memory (RAM), a read only memory (ROM), a magnetic medium such as a hard-drive or a floppy disk, or an optical medium such as a CD-ROM. Any such CRM may reside on or within a single computational apparatus, and may be present on or within different computational apparatuses within a system or network.

A recitation of "a", "an" or "the" is intended to mean "one or more" unless specifically indicated to the contrary.

The above description is illustrative and is not restrictive. Many variations of the disclosure will become apparent to those skilled in the art upon review of the disclosure. The scope of the disclosure should, therefore, be determined not with reference to the above description, but instead should be determined with reference to the pending claims along with their full scope or equivalents.

One or more features from any embodiment may be combined with one or more features of any other embodiment without departing from the scope of the disclosure. Further, modifications, additions, or omissions may be made to any embodiment without departing from the scope of the disclosure. The components of any embodiment may be integrated or separated according to particular needs without departing from the scope of the disclosure.

All patents, patent applications, publications, and descriptions mentioned above are hereby incorporated by reference in their entirety for all purposes. None is admitted to be prior art.

**Claims**

1. An e-Petri dish comprising:

   a transparent layer having a specimen surface; and
   a light detector configured to sample a sequence of sub-pixel shifted projection images of a specimen located on the specimen surface, the sub-pixel shifted projection images associated with light from a plurality of illumination angles provided by an illumination source.

2. The e-Petri dish of claim 1, further comprising a processor configured to generate a sub-pixel resolution image of the specimen based on the sequence of sub-pixel shifted projection images.

3. The e-Petri dish of claim 1 or 2, further comprising a well coupled to the transparent layer, the well configured to receive the specimen.

4. An e-Petri device comprising:

   a transparent layer having a specimen surface;
   an illumination source configured to provide light from a plurality of illumination angles to a specimen located on the specimen surface; and
   a light detector configured to sample a sequence of sub-pixel shifted projection images of the specimen, wherein the sequence of sub-pixel shifted projection images corresponds to the plurality of illumination angles.

5. The e-Petri device of claim 4, further comprising a processor configured to generate a sub-pixel resolution image of the specimen based on the sequence of sub-pixel shifted projection images of the specimen.

6. The e-Petri device of claim 4, further comprising a processor configured to generate a sub-pixel resolution image of the specimen based on the sequence of sub-pixel shifted projection images of the specimen and a motion vector based on the sequence of sub-pixel shifted projection images.

7. The e-Petri device of claim 6, wherein the processor is further configured to determine the motion vector, wherein the motion vector is associated with a plane of interest and the sub-pixel resolution image is focused at the plane of interest.

8. The e-Petri device of any claim 4 to 7, wherein the illumination source comprises sets of light emitting components at different locations, the sets of light emitting components configured to sequentially illuminate to generate the light from the plurality of illumination angles.

9. The e-Petri device of claim 8, wherein the sets of light emitting components provide light of different light intensities at different locations.

10. The e-Petri device of claim 8 or 9,
    wherein the sets of light emitting components provide light of a plurality of wavelengths at different locations;

wherein the sequence of sub-pixel shifted projection images comprises a plurality subsequences of sub-pixel shifted projection images associated with the plurality of wavelengths; and

further comprising a processor configured to generate a plurality of sub-pixel resolution images associated with the plurality of wavelengths and configured to combine the plurality of sub-pixel resolution images associated with the plurality of wavelengths to generate a multi-color sub-pixel resolution image of the specimen.

11. An e-Petri system comprising:

    one or more e-Petri devices, each e-Petri device comprising

        a transparent layer having a specimen surface;
        an illumination source configured to provide light from a plurality of illumination angles to a specimen located on the specimen surface; and
        a light detector configured to sample a sequence of sub-pixel shifted projection images of the specimen, wherein the sequence of sub-pixel shifted projection images corresponds to the plurality of illumination angles; and

    a processor configured to generate a sub-pixel resolution image of the specimen based on the sequence of sub-pixel shifted projection images from at least one of the one or more e-Petri devices.

12. A method of automatedly generating a sub-pixel resolution image of a specimen using an e-Petri system at intervals during an experiment, the method comprising:

    introducing the specimen on a specimen surface of an e-Petri dish;
    during each interval, providing light from a plurality of illumination angles to the specimen;
    during each interval, using a light detector to capture a sequence of sub-pixel shifted projection images corresponding to the plurality of illumination angles; and
    during each interval, constructing a sub-pixel resolution image of the specimen based on the sequence of sub-pixel shifted projection images and a motion vector.

13. The method of claim 12, further comprising: during each interval, displaying the sub-pixel resolution image of the specimen.

14. The method of claim 12 or 13, wherein providing light from a plurality of illumination angles comprises sequentially illuminating different sets of light emitting components of an illuminating display.

15. The method of any claim 12 to 14, further comprising:
focusing the sub-pixel resolution image at a plane of interest by determining the motion vector based on the plane of interest.

10

100

Illumination Source

112

114

First
Processor

First CRM

110

116

z

x

Light
Element

117

Illuminating Display

119

118

d

z'

x'

152

150

140

162

165

160

164

Host Computer

210

Second
Processor

Second CRM

200

220

230

Image
Display

FIG. 1

FIG. 2

FIG. 3

FIG. 4(a)

FIG. 4(b)

15 positions in x-direction

15 positions in y-direction

(a)                              (b)

FIG. 5

(a)

(b)

Scanning frame number: 1

Reconstructed image from 225 frames

FIG. 6

FIG. 7

FIG. 8

**FIG. 9**

FIG. 10

**600**

FIG. 11

FIG. 12

FIG. 13

FIG. 14

(a)

(b)

FIG. 15

FIG. 16

425

External
Interface
444

Printer 430

Fixed Disk 434

Processor
410

Keyboard 432

System
Memory
446

Serial Port 442

I/O Controller
440

Display
Adaptor 438

Display
436

FIG. 17

Europäisches
Patentamt

European
Patent Office

Office européen
des brevets

## EUROPEAN SEARCH REPORT

Application Number

EP 21 18 2047

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WAHEB BISHARA: "Lensfree on-chip microscopy over a wide field-of-view using pixel super-resolution", OPT. EXPRESS, vol. 18, no. 11, 24 May 2010 (2010-05-24), pages 11181-11191, XP055066800, | 1,4,8-10 | INV. G02B6/42 G02B6/10 |
| A | * figure 1 * | 2,3,5-7, 11-15 | |
| A,D | X. CUI ET AL: "Lensless high-resolution on-chip optofluidic microscopes for Caenorhabditis elegans and cell imaging", PROCEEDINGS OF THE NATIONAL ACADEMY OF SCIENCES, vol. 105, no. 31, 5 August 2008 (2008-08-05), pages 10670-10675, XP055051173, ISSN: 0027-8424, DOI: 10.1073/pnas.0804612105 * abstract; figure 1 * | 1-15 | |
| A | SHI J ET AL: "SMALL-KERNEL SUPERRESOLUTION METHODS FOR MICROSCANNING IMAGING SYSTEMS", APPLIED OPTICS, OPTICAL SOCIETY OF AMERICA, WASHINGTON, DC, US, vol. 45, no. 6, 20 February 2006 (2006-02-20), pages 1203-1214, XP001239269, ISSN: 0003-6935, DOI: 10.1364/AO.45.001203 * abstract * | 1-15 | TECHNICAL FIELDS SEARCHED (IPC) G02B |

-/--

The present search report has been drawn up for all claims

| Place of search | Date of completion of the search | Examiner |
|---|---|---|
| Berlin | 11 November 2021 | Ciarrocca, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 21 18 2047

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEI LI ET AL: "On-chip integrated lensless microscopy module for optical monitoring of adherent growing mammalian cells", 2010 ANNUAL INTERNATIONAL CONFERENCE OF THE IEEE ENGINEERING IN MEDICINE AND BIOLOGY SOCIETY : (EMBC 2010) ; BUENOS AIRES, ARGENTINA, 31 AUGUST - 4 SEPTEMBER 2010, IEEE, PISCATAWAY, NJ, USA, 31 August 2010 (2010-08-31), pages 1012-1015, XP032109488, DOI: 10.1109/IEMBS.2010.5627771 ISBN: 978-1-4244-4123-5 | 1,3 | |
| A | * figure 1 * | 2,4-15 | |
| X,P | WO 2011/053631 A1 (ALENTIC MICROSCIENCE INC [CA]; FINE ALAN MARC [CA] ET AL.) 5 May 2011 (2011-05-05) * pages 20,26; figure 8 * | 1 | |
| X | US 2005/190286 A1 (KADUCHAK GREGORY [US] ET AL) 1 September 2005 (2005-09-01) | 1 | TECHNICAL FIELDS SEARCHED (IPC) |
| A | * paragraphs [0018] - [0021]; figure 3 * | 2-15 | |
| X | AYDOGAN OZCAN ET AL: "Ultra wide-field lens-free monitoring of cells on-chip", LAB ON A CHIP, vol. 8, no. 1, 1 January 2008 (2008-01-01) , page 98, XP055051174, ISSN: 1473-0197, DOI: 10.1039/B713695A | 1 | |
| A | * figure 1a * | 2-15 | |

The present search report has been drawn up for all claims

| Place of search | Date of completion of the search | Examiner |
|---|---|---|
| Berlin | 11 November 2021 | Ciarrocca, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**ANNEX TO THE EUROPEAN SEARCH REPORT
ON EUROPEAN PATENT APPLICATION NO.**                          EP 21 18 2047

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2021

| Patent document cited in search report | | Publication date | Patent family member(s) | | Publication date |
|---|---|---|---|---|---|
| WO 2011053631 | A1 | 05-05-2011 | CA | 2778725 A1 | 05-05-2011 |
| | | | CN | 102713720 A | 03-10-2012 |
| | | | CN | 105974571 A | 28-09-2016 |
| | | | EP | 2494400 A1 | 05-09-2012 |
| | | | JP | 2013509618 A | 14-03-2013 |
| | | | JP | 2015215624 A | 03-12-2015 |
| | | | JP | 2018028683 A | 22-02-2018 |
| | | | JP | 2020129141 A | 27-08-2020 |
| | | | US | 2011096157 A1 | 28-04-2011 |
| | | | US | 2015241679 A1 | 27-08-2015 |
| | | | US | 2017322402 A1 | 09-11-2017 |
| | | | US | 2019094509 A1 | 28-03-2019 |
| | | | US | 2019324239 A1 | 24-10-2019 |
| | | | US | 2020174238 A1 | 04-06-2020 |
| | | | US | 2021063713 A1 | 04-03-2021 |
| | | | WO | 2011053631 A1 | 05-05-2011 |
| US 2005190286 | A1 | 01-09-2005 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 28128711
- US 61406916
- US 61482531
- US 61448964
- US 06965111
- US 41110312
- US 069651

### Non-patent literature cited in the description

- **PSALTIS, D. et al.** Developing optofluidic technology through the fusion of microfluidics and optics. *Nature,* 2006, vol. 442, 381-386
- **CUI, X. et al.** Lensless high-resolution on-chip optofluidic microscopes for Caenorhabditis elegans and cell imaging. *Proceedings of the National Academy of Sciences,* 2008, vol. 105 (31), 10670
- **SEO, S. et al.** Lensfree holographic imaging for on-chip cytometry and diagnostics. *Lab on a Chip,* 2009, vol. 9 (6), 777-787
- **BRESLAUER, D. et al.** *Mobile phone based clinical microscopy for global health applications,* 2009
- **ZHENG, G. et al.** Sub-pixel resolving optofluidic microscope for on-chip cell imaging. *Lab on a Chip,* 2010, vol. 10 (22), 3125-3129
- **HENG, X. et al.** Optofluidic microscopy-method for implementing a high resolution optical microscope on a chip. *Lab Chip,* vol. 6, 1274-1276
- **CUI, XIQUAN et al.** Lensless high-resolution on-chip optofluidic microscopes for Caenorhabditis elegans and cell imaging,. *Proceedings of the National Academy of Science,* 2008, vol. 105, 10670
- **ZHENG, G. ; LEE, SA. ; YANG, S ; YANG, C.** Sub-pixel resolving optofluidic microscope for on-chip cell imaging. Lab Chip,. *Lab Chip,* 2010, vol. 10, 3125-3129
- **REPETTO, L. ; PIANO, E ; PONTIGGIA, C.** Lensless digital holographic microscope with light-emitting diode illumination,. *Opt. Lett.,* 2004, vol. 29, 1132-1134
- **MUDANYALI, O. et al.** Compact, light-weight and cost-effective microscope based on lensless incoherent holography for telemedicine applications. *Lab on a Chip,* 2010, vol. 10, 1417-1428
- **XU, W. ; JERICHO, M. ; MEINERTZHAGEN, I. ; KREUZER, H.** Digital in-line holography for biological applications. *Proc Natl Acad Sci USA,* 2001, vol. 98, 11301-11305
- **GARCIA-SUCERQUIA, J. et al.** Digital in-line holographic microscopy. *Appl. Opt.,* 2006, vol. 45, 836-850
- **MALEK M. ; ALLANO, D. ; COËTMELLEC, S. ; LEBRUN, D.** Digital in-line holography: Influence of the shadow density on particle field extraction. *Opt. Express,* 2004, vol. 12, 2270-2279
- **ISIKMAN, S.O. et al.** Lens-free optical tomographic microscope with a large imaging volume on a chip. *Proc Natl Acad Sci USA,* 2011, vol. 108, 7296-7301
- **LIU, G. ; SCOTT, P.** Phase retrieval and twin-image elimination for in-line Fresnel holograms. *J Opt Soc Am A,* 1987, vol. 4, 159-165
- **FIENUP, JR.** Reconstruction of an object from the modulus of its Fourier transform. *Opt Lett,* 1978, vol. 3, 27-29
- **KOREN, G. ; POLACK, F. ; JOYEUX, D.** Iterative algorithms for twin-image elimination in in-line holography using finite-support constraints. *J Opt Soc Am A,* 1993, vol. 10, 423-433
- **LAI, S. ; KING, B. ; NEIFELD, MA.** Wave front reconstruction by means of phase-shifting digital in-line holography,. *Opt Commun.,* 2000, vol. 173, 155-160
- **RODENBURG, J. ; HURST, A. ; CULLIS, A.** Transmission microscopy without lenses for objects of unlimited size,. *Ultramicroscopy,* 2007, vol. 107, 227-231
- **BIENER, G. et al.** Combined reflection and transmission microscope for telemedicine applications in field settings. *Lab Chip,* 2011, vol. 11, 2738-2743
- **DENIS, L. ; LORENZ, D. ; THIÉBAUT, E. ; FOURNIER, C. ; TREDE, D.** Inline hologram reconstruction with sparsity constraints. *Opt Lett,* 2009, vol. 34, 3475-3477
- **ZHANG, F. ; PEDRINI, G. ; OSTEN, W.** Phase retrieval of arbitrary complex-valued fields through aperture-plane modulation. *Phys Rev A,* 2007, vol. 75, 043805

- **XU, L. ; MIAO, J. ; ASUNDI, A.** Properties of digital holography based on in-line configuration,. *Opt Eng,* 2000, vol. 39, 3214-3219
- **MICÓ, V. ; GARCIA, J. ; ZALEVSKY, Z. ; JAVIDI, B.** Phase-Shifting Gabor Holographic Microscopy. *J Disp Technol,* 2010, vol. 6, 484-489
- **SCHROEDER, T.** Long-term single-cell imaging of mammalian stem cells,. *Nature Methods,* 2011, vol. 8, S30-S35
- **COHEN, A. R. ; GOMES, F. L. A. F. ; ROYSAM, B. ; CAYOUETTE, M.** *Computational prediction of neural progenitor cell fates,* 2010
- **EILKEN, H. M. ; NISHIKAWA, S. I. ; SCHROEDER, T.** Continuous single-cell imaging of blood generation from haemogenic endothelium. *Nature,* 2009, vol. 457, 896-900
- **COSTA, M. R. et al.** Continuous live imaging of adult neural stem cell division and lineage progression in vitro,. *Development,* 2011, vol. 138, 1057
- **DYKSTRA, B. et al.** *National Acad Sciences*
- **REPETTO, G. ; DEL PESO, A. ; ZURITA, J. L.** Neutral red uptake assay for the estimation of cell viability/cytotoxicity. *Nature Protocols,* 2008, vol. 3, 1125-1131
- **BORENFREUND, E. ; PUERNER, J. A.** Toxicity determined in vitro by morphological alterations and neutral red absorption. *Toxicology Letters,* 1985, vol. 24, 119-124
- **CAVANAUGH, P. F. et al.** A semi-automated neutral red based chemosensitivity assay for drug screening. *Investigational new drugs,* 1990, vol. 8, 347-354
- **LEVIN-REISMAN, I. et al.** Automated imaging with ScanLag reveals previously undetectable bacterial growth phenotypes. *Nat Meth,* 2010, vol. 7 (9), 737-739
- **LANGE, D. ; STORMENT, C. W. ; CONLEY, C. A. ; KOVACS, G. T. A.** A microfluidic shadow imaging system for the study of the nematode Caenorhabditis elegans in space. *Sensors and Actuators B Chemical,* 2005, vol. 107, 904-914
- **WEI, L. ; KNOLL, T. ; THIELECKE, H.** On-chip integrated lensless microscopy module for optical monitoring of adherent growing mammalian cells. *Engineering in Medicine and Biology Society (EMBC), 2010 Annual International Conference of the IEEE,* 2010, 1012-1015
- **MILANFAR, P.** Super-Resolution Imaging. CRC Press, 2010
- **HARDIE, R. ; BARNARD, K. ; ARMSTRONG, E.** Joint MAP registration and high-resolution image estimation using a sequence of undersampled images. *IEEE Transactions on Image Processing,* 1997, vol. 6, 1621-1633
- **MIAO, J. R. R. QIN, TOUROVSKAIA, ANNA, MEYER, MICHAEL G. ; NEUMANN, THOMAS, NELSON, ALAN C. ; SEIBEL, ERIC J.** Dual-modal three-dimensional imaging of single cells with isometric high resolution using an optical projection tomography microscope,. *J. Biomed., Opt.,* 21 December 2009, vol. 14, 064034
- **RICHARD, L.M. ; SHULTZ, R. ; STEVENSON ; ROBERT L.** Subpixel motion estimation for super-resolution image sequence enhancement. *Journal of Visual Communication and Image Representation,* 1998
- **PARK, SUNG CHEOL, PARK ; MIN KYU, KANG, MOON GI.** Super-resolution image reconstruction: a technical overview. *IEEE Signal Processing Magazine,* May 2003, 21-36
- **RUSSELL, K. J. B. ; HARDIE, C. ; BOGNAR, JOHN G., ARMSTRONG ; ERNEST E. ; WATSON, EDWARD A.** High resolution image reconstruction from a sequence of rotated and translated frames and its application to an infrared imaging system,. *Optical Engineering,* 1997
- **HARDIE, ELAD, M. ; HEL-OR, Y.** A fast super-resolution reconstruction algorithm for pure translational motion and common space-invariant blur. *IEEE Transactions on Image Processing,* 2001, vol. 10, 1187-1193
- **FARSIU, SINA et al.** Fast and robust multiframe super resolution. *IEEE Trans Image Process,* 2004, vol. 13, 1327-1344
- **FARSIU S et al.** Multiframe demosaicing and super-resolution of color images. *IEEE Trans Image Process,* 2006, vol. 15, 141-159
- **FARSIU, SINA et al.** Advances and challenges in super-resolution. Wiley Periodicals, 2004
- **MILANFAR, P.** Super-Resolution Imaging,. CRC Press, 2010
- **HARDIE, R. ; BARNARD, K. ; ARMSTRONG, E.** Joint MAP registration and high-resolution image estimation using asequence of undersampled images. *IEEE Transactions on Image Processing,* 1997, vol. 6, 1621-1633
- **ELAD, M. ; HEL-OR, Y.** A fast super-resolution reconstruction algorithm for pure translational motion and common space-invariant blur. *IEEE Transactions on Image Processing,* 2001, vol. 10, 1187-1193
- **FARSIU, S. ; ROBINSON, M. ; ELAD, M. ; MILANFAR, P.** Fast and robust multiframe super resolution. *IEEE Transactions on Image Processing,* 2004, vol. 13, 1327-1344
- **FARSIU, S. ; ROBINSON, D. ; ELAD, M. ; MILANFAR, P.** Advances and challenges in super resolution,. *International Journal of Imaging Systems and Technology,* 2004, vol. 14, 47-57

- **FARSIU, S. ; ELAD, M. ; MILANFAR, P.** Multiframe demosaicing and super-resolution of color images. *IEEE Transactions on Image Processing,* 2006, vol. 15, 141-159
- **HENG, X. et al.** Characterization of light collection through subwavelength aperture from a point source. *Optics express,* 2006, vol. 14, 10410-10425
- **WANG, Y. M. ; ZHENG, G. ; YANG, C.** Characterization of acceptance angles of small circular apertures,. *Optics Express,* 2009, vol. 17, 23903-23913
- **MEDORO, G. et al.** A lab-on-a-chip for cell detection and illumination. *Optics letters,* 2010, vol. 35, 2188-2190
- **CRANE, M. ; CHUNG, K. ; STIRMAN, J. ; LU, H.** Microfluidics-enabled phenotyping, imaging, and screening of multicellular organisms. *Lab on a Chip,* 2010, vol. 10, 1509-1517
- **HOU, H. et al.** Deformability based cell margination-A simple microfluidic design for malaria infected erythrocyte separation. *Lab on a Chip,* 2010, vol. 10, 2605-2613